# EUROPEAN PATENT APPLICATION

(11) **EP 4 653 395 A1**
(43) Date of publication of application: **26.11.2025**
(21) Application number: 25157190.7
(22) Date of filing: 11.02.2025
(51) Int. Cl.: C01G 53/50, C01G 53/502, C01G 53/504, C01G 53/506, H01M 4/505, H01M 4/525

(54) **POSITIVE ACTIVE MATERIAL FOR SECONDARY BATTERY AND METHOD THEREOF**

(30) Priority: 24.05.2024 KR 20240067794; 07.02.2025 KR 20250015773
(71) Applicant: Battery Solution, Seoul 04763 (KR)
(72) Inventor: PARK, Jang Uk, 21404 Incheon (KR); CHOI, Kyoung Ran, 54074 Gunsan-si, Jeonbuk-do (KR)
(74) Representative: Prüfer & Partner mbB Patentanwälte · Rechtsanwälte

(57) **Abstract**

The present invention includes a positive electrode active material for a secondary battery, comprising a composite metal hydroxide precursor represented by Chemical Formula (1) below: wherein the precursor includes a secondary particle composed of a plurality of primary particles; wherein each primary particle is formed as a bundle of micro primary particles; wherein, when observed via a transmission electron microscope, the major axis direction of the micro primary particles coincides with the major axis direction of the primary particles; and wherein each micro primary particle has a thickness of about 1 nm to about 50 nm.

[Chemical Formula 1] (NiₓCo_{y}Mn_{1-x-y})(OH)₂ (0.40≤x≤0.96, 0≤y≤0.15)

## Description

### CROSS-REFERENCE TO RELATED APPLICATIONS

This application claims priority to and the benefit of Korean Patent Application No. 10-2024-0067794 and Korean Patent Application No. 10-2025-0015773 filed in the Korean Intellectual Property Office on May 24, 2024 and February 7, 2025, the entire contents of which are incorporated herein by reference.

### TECHNICAL FIELD

The present invention relates to a positive electrode active material for secondary batteries composed of oriented particles with improved electrochemical properties and lifespan characteristics, a method for producing a [NiₓCo_{y}Mn_{1-x-y}](OH)₂ hydroxide precursor thereof, and a secondary battery including the same.

### BACKGROUND ART

With the advancement of portable mobile electronic devices such as smartphones, MP3 players, and tablet PCs, the demand for secondary batteries capable of storing electrical energy has increased explosively. In particular, the emergence of electric vehicles, mid-to-large-scale energy storage systems, and portable devices requiring high energy density has led to an increased demand for lithium secondary batteries.

However, lithium secondary batteries pose safety concerns due to the high reactivity of lithium, and lithium is a costly element, prompting extensive research to address these issues.

Among these, the term 'orientation' in battery positive active material precursors refers to the alignment or specific directional arrangement of individual particles. That is, rather than being randomly dispersed, the crystal structure or surface structure is arranged in a certain orientation.

When the positive active material precursor exhibits orientation, its crystallographic properties are enhanced. This improvement reduces crystal defects and microcracks while minimizing unnecessary lattice deformation, leading to improved electrochemical properties. Furthermore, optimizing ion diffusion pathways by efficiently arranging the primary crystal planes through which lithium ions (Li) move (insertion/extraction) enhances ion diffusion rates and reaction speeds, thus improving charge/discharge performance and lifespan.

Additionally, when the conductive pathways for electron and ion conduction are aligned in favorable directions (such as high-speed diffusion pathways) within the crystal structure, internal resistance in the electrode decreases, thereby enhancing output characteristics.

Consequently, the positive active material precursor composed of oriented particles refers to a precursor produced with its individual crystal directions or specific planes uniformly aligned, contributing to the realization of high-output, high-energy, and long-lifespan characteristics in lithium secondary batteries, thus driving growing demand for such materials.

### SUMMARY OF THE INVENTION

The present invention aims to solve the above-mentioned issues, with the following specific objectives: To improve the crystal structure and orientation of particles constituting a secondary battery through a novel manufacturing method, thereby enhancing the electrochemical properties and lifespan of the secondary battery. To provide a positive active material for a secondary battery, a method for manufacturing the same, and a secondary battery comprising the same, with improved ion mobility and suppressed side reactions with electrolytes, resulting in enhanced electrochemical properties.

The present invention achieves the above objectives through the following embodiments.

In one embodiment, a positive electrode active material for a secondary battery, comprising a composite metal hydroxide precursor represented by Chemical Formula (1) below:
wherein the precursor includes a secondary particle composed of a plurality of primary particles;
wherein each primary particle is formed as a bundle of micro primary particles;
wherein, when observed via a transmission electron microscope, the major axis direction of the micro primary particles coincides with the major axis direction of the primary particles; and
wherein each micro primary particle has a thickness of about 1 nm to about 50 nm.

   [Chemical Formula 1] (NiₓCo_{y}Mn_{1-x-y})(OH)₂ (0.40≤x≤0.96, 0≤y≤0.15)

In one embodiment, the primary particles have an average thickness of 0.4 µm or less.

In one embodiment, the primary particles, when observed through transmission electron microscopy, exhibit an average cross-sectional area calculated as the square root of the cross-sectional measurement, with an average size of 0.5 µm or less.

In one embodiment, the aspect ratio of the primary particles, calculated as the length divided by the thickness, ranges from 5 to 100.

In one embodiment, when the extended center point of the primary particles is defined as the midpoint between one end and the opposite end of the primary particle, the absolute mean value of the acute angle between the major axis extension line passing through the center and the reference angle line connecting the center point of the extension line and the secondary particle center is 20° or less.

In one embodiment, the orientation distance, defined as the mean distance between the major axis extension line of the primary particles and the parallel center reference line passing through the secondary particle center, is 2 µm or less.

In one embodiment, the precursor comprising oriented primary particles exhibits an XRD diffraction intensity of the (101) plane greater than that of the (100) plane.

In one embodiment, the primary particles include rod-shaped (rod-shape) oriented particles with major and minor axes. The oriented particles include a-axis and c-axis structures, where the length in the a-axis direction is greater than in the c-axis direction. The c-axis corresponds to the [001] direction in the SAED pattern observed through transmission electron microscopy, and the a-axis is perpendicular to the c-axis, aligned parallel to the major axis of the oriented particles.

In one embodiment, the primary particles are categorized into first primary particles located on the surface of the secondary particles and second primary particles located at the center of the secondary particles, with the a-axis length of the first primary particles being greater than that of the second primary particles. In one embodiment, the secondary particles have an average diameter of 2 µm to 20 µm.

In an embodiment, nickel (Ni)-containing nickel compounds, cobalt (Co)-containing cobalt compounds, and manganese (Mn)-containing manganese compounds are prepared and mixed in a molar ratio of x:y:(1-x-y), followed by coprecipitation synthesis including a first dopant, wherein:
The first dopant is at least one of Sb, Mo, W, Nb, Te, Ta, Zr, Ti, Sn, Y, In, Sr, Ba, Mg, Ca, B, V, Cr, Al, Fe. The first dopant has an average concentration of 0.01 mol% to 5 mol% relative to the total metal content including Ni, Co, and Mn.

In one embodiment, the co-precipitation process comprises: (a) introducing at least two or more types of a first dopant simultaneously to perform co-precipitation, thereby uniformly impregnating the precursor from the core to the surface (wet co-doping); or
(b) during precursor synthesis, preventing the first dopant from being doped into the interior of the particle while impregnating the first dopant only within a region up to 2 µm from the surface shell (wet shell doping); or
(c) immediately after precursor formation, forming a coating layer of the first dopant only on the surface (hetero-element coating co-precipitation),
wherein the positive electrode active material for the secondary battery is manufactured using any one of the above methods.

In one embodiment of the present invention, the coprecipitation reaction includes a seed coprecipitation reaction, wherein the seed coprecipitation reaction involves using one or more seed precursors selected from composite metal hydroxide fine particles, metal oxides, or metal sulfides, with an average diameter of 0.5 to 3.5 µm. This process induces an additional coprecipitation reaction on the surface of the seed precursor, leading to the growth of secondary particle size and the formation of oriented particles.

In another embodiment of the present invention, a nickel compound containing nickel (Ni), a cobalt compound containing cobalt, and a manganese compound containing manganese are prepared and mixed so that the molar ratio of nickel, cobalt, and manganese is x:y:(1-x-y). Coprecipitation is then carried out in the presence of a first dopant. The process includes a solid-liquid synthesis reaction in which the residual solution inside the coprecipitation reactor is removed to the outside of the reactor. Furthermore, at a precursor concentration of 0.3 kg/L solution or higher, oriented particles composed of fine primary particles are formed.

In one embodiment, the precursor exhibits a concentration gradient of at least one of Ni, Co, Mn, Al, and dopants in at least a portion of the composite metal hydroxide precursor.

The present invention achieves the following effects: The orientation of primary particles is enhanced, improving the reversibility of ion insertion/extraction in the positive active material for secondary batteries.

The positive active material is formed as a collection of primary particles into secondary particles, enhancing structural stability and providing an advanced positive active material, its manufacturing method, and a secondary battery comprising the same.

By optimizing the precursor structure, the invention allows for improved high-energy density, high-power performance, and prolonged cycle life for secondary batteries.

### BRIEF DESCRIPTION OF THE DRAWINGS

Fig. 1 illustrates the surface and internal orientation of a composite metal hydroxide precursor according to one embodiment of the present invention.
Fig. 2 shows that the surface of the composite metal hydroxide precursor in one embodiment of the present invention is composed of oriented particles, which are bundles of fine primary particles.
Fig. 3 depicts the aggregation of fine primary particles forming oriented particles in the composite metal hydroxide precursor and illustrates the interfacial boundaries between the fine primary particles.
Fig. 4 schematically represents the primary particles located on the surface and core regions of the composite metal hydroxide precursor.
Fig. 5 provides SEM and TEM images of the composite metal hydroxide precursor in Comparative Example 1.
Fig. 6 presents a graph showing the microstructure measurement results of Comparative Example 1.
Fig. 7 illustrates the data derived from the microstructure measurement results in Fig. 6, including bundle formation of fine primary particles, thickness, length, aspect ratio, size, angle, and orientation distance of primary particles.
Fig. 8 shows the XRD analysis results of Comparative Example 1.
Fig. 9 is an SEM image of a composite metal hydroxide precursor [Ni_{0.96}Co_{0.02}Mn_{0.02}](OH)₂, which is wet-doped with tungsten (W) according to the first embodiment of the present invention.
Fig. 10 is a TEM image of the same tungsten (W) [Ni_{0.96}Co_{0.02}Mn_{0.02}](OH)₂ wet-doped composite metal hydroxide precursor in Fig. 9.
Fig. 11 compares the electron diffraction patterns obtained by FFT for Region I and Region II of fine primary particles and Region III, which consists of oriented particles formed by bundles of fine primary particles in the tungsten (W) wet-doped composite metal hydroxide precursor.
Fig. 12 presents a graph showing the microstructure measurement results of the tungsten (W) [Ni_{0.96}Co_{0.02}Mn_{0.02}](OH)₂ wet-doped composite metal hydroxide precursor according to the first embodiment of the present invention.
Fig. 13 illustrates data based on the microstructure measurement results from Fig. 12, including bundle formation of fine primary particles, thickness, length, aspect ratio, size, angle, and orientation distance of primary particles.
Fig. 14 shows the XRD analysis results of the tungsten (W) wet-doped composite metal hydroxide precursor [Ni_{0.96}Co_{0.02}Mn_{0.02}](OH)₂ in the first embodiment of the present invention.
Fig. 15 presents SEM images of cathode materials synthesized using composite metal hydroxide precursors from Comparative Example 2 and the first embodiment of the present invention, tungsten (W) wet-doped [Ni_{0.96}Co_{0.02}Mn_{0.02}](OH)₂.
Fig. 16 illustrates the XRD analysis results of cathode materials synthesized using the composite metal hydroxide precursors from Comparative Example 2 and the first embodiment of the present invention.
Fig. 17 is an SEM image of the composite metal hydroxide precursor wet-doped with antimony (Sb) [Ni_{0.94}Co_{0.04}Mn_{0.02}](OH)₂ according to the second embodiment of the present invention.
Fig. 18 is a TEM image of the composite metal hydroxide precursor from the second embodiment of the present invention.
Fig. 19 is a TEM image showing that oriented particles are observed even in the extreme surface and shell regions of the secondary particles in the composite metal hydroxide precursor according to the second embodiment of the present invention.
Fig. 20 is a graph showing the microstructure measurement results of the antimony (Sb) wet-doped [Ni_{0.94}Co_{0.04}Mn_{0.02}](OH)₂ composite metal hydroxide precursor according to the second embodiment of the present invention.
Fig. 21 presents data derived from the microstructure measurement results of the second embodiment, including bundle formation of fine primary particles, thickness, length, aspect ratio, size, angle, and orientation distance of primary particles.
Fig. 22 is an SEM image of the cathode material synthesized from the antimony (Sb) wet-doped [Ni_{0.94}Co_{0.04}Mn_{0.02}](OH)₂ composite metal hydroxide precursor according to the second embodiment of the present invention.
Fig. 23 is an SEM image of the antimony (Sb) and titanium (Ti) wet-doped [Ni_{0.94}Co_{0.04}Mn_{0.02}](OH)₂ composite metal hydroxide precursor according to the third embodiment of the present invention.
Fig. 24 is a TEM image of the composite metal hydroxide precursor according to the third embodiment of the present invention.
Fig. 25 is a TEM image showing that oriented particles are observed even in the interior of the secondary particles in the composite metal hydroxide precursor according to the third embodiment of the present invention.
Fig. 26 is a graph showing the microstructure measurement results of the antimony (Sb) and titanium (Ti) wet-doped [Ni_{0.94}Co_{0.04}Mn_{0.02}](OH)₂ composite metal hydroxide precursor according to the third embodiment of the present invention.
Fig. 27 presents data derived from the microstructure measurement results of the third embodiment, including bundle formation of fine primary particles, thickness, length, aspect ratio, size, angle, and orientation distance of primary particles.
Fig. 28 is a graph showing the XRD analysis results of the composite metal hydroxide precursor according to the third embodiment of the present invention.
Fig. 29 is an SEM image of the cathode material synthesized from the antimony (Sb) and titanium (Ti) wet-doped [Ni_{0.94}Co_{0.04}Mn_{0.02}](OH)₂ composite metal hydroxide precursor according to the third embodiment of the present invention.
Fig. 30 shows (a) an SEM image of the molybdenum (Mo) wet-doped [Ni_{0.90}Co_{0.05}Mn_{0.05}](OH)₂ composite metal hydroxide precursor according to the fourth embodiment of the present invention, (b) an SEM image of the molybdenum (Mo) wet-doped [Ni_{0.90}Co_{0.05}Mn_{0.05}](OH)₂ fine-particle precursor, (c) a TEM image of the molybdenum (Mo) wet-doped [Ni_{0.90}Co_{0.05}Mn_{0.05}](OH)₂ composite metal hydroxide precursor, and (d) an image of the cathode material synthesized from the molybdenum (Mo) wet-doped [Ni_{0.90}Co_{0.05}Mn_{0.05}](OH)₂ composite metal hydroxide precursor.
Fig. 31 shows (a) the microstructure measurement results of the molybdenum (Mo) wet-doped [Ni_{0.90}Co_{0.05}Mn_{0.05}](OH)₂ composite metal hydroxide precursor according to the fourth embodiment of the present invention and (b) the microstructure measurement results of the molybdenum (Mo) wet-doped [Ni_{0.90}Co_{0.05}Mn_{0.05}](OH)₂ fine-particle precursor.
Fig. 32 shows (a) data on bundle formation of fine primary particles, thickness, length, aspect ratio, size, angle, and orientation distance of primary particles, based on the microstructure measurement results of the molybdenum (Mo) wet-doped [Ni_{0.90}Co_{0.05}Mn_{0.05}](OH)₂ composite metal hydroxide precursor according to the fourth embodiment of the present invention, and (b) the corresponding data for the molybdenum (Mo) wet-doped [Ni_{0.90}Co_{0.05}Mn_{0.05}](OH)₂ fine-particle precursor.
Fig. 33 is an SEM image of the tungsten (W) shell-surface wet-doped [Ni_{0.90}Co_{0.05}Mn_{0.05}](OH)₂ composite metal hydroxide precursor according to the fifth embodiment of the present invention.
Fig. 34 is a TEM image of the composite metal hydroxide precursor according to the fifth embodiment of the present invention.
Fig. 35 is a graph showing the microstructure measurement results of the fifth embodiment of the present invention.
Fig. 36 presents data derived from the microstructure measurement results of the fifth embodiment, including bundle formation of fine primary particles, thickness, length, aspect ratio, size, angle, and orientation distance of primary particles.
Fig. 37 is an SEM image of the cathode material synthesized from the composite metal hydroxide precursor according to the fifth embodiment of the present invention.
Fig. 38 is an SEM image of the composite metal hydroxide precursor using an aluminum (Al) seed in [Ni_{0.90}Co_{0.05}Mn_{0.05}](OH)₂ according to the sixth embodiment of the present invention.
Fig. 39 is a TEM image of the composite metal hydroxide precursor according to the sixth embodiment of the present invention.
Fig. 40 is a graph showing the microstructure measurement results of the sixth embodiment of the present invention.
Fig. 41 presents data derived from the microstructure measurement results of the sixth embodiment, including bundle formation of fine primary particles, thickness, length, aspect ratio, size, angle, and orientation distance of primary particles.
Fig. 42 is an SEM image of the cathode material synthesized from the composite metal hydroxide precursor according to the sixth embodiment of the present invention.
Fig. 43 is an SEM image of the composite metal hydroxide precursor [Ni_{0.90}Co_{0.10}](OH)₂ in Comparative Example 6.
Fig. 44 is a TEM image of the composite metal hydroxide precursor [Ni_{0.90}Co_{0.10}](OH)₂ in Comparative Example 6.
Fig. 45 is a graph showing the microstructure measurement results of Comparative Example 6.
Fig. 46 presents data derived from the microstructure measurement results of Comparative Example 6, including bundle formation of fine primary particles, thickness, length, aspect ratio, size, angle, and orientation distance of primary particles.
Fig. 47 is a graph showing the XRD analysis results of Comparative Example 6.
Fig. 48 is an SEM image of the boron (B) wet-doped composite metal hydroxide precursor [Ni_{0.90}Co_{0.10}](OH)₂ according to the seventh embodiment of the present invention.
Fig. 49 is a TEM image of the composite metal hydroxide precursor according to the seventh embodiment of the present invention.
Fig. 50 is a graph showing the microstructure measurement results of the seventh embodiment of the present invention.
Fig. 51 presents data derived from the microstructure measurement results of the seventh embodiment, including bundle formation of fine primary particles, thickness, length, aspect ratio, size, angle, and orientation distance of primary particles.
Fig. 52 is an SEM image of the cathode material synthesized from the composite metal hydroxide precursor in Comparative Example 7 and the seventh embodiment of the present invention.
Fig. 53 is an SEM image of the niobium (Nb) wet-doped composite metal hydroxide precursor [Ni_{0.90}Co_{0.10}](OH)₂ according to the eighth embodiment of the present invention.
Fig. 54 is a TEM image of the composite metal hydroxide precursor according to the eighth embodiment of the present invention.
Fig. 55 is a graph showing the microstructure measurement results of the eighth embodiment of the present invention.
Fig. 56 presents data derived from the microstructure measurement results of the eighth embodiment, including bundle formation of fine primary particles, thickness, length, aspect ratio, size, angle, and orientation distance of primary particles.
Fig. 57 is an SEM image of the cathode material synthesized from the composite metal hydroxide precursor according to the eighth embodiment of the present invention.
Fig. 58 is an SEM image of the composite metal hydroxide precursor [Ni_{0.90}Co_{0.10}](OH)₂in Comparative Example 9.
Fig. 59 is a TEM image of the composite metal hydroxide precursor [Ni_{0.90}Co_{0.10}](OH)₂ in Comparative Example 9.
Fig. 60 is a graph showing the microstructure measurement results of Comparative Example 9.
Fig. 61 presents data derived from the microstructure measurement results of Comparative Example 9, including bundle formation of fine primary particles, thickness, length, aspect ratio, size, angle, and orientation distance of primary particles.
Fig. 62 is a graph showing the XRD analysis results of Comparative Example 9.
Fig. 63 is an SEM image of the composite metal hydroxide precursor [Ni_{0.90}Co_{0.10}](OH)₂ synthesized through a solid-liquid coprecipitation reaction according to the ninth embodiment of the present invention.
Fig. 64 is a TEM image of the composite metal hydroxide precursor according to the ninth embodiment of the present invention.
Fig. 65 is another TEM image of the composite metal hydroxide precursor according to the ninth embodiment of the present invention.
Fig. 66 is a graph showing the microstructure measurement results of the ninth embodiment of the present invention.
Fig. 67 presents data derived from the microstructure measurement results of the ninth embodiment, including bundle formation of fine primary particles, thickness, length, aspect ratio, size, angle, and orientation distance of primary particles.
Fig. 68 is a graph showing the XRD analysis results of the ninth embodiment of the present invention.
Fig. 69 is an SEM image of the cathode material synthesized from the composite metal hydroxide precursor in Comparative Example 10 and the ninth embodiment of the present invention.
Fig. 70 is an SEM image of the concentration-gradient composite metal hydroxide precursor [Ni_{0.90}Co_{0.10}](OH)₂ according to the tenth embodiment of the present invention.
Fig. 71 is a TEM image of the composite metal hydroxide precursor according to the tenth embodiment of the present invention.
Fig. 72 is a graph showing the microstructure measurement results of the tenth embodiment of the present invention.
Fig. 73 presents data derived from the microstructure measurement results of the tenth embodiment, including bundle formation of fine primary particles, thickness, length, aspect ratio, size, angle, and orientation distance of primary particles.
Fig. 74 is an SEM image of the cathode material synthesized from the composite metal hydroxide precursor according to the tenth embodiment of the present invention.
Fig. 75 presents SEM and TEM images of the composite metal hydroxide precursor [Ni_{0.70}Co_{0.10}Mn_{0.20}](OH)₂ in Comparative Example 12.
Fig. 76 is a graph showing the microstructure measurement results of Comparative Example 12.
Fig. 77 presents data derived from the microstructure measurement results of Comparative Example 12, including bundle formation of fine primary particles, thickness, length, aspect ratio, size, angle, and orientation distance of primary particles.
Fig. 78 is a graph showing the XRD analysis results of Comparative Example 12.
Fig. 79 is an SEM image of the tungsten (W) wet-doped composite metal hydroxide precursor [Ni_{0.70}Co_{0.10}Mn_{0.20}](OH)₂ according to the eleventh embodiment of the present invention.
Fig. 80 is a TEM image of the composite metal hydroxide precursor according to the eleventh embodiment of the present invention.
Fig. 81 is a graph showing the microstructure measurement results of the eleventh embodiment of the present invention.
Fig. 82 presents data derived from the microstructure measurement results of the eleventh embodiment, including bundle formation of fine primary particles, thickness, length, aspect ratio, size, angle, and orientation distance of primary particles.
Fig. 83 is a graph showing the XRD analysis results of the eleventh embodiment of the present invention.
Fig. 84 is an SEM image of the cathode material synthesized from the composite metal hydroxide precursor in Comparative Example 13 and the eleventh embodiment of the present invention.
Fig. 85 is a graph showing the XRD analysis results of the cathode material synthesized from the composite metal hydroxide precursor in Comparative Example 13 and the eleventh embodiment of the present invention.
Fig. 86 presents SEM and TEM images of the composite metal hydroxide precursor [Ni_{0.46}Co_{0.08}Mn_{0.46}](OH)₂ in Comparative Example 14.
Fig. 87 is a graph showing the microstructure measurement results of Comparative Example 14.
Fig. 88 presents data derived from the microstructure measurement results of Comparative Example 14, including bundle formation of fine primary particles, thickness, length, aspect ratio, size, angle, and orientation distance of primary particles.
Fig. 89 is a graph showing the XRD analysis results of Comparative Example 14.
Fig. 90 is an SEM image of the composite metal hydroxide precursor [Ni_{0.46}Co_{0.08}Mn_{0.46}](OH)₂ synthesized through a solid-liquid coprecipitation reaction according to the twelfth embodiment of the present invention.
Fig. 91 is a TEM image of the composite metal hydroxide precursor according to the twelfth embodiment of the present invention.
Fig. 92 is a graph showing the microstructure measurement results of the twelfth embodiment of the present invention.
Fig. 93 presents data derived from the microstructure measurement results of the twelfth embodiment, including bundle formation of fine primary particles, thickness, length, aspect ratio, size, angle, and orientation distance of primary particles.
Fig. 94 is a graph illustrating the XRD analysis results according to the twelfth embodiment of the present invention.
Fig. 95 is an SEM image of the cathode material synthesized from the composite metal hydroxide precursor in Comparative Example 15 and the twelfth embodiment of the present invention.
Fig. 96 is an SEM image of the composite metal hydroxide precursor [Ni_{0.51}Mn_{0.49}](OH)₂ synthesized through a solid-liquid coprecipitation reaction according to the thirteenth embodiment of the present invention.
Fig. 97 is a TEM image of the composite metal hydroxide precursor according to the thirteenth embodiment of the present invention.
Fig. 98 is a graph showing the microstructure measurement results of the thirteenth embodiment of the present invention.
Fig. 99 presents data derived from the microstructure measurement results of the thirteenth embodiment, including bundle formation of fine primary particles, thickness, length, aspect ratio, size, angle, and orientation distance of primary particles.
Fig. 100 is an SEM image of the cathode material synthesized from the composite metal hydroxide precursor in Comparative Example 16 and the thirteenth embodiment of the present invention.

### DETAILED DESCRIPTION

Hereinafter, preferred embodiments of the present invention will be described in detail with reference to the accompanying drawings. However, the technical concept of the present invention is not limited to the embodiments described herein and may be embodied in other forms. Rather, the embodiments introduced here are provided to ensure a thorough and complete disclosure and to fully convey the spirit of the invention to those skilled in the art.

In this specification, when an element is stated to be "on" another element, it may be directly formed on the other element, or there may be a third element interposed between them. Additionally, in the drawings, the thickness of films and regions is exaggerated for the effective explanation of the technical content.

Furthermore, in various embodiments of this specification, terms such as first, second, third, etc., are used to describe various elements, but these elements should not be limited by such terms. These terms are only used to distinguish one element from another. Therefore, an element referred to as a "first element" in one embodiment may be referred to as a "second element" in another embodiment. Each embodiment described and illustrated herein also includes its complementary embodiments. Moreover, the term "and/or" is used to mean that at least one of the listed elements is included.

The singular form used in this specification includes the plural form unless the context clearly indicates otherwise. Also, terms such as "include" or "have" are intended to indicate the presence of features, numbers, steps, elements, or combinations thereof described in the specification and should not be interpreted as excluding the possibility of the presence or addition of one or more other features, numbers, steps, elements, or combinations thereof.

Additionally, when describing the present invention, detailed descriptions of well-known functions or configurations will be omitted if they are deemed to unnecessarily obscure the gist of the invention.

In the present invention, the term "bundle" has the same meaning as "aggregation" and is used interchangeably.

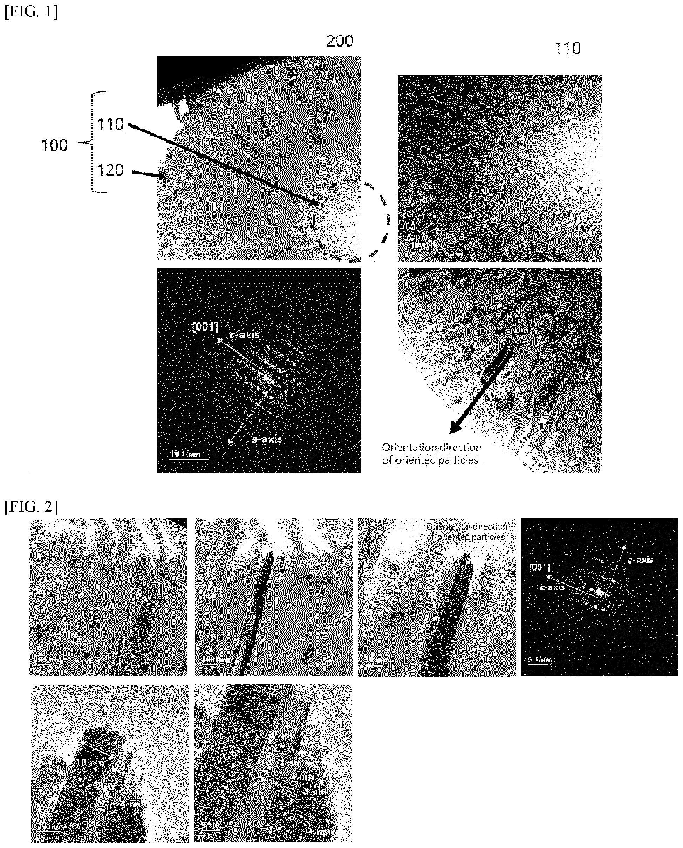

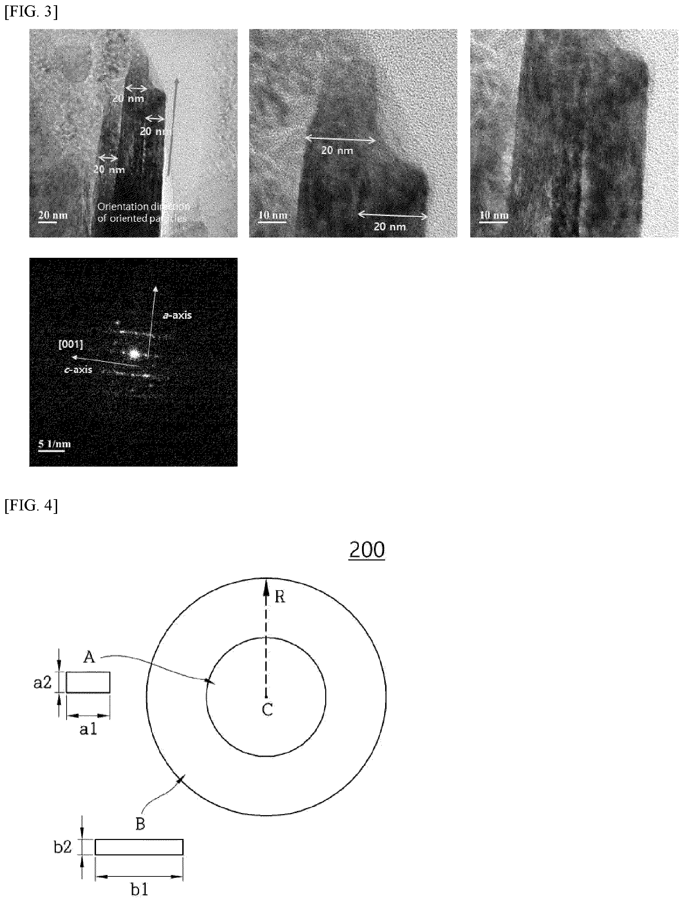

Fig. 1 is a schematic diagram showing the surface and internal orientation of the composite metal hydroxide precursor according to an embodiment of the present invention. Fig. 2 illustrates that the surface of the composite metal hydroxide precursor in one embodiment of the present invention is composed of oriented particles, and these oriented particles consist of fine primary particle bundles or aggregates. Fig. 3 depicts how the bundles of fine primary particles form the oriented particles in the composite metal hydroxide precursor and shows the interfacial boundaries between the fine primary particles. Fig. 4 schematically represents the primary particles located on the surface and core regions of the composite metal hydroxide precursor.

Referring first to Figs. 1 to 4, it can be observed that both the surface and the core of the composite metal hydroxide precursor consist of oriented particles.

As shown in the figures, the composite metal hydroxide precursor includes secondary particles (200) composed of clusters of multiple primary particles (100). The secondary particle (200) may include a central region (A) and a surface region (B). The primary particles (100) can include primary particles (110) located in the central region (A) of the secondary particle (200) and primary particles (120) located in the surface region (B) of the secondary particle (200). The primary particles (110) are arranged in the center of the secondary particle (200), while the primary particles (120) surround the primary particles (110) and are positioned at the surface region (B) of the secondary particle (200).

The primary particles (110) have an average major axis length a1 and an average minor axis length a2, perpendicular to a1, where a1 is equal to or greater than a2 (al ≥ a2). Similarly, the primary particles (120) have an average major axis length b1 and an average minor axis length b2, perpendicular to b1, where b1 is greater than b2 (b1 > b2).

The primary particles (120) may have a rod shape, where the cross-section consists of the major axis b1 and the perpendicular minor axis b2. At least some of the primary particles (120) may be radially aligned, meaning that their orientation follows direction R, extending from the center (C) of the secondary particle (200) to its outermost surface.

For example, the primary particles (120) are arranged such that their major axis is aligned parallel to the radial direction, which facilitates ion diffusion from the surface to the interior of the secondary particle (200). Additionally, the primary particles (120) can be aligned parallel to the direction of ion movement. By aligning the orientation of the primary particles (120) with the direction of ion movement, the volumetric expansion and contraction of the secondary particles (200) during the charge-discharge cycles of a secondary battery can be mitigated, thereby reducing cracks between the primary particles (100) caused by volumetric changes and improving the battery's cycle life.

For instance, in the secondary particle (200), the direction (R) extending from the center (C) to the surface is parallel to the a-axis direction of the primary particles (100), while the c-axis direction of the primary particles (100) is perpendicular to the a-axis direction.

Thus, in the embodiment of the present invention, the primary particles include oriented particles in a rod-shaped (rod-shape) form with major and minor axes. These oriented particles possess an a-axis and a c-axis, where the length along the a-axis is greater than that along the c-axis. The c-axis corresponds to the [001] direction observed in the SAED (Selected Area Electron Diffraction) pattern of the oriented particles using a transmission electron microscope, and the a-axis is perpendicular to the c-axis, being parallel to the major axis of the oriented particles.

Referring to Fig. 2, the composite metal hydroxide precursor in one embodiment of the present invention includes secondary particles composed of clusters of primary particles with a surface region consisting of oriented particles. Specifically, these primary particles are bundles or aggregates of fine primary particles. Observations using transmission electron microscopy reveal that the major axis of the fine primary particles is aligned with that of the primary particles, and the fine primary particles have a thickness ranging from 1 nm to 50 nm.

Referring to Fig. 3, it can be observed that bundles of fine primary particles form the oriented particles. In some cases, the boundary between fine primary particles can be identified within the interior or surface region of the oriented particles, distinguishing individual fine primary particles.

In one embodiment of the present invention, the primary particles have an average thickness of 0.4 µm or less. When observed using transmission electron microscopy, the square root of the primary particle's average cross-sectional area corresponds to an average size of 0.5 µm or less.

The aspect ratio (length divided by thickness) of the primary particles may range from 5 to 100.

In this embodiment, if the extended center point of the primary particle is defined as the midpoint of its major axis, the acute angle between the extended centerline of the primary particle's major axis and a reference line connecting the extended center point to the secondary particle's center is 20° or less on average.

Additionally, the alignment distance, defined as the average distance between the extended centerline of the primary particle's major axis and a central reference line passing through the center of the secondary particle, is 2 µm or less.

Furthermore, a precursor containing oriented primary particles made of fine primary particles exhibits a higher XRD intensity for the (101) diffraction plane than for the (100) diffraction plane.

Referring to Fig. 4, a more detailed explanation is provided. At least some of the primary particles (120) forming the surface region (B) of the secondary particle (200) are rod-shaped, where the shorter length b2 runs through the center of the rod, while the longer length b1 is perpendicular to b2. The length b1 is 1.5 to 25 times greater than b2, and b1 is oriented toward the center of the secondary particle (200).

If b1/b2 < 1.5, voids may form between the secondary particles (200), making them prone to cracking along the center (C) of the secondary particles (200) after prolonged cycling. Conversely, if b1/b2 > 25, the primary particles (120) may become fragile and break easily under external forces. More specifically, the ratio of b1 to b2 may be 1.5 to 20, 1.5 to 15, 1.5 to 10, or 2 to 10.

The average length of b1 in the primary particles (120) is 2.0 µm or less. If b1 exceeds 2.0 µm, the cycle life characteristics of the secondary battery may degrade. Specifically, b1 may range from 0.005 to 2.0 µm, 0.01 to 2.0 µm, 0.05 to 2.0 µm, 0.1 to 2.0 µm, 0.05 to 1.5 µm, 0.05 to 1.2 µm, or 0.1 to 1.2 µm.

The average length of b2 in the primary particles (120) may range from 0.1 µm to 2.0 µm. By controlling the lengths b1 and b2 within the specified ranges, the alignment of primary particles (120) forming the secondary particle (200) can be enhanced. Specifically, b2 may range from 0.015 to 0.8 µm, 0.02 to 0.6 µm, 0.03 to 0.5 µm, or 0.03 to 0.25 µm.

By optimizing b1 and b2, the alignment of primary particles (120) at the surface region (B) of the secondary particle (200) is improved, resulting in higher structural stability and denser packing, which prevents electrolyte penetration into the core region (A) of the secondary particle (200).

The cathode active material in this embodiment can be synthesized via a coprecipitation reaction using at least one transition metal compound with a **composite metal hydroxide precursor.** The highly oriented primary particles that form during the precursor stage remain intact even after high-temperature calcination, ensuring the preservation of the oriented structure in the final sintered cathode active material.

The **average diameter of the secondary particles** may range from **2 µm to 20 µm.** If the diameter is **less than 2 µm,** excessive electrolyte contact may accelerate degradation during battery cycling. If it exceeds **20 µm,** the volumetric energy density of the cathode may decrease.

These characteristics will be further detailed in the subsequent embodiments.

### [Comparative Example 1]

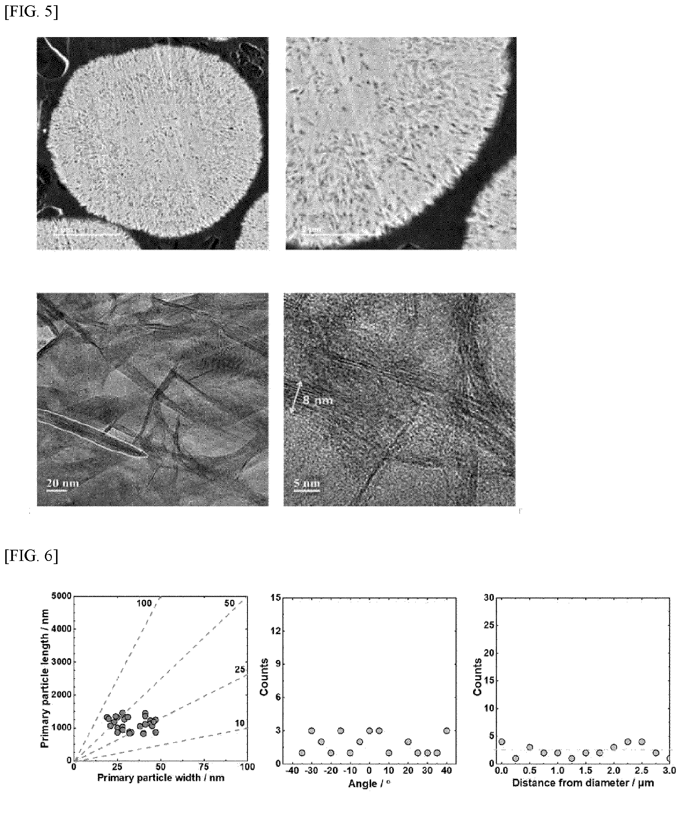

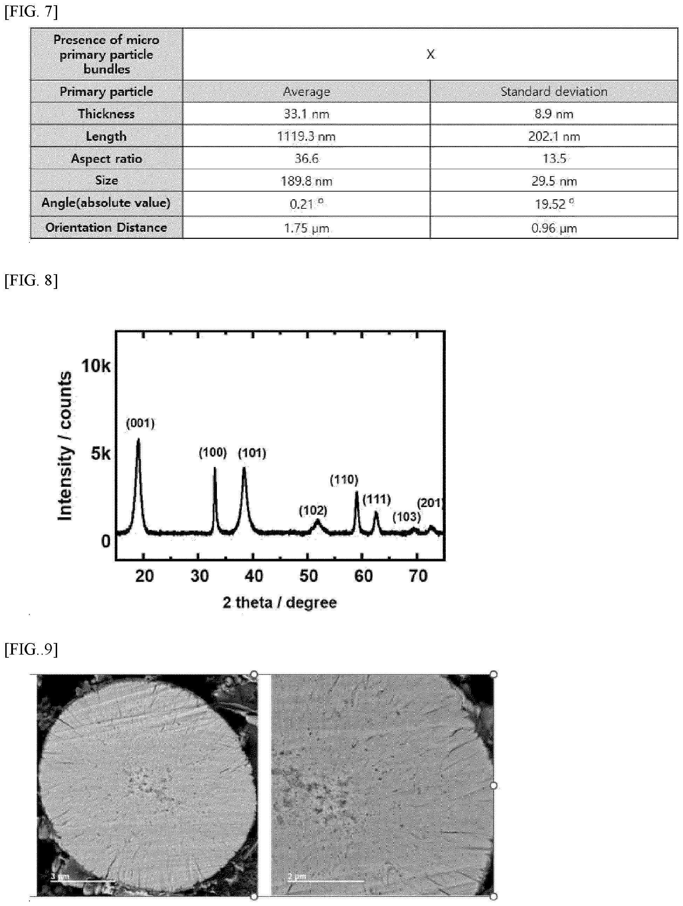

Fig. 5 shows SEM and TEM images of the composite metal hydroxide precursor of Comparative Example 1, Fig. 6 shows a graph of the microstructure measurement results for Comparative Example 1, and Fig. 7 presents data based on the microstructure measurement results of Fig. 6-specifically, whether the micro primary particles form bundles, and the thickness, length, aspect ratio, size, angle, and orientation distance of the primary particles. Fig. 8 is a graph illustrating the XRD analysis results for Comparative Example 1.

As shown in Fig. 5, for the [Ni_{0.96}Co_{0.02}Mn_{0.02}](OH)₂ composite metal hydroxide precursor, when a typical co-precipitation reaction is performed, the particle density decreases and the micro primary particles do not form bundles. In other words, the composite metal hydroxide precursor of Comparative Example 1 does not form any orientation-type particles and is not composed of bundled micro primary particles.

Referring to Figs. 6 and 7, one can see the thickness, length, aspect ratio, size, angle, orientation distance, and so forth of the primary particles in Comparative Example 1. By examining the figures, one can determine the particle size (length/width) and aspect ratio, quantitatively analyze the particle orientation (degree of orientation), and confirm the spatial distribution of how the particles are situated with respect to the central axis of the particle. In Comparative Example 1, the aspect ratio was found to be 36.6, and the primary particles are evenly distributed without any particular orientation.

It can also be observed that the average orientation distance of the primary particles is as large as about 1.75 µm. Furthermore, defining the center point of an extension line as the midpoint between one end of the primary particle and the other end, the average of the absolute values of the acute angles-formed between (i) the extension line in the major axis direction passing through the center of the primary particle, and (ii) an angle reference line connecting the center point of that extension line to the center of the secondary particle exceeds 20°.

This indicates that, when a typical co-precipitation reaction is performed on the composite metal hydroxide precursor, micro primary particles do not form bundles and do not exhibit orientation.

Meanwhile, from the XRD analysis results in Fig. 8, it can be seen that I(101)/I(100)=0.99. This indicates that I(101) is lower than I(100), meaning that, in the XRD analysis, the intensity corresponding to the (101) diffraction plane is lower than the intensity corresponding to the (100) diffraction plane. These XRD analysis results further confirm that the composite metal hydroxide precursor of Comparative Example 1 exhibits a crystal structure without orientation.

### [Comparative Example 2 and Example 1] [Ni_{0.96}Co_{0.02}Mn_{0.02}](OH)₂

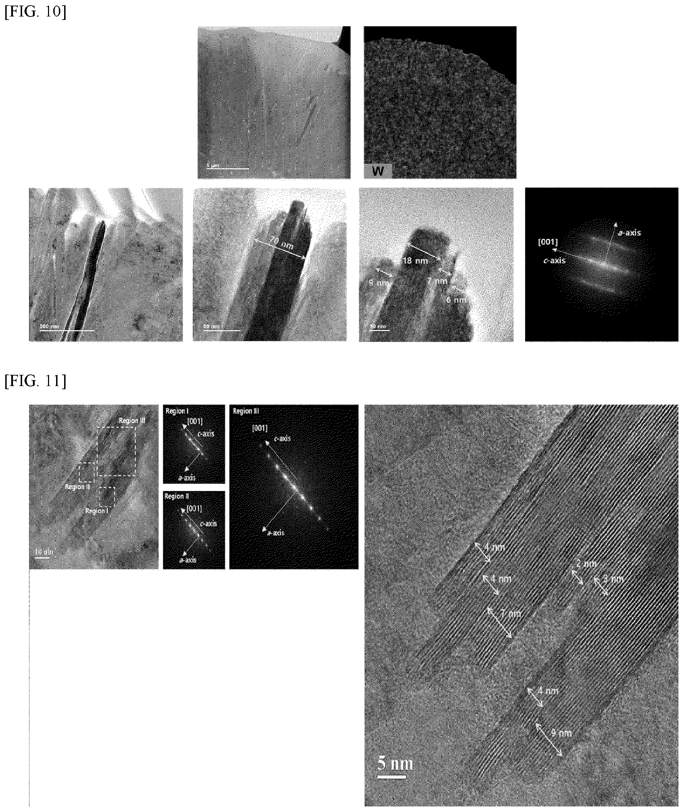

Fig. 9 is an SEM image of the [Ni_{0.96}Co_{0.02}Mn_{0.02}](OH)₂ composite metal hydroxide precursor wet-doped with tungsten (W) according to the first embodiment of the present invention. Fig. 10 is a TEM image of the [Ni_{0.96}Co_{0.02}Mn_{0.02}](OH)₂ composite metal hydroxide precursor wet-doped with tungsten (W) according to the first embodiment of the present invention.

Fig. 11 shows electron diffraction patterns obtained by performing FFT on:
(i) Region I and Region II (two different areas containing micro primary particles), and
(ii) Region III, an area containing orientation-type particles composed of bundles of the micro primary particles,
all from the [Ni_{0.96}Co_{0.02}Mn_{0.02}](OH)₂composite metal hydroxide precursor wet-doped with tungsten (W) according to the first embodiment. The figure compares these diffraction patterns.

The first embodiment relates to a W-wet-doped [Ni_{0.96}Co_{0.02}Mn_{0.02}](OH)₂ composite metal hydroxide precursor. As can be seen in the figures, bundles of micro primary particles are observed in the first embodiment. In Fig. 11, which compares the electron diffraction patterns of the orientation-type particle (Region III) that is composed of bundles of micro primary particles, the [001] directions in the FFT patterns all coincide, indicating that the alignment direction of the micro primary particles is the same as that of the orientation-type particles. This confirms that the micro primary particles combine to form the orientation-type particle, and that the thickness of these micro primary particles is about 1-50 nm.

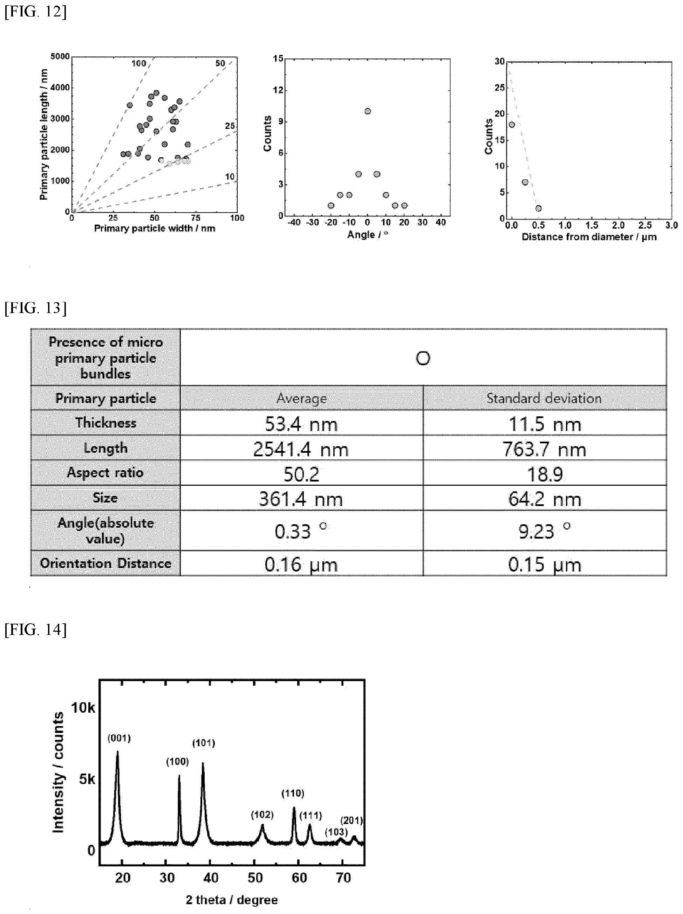

Meanwhile, Fig. 12 is a graph showing the microstructure measurement results for the [Ni_{0.96}Co_{0.02}Mn_{0.02}](OH)₂composite metal hydroxide precursor wet-doped with tungsten (W) according to the first embodiment of the present invention, and Fig. 13 sets forth data derived from these microstructure measurements, including whether the micro primary particles form bundles and information on the thickness, length, aspect ratio, size, angles, and orientation distance of the primary particles. Fig. 14 is a graph illustrating the XRD analysis results of this W-wet-doped [Ni_{0.96}Co_{0.02}Mn_{0.02}](OH)₂ composite metal hydroxide precursor.

Referring to Figs. 12 and 13, it is possible to determine the thickness, length, aspect ratio, size, angles, and orientation distance of the primary particles in the first embodiment. By analyzing these figures, one can ascertain the particle size (length/width) and aspect ratio, quantitatively analyze the orientation (degree of orientation) of the particles, and confirm the spatial distribution of how these particles are situated relative to their central axis. In Example 1, the aspect ratio is about 50.2, and it is apparent that the primary particles exhibit a preferential alignment (orientation).

Additionally, the average orientation distance of the primary particles in Example 1 is about 0.16 µm, which is greatly reduced compared to Comparative Example 1. Thus, compared to the comparative examples, the micro primary particles in Example 1 clearly exhibit orientation and form bundles.

In the XRD analysis results shown in Fig. 14, I(101)/I(100) is 1.09, indicating that I(101) is higher than I(100). In other words, the diffraction intensity corresponding to the (101) plane is greater than that corresponding to the (100) plane.

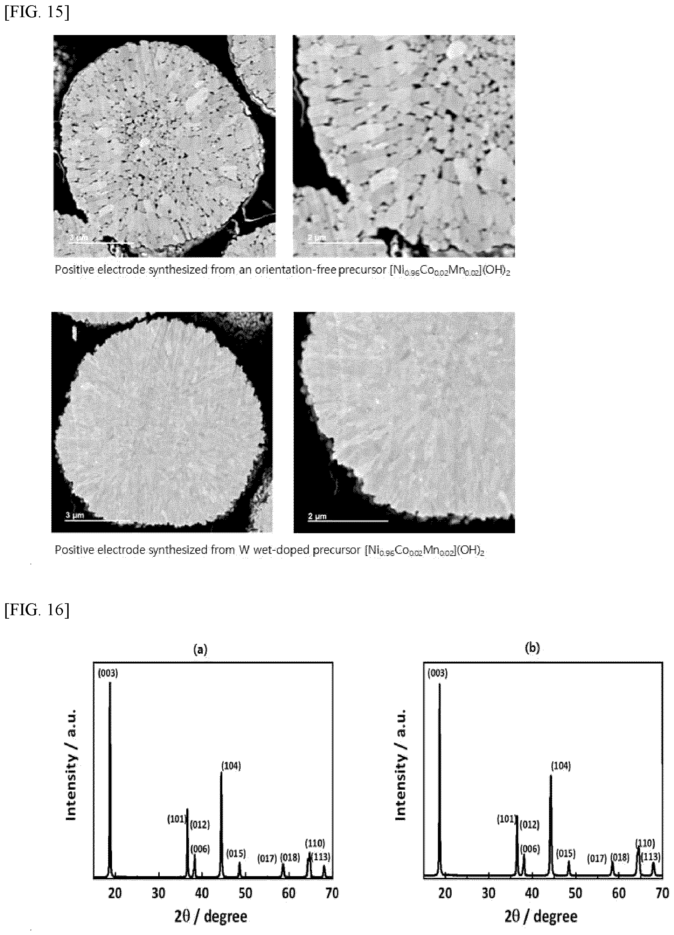

Table 1 (Fig. 15) compares the chemical compositions of the positive electrode active materials of Comparative Example 2 and Example 1, while Table 2 compares their electrochemical performance (capacity, rate capability, lifespan). Table 3 presents a more detailed comparison of their electrochemical performance with a focus on rate capability.

**[table 1]**

| **Cathode** | **Chemical composition (at%)** | | | |
|---|---|---|---|---|
| | **Ni** | **Co** | **Mn** | **W** |
| **NCM960202** | **96.1** | **1.8** | **2.1** | **-** |
| **W-NCM960202** | **95.4** | **1.9** | **1.8** | **0.9** |

**[table 2]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM960202** | **General co-precipitation** | **237.7** | **94.6%** | **233.2** | **98.1%** | **223.2** | **93.9%** | **100** | **81.5%** |
| **W-NCM960202** | **W wet doping** | **238.5** | **92.7%** | **233.8** | **98.0%** | **224.6** | **94.1%** | **100** | **90.4%** |

**[table 3]**

| **Cathode** | **Precusor systhesis** | **0.2C Capacity (mAh/g)** | **0.5C Capacity (mAh/g)** | **1C (mAh/g)** | **2C Capacity (mAh/g)** | **5C Capacity (mAh/g)** | **10C Capacity (mAh/g)** |
|---|---|---|---|---|---|---|---|
| **NCM960202** | **General co-precipitation** | **233.8** | **226.8** | **218.8** | **204.7** | **183.1** | **170.9** |
| **W-NCM960202** | **W wet doping** | **233.4** | **228.7** | **221.4** | **210.2** | **190.1** | **182.2** |

In Comparative Example 2 (shown in Tables 1 to 3), a typical co-precipitation reaction was performed. Compared to that, in Example 1, there is no significant difference in the initial capacity (0.1C) or the capacity at high-rate charge/discharge (0.2C, 0.5C). However, the capacity retention rate (at 0.5C, 100 cycles) in Example 1 is markedly higher than that in Comparative Example 2. This indicates that the orientation-type particles formed by W wet doping significantly enhance the crystal structural stability of the precursor, thereby greatly improving the cycle life characteristics.

Fig. 15 compares SEM images of cathode materials synthesized from the tungsten (W) wet-doped [Ni_{0.96}Co_{0.02}Mn_{0.02}](OH)₂ composite metal hydroxide precursor according to Comparative Example 2 and Example 1 of the present invention. As shown in Fig. 15, when the precursor has no orientation, the resulting cathode material also displays no orientation. Conversely, when the precursor is oriented, the resulting cathode material likewise exhibits orientation, which contributes to the distinct electrochemical performance of the product.

Fig. 16 is a graph illustrating XRD analysis results for cathode materials synthesized from the tungsten (W) wet-doped [Ni_{0.96}Co_{0.02}Mn_{0.02}](OH)₂ composite metal hydroxide precursor of Comparative Example 2 and Example 1 of the present invention. As shown in Fig. 16, although there is no pronounced difference between the two samples in terms of XRD patterns, both materials exhibit a well-developed R-3m layered structure.

### [Comparative Example 3 and Example 2] [Ni_{0.94}Co_{0.04}Mn_{0.02}](OH)₂

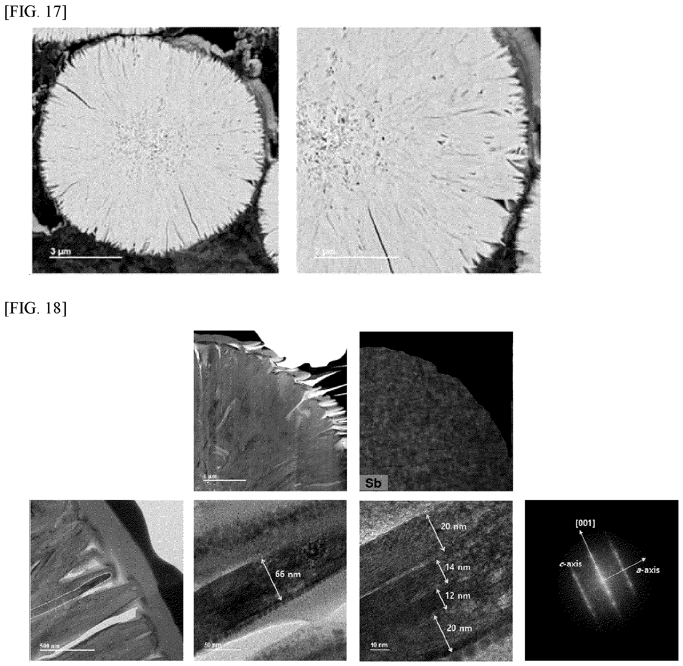

Fig. 17 is an SEM image of a [Ni_{0.94}Co_{0.04}Mn_{0.02}](OH)₂ composite metal hydroxide precursor wet-doped with antimony (Sb) according to the second embodiment of the present invention. Fig. 18 is a TEM image of the composite metal hydroxide precursor according to the second embodiment of the present invention.

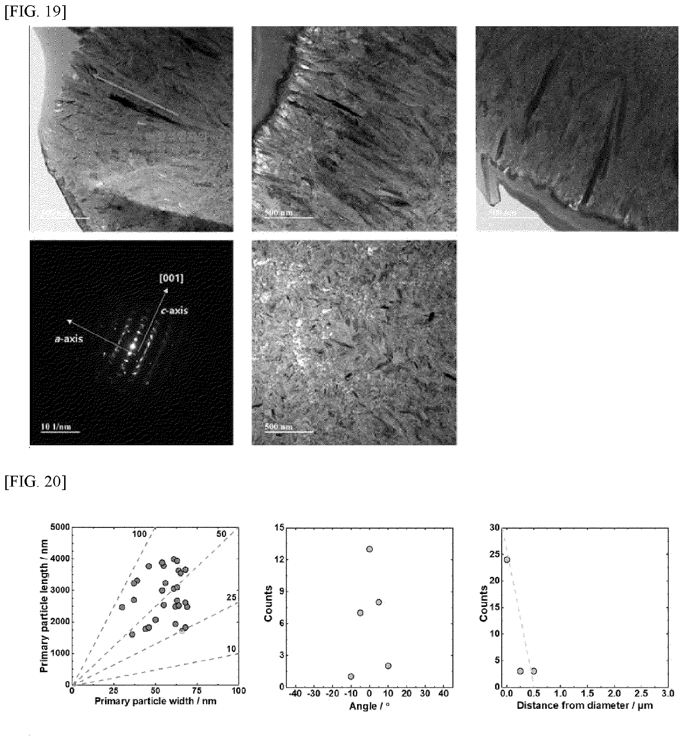

Fig. 19 is a TEM image showing that orientation-type particles are observed not only at the extreme surface of the secondary particles but also in the shell region of the composite metal hydroxide precursor according to the second embodiment of the present invention.

The second embodiment of the present invention relates to an Sb-wet-doped [Ni_{0.94}Co_{0.04}Mn_{0.02}](OH)₂ composite metal hydroxide precursor. As shown in the figures, bundles of micro primary particles are observed in Example 2. In addition, Example 2 demonstrates that orientation-type particles appear not only at the extreme surface of the secondary particles but also in the shell region thereof.

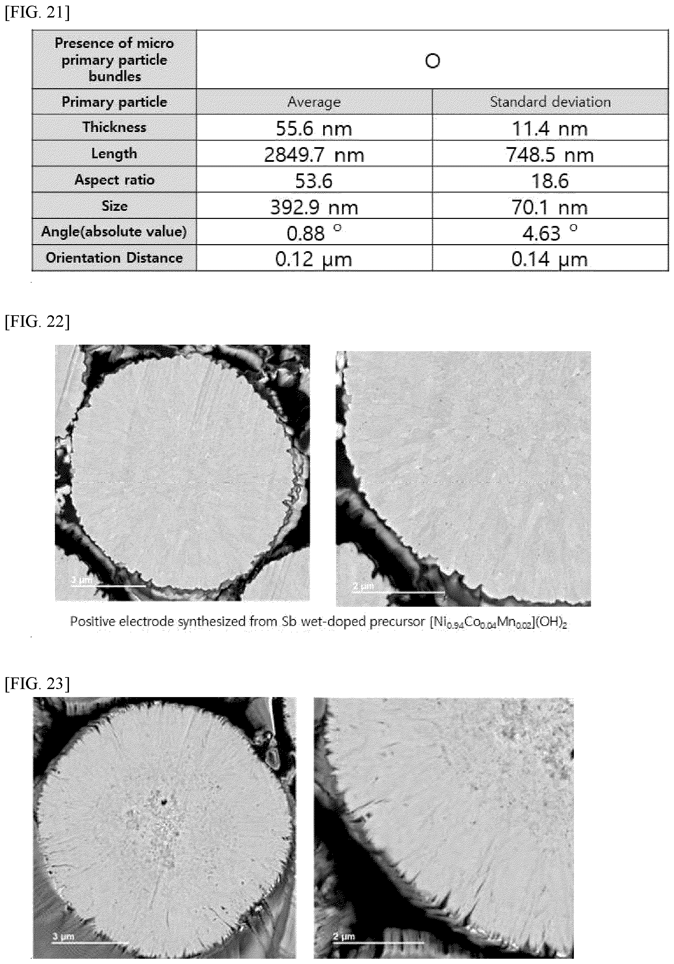

Meanwhile, Fig. 20 is a graph illustrating the microstructure measurement results for the Sb-wet-doped [Ni_{0.94}Co_{0.04}Mn_{0.02}](OH)₂ composite metal hydroxide precursor according to the second embodiment of the present invention, and Fig. 21 provides data derived from those microstructure measurements, such as whether the micro primary particles form bundles, the thickness and length of the primary particles, their aspect ratio, size, angle, orientation distance, and so forth.

By examining these figures, it is possible to determine the thickness, length, aspect ratio, size, angle, and orientation distance of the primary particles in Example 2. More specifically, one can ascertain the particle size (length/width) and aspect ratio, quantitatively analyze the orientation (degree of orientation) of the particles, and confirm their spatial distribution relative to the central axis. In Example 2, the aspect ratio is about 53.6, and it is apparent that the distribution of the primary particles exhibits an orientation.

Furthermore, the average orientation distance of the primary particles is about 0.12 µm, which is significantly smaller compared to that of Comparative Example 1. In Example 2, the micro primary particles exhibit a marked degree of orientation and form bundles, in clear contrast to Comparative Example 1.

Table 4 compares the chemical compositions of the positive electrode active materials of Comparative Example 3 and Example 2 of the present invention.

Table 5 compares the electrochemical performance (capacity, rate capability, and cycle life) of Comparative Example 3 and Example 2.

Table 6 specifically focuses on comparing the rate capabilities in the electrochemical performance of Comparative Example 3 and Example 2.

**[table 4]**

| **Cathode** | **Chemical composition (at%)** | | | |
|---|---|---|---|---|
| | **Ni** | **Co** | **Mn** | **Sb** |
| **NCM940402** | **94.0** | **4.2** | **1.8** | **-** |
| **Sb-NCM940402** | **93.4** | **3.9** | **1.9** | **0.8** |

**[table 5]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/0.1C** | **Cycle** | **0.5C Cycle Retention** |
|---|---|---|---|---|---|---|---|---|---|
| **NCM940402** | **General co-precipitation** | **238.9** | **96.3%** | **230.1** | **97.1%** | **221.01** | **89.1%** | **100** | **83.1%** |
| **Sb-NCM940402** | **Sb wet doping** | **240.7** | **97%** | **233.5** | **97.7%** | **227.08** | **91.5%** | **100** | **93.9%** |

**[table 6]**

| **Cathode** | **Precursor systhesis** | **0.2C Capacity (mAh/g)** | **0.5C Capacity(mAh/g)** | **1C Capacity (mAh/g)** | **Capacity (mAh/g)** | **5C Capacity (mAh/g)** | **10C Capacity (mAh/g)** |
|---|---|---|---|---|---|---|---|
| **NCM940402** | **General co-precipitation** | **230.0** | **221.9** | **214.2** | **202.6** | **181.4** | **164.2** |
| **Sb-NCM940402** | **Sb wet doping** | **233.4** | **228.1** | **222.3** | **214.2** | **192.7** | **175.3** |

In Comparative Example 3 (as shown in Tables 4 to 6), a typical co-precipitation reaction was performed. Compared to that, in Example 2, although there is no significant difference in initial capacity (0.1C) or high-rate charge/discharge capacity (0.2C, 0.5C), the capacity retention (at 0.5C, 100 cycles) in Example 2 is markedly higher than that in Comparative Example 3. This indicates that, through the Sb-wet-doped co-precipitation reaction, the presence of orientation-type particles increases the crystal structural stability of the precursor, thereby significantly improving the cycle life characteristics.

Fig. 22 is an SEM image of the cathode material synthesized from the Sb-wet-doped [Ni_{0.94}Co_{0.04}Mn_{0.02}](OH)₂composite metal hydroxide precursor according to the second embodiment of the present invention. As shown in the figure, when the precursor exhibits orientation, the resulting cathode material likewise exhibits orientation, which in turn enhances its electrochemical performance.

### [Comparative Example 3 and Example 3] [Ni_{0.94}Co_{0.04}Mn_{0.02}](OH)₂

Fig. 23 is an SEM image of the [Ni_{0.94}Co_{0.04}Mn_{0.02}](OH)₂ composite metal hydroxide precursor wet-doped with antimony (Sb) and titanium (Ti) according to the third embodiment of the present invention.

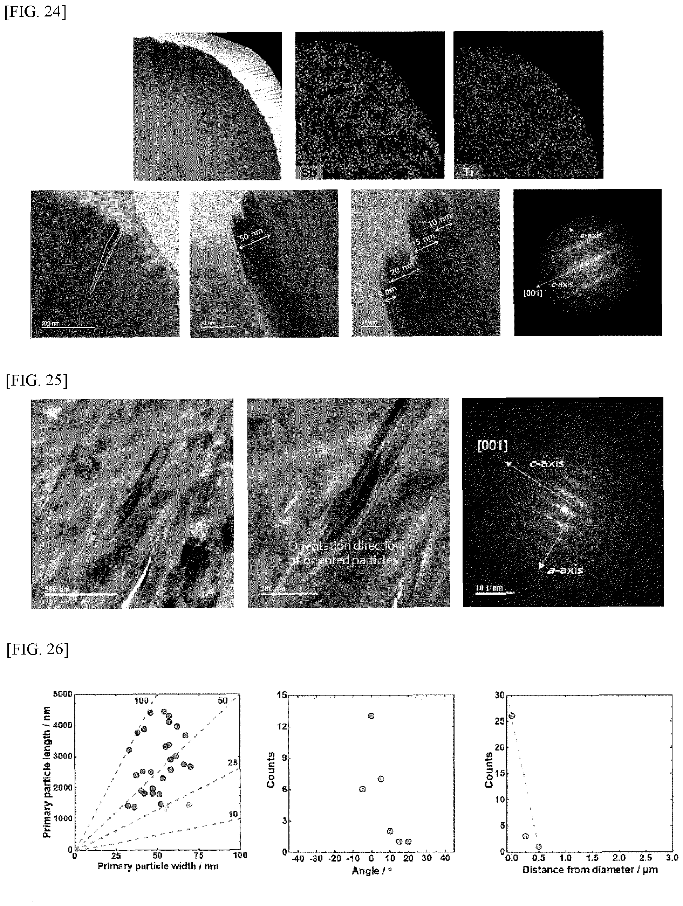

Fig. 24 is a TEM image of the composite metal hydroxide precursor according to the third embodiment of the present invention.

Fig. 25 is a TEM image illustrating that orientation-type particles are also observed inside the secondary particles of the composite metal hydroxide precursor according to the third embodiment of the present invention.

The third embodiment of the present invention relates to an Sb- and Ti-wet-doped [Ni_{0.94}Co_{0.04}Mn_{0.02}](OH)₂ composite metal hydroxide precursor. Referring to Figs. 23 and 24, it can be observed in Example 3 that the composite metal hydroxide precursor is composed of bundles of micro primary particles. It can also be confirmed that each micro primary particle has a thickness of about 1-50 nm.

As shown in Fig. 25, orientation-type particles can be found not only in the primary particles-each primary particle being formed of bundles of micro primary particles-but also inside the secondary particles composed of multiple primary particles. In other words, each primary particle is composed of bundles of micro primary particles, with the major axis direction of the micro primary particles matching that of the primary particles, and the secondary particles, which consist of a collection of such primary particles, exhibit an oriented structure.

Fig. 26 is a graph illustrating microstructure measurement results for the Sb- and Ti-wet-doped [Ni_{0.94}Co_{0.04}Mn_{0.02}](OH)₂ composite metal hydroxide precursor according to the third embodiment of the present invention.

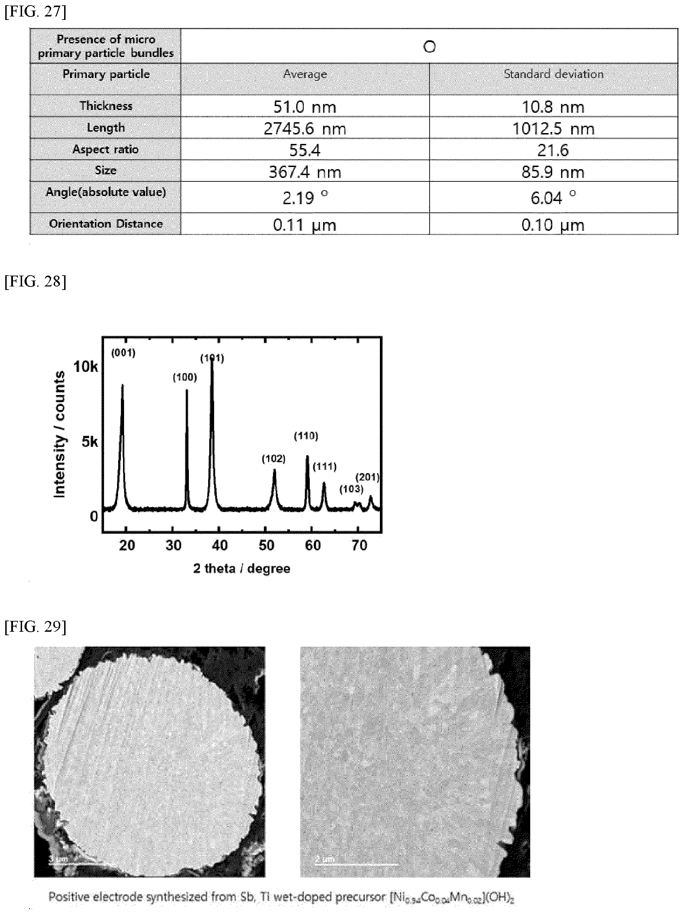

Fig. 27 shows data derived from the microstructure measurements, including whether the micro primary particles form bundles, and the thickness, length, aspect ratio, size, angle, and orientation distance of the primary particles.

Fig. 28 is a graph illustrating XRD analysis results of the composite metal hydroxide precursor according to the third embodiment of the present invention.

From these figures, one can determine the thickness, length, aspect ratio, size, angle, and orientation distance of the primary particles in Example 3. That is, the particle size (length/width) and aspect ratio can be evaluated, the orientation (degree of alignment) of the particles can be quantitatively analyzed, and the spatial distribution of how the particles are positioned relative to their central axis can be confirmed. In Example 3, the aspect ratio is about 55.4, and the primary particles exhibit an oriented distribution.

Moreover, the average orientation distance of the primary particles is about 0.11 µm, which is significantly reduced compared to Comparative Example 1. Therefore, in Example 3, the micro primary particles clearly exhibit orientation and form bundles, in sharp contrast to Comparative Example 1.

From the XRD analysis results shown in Fig. 28, I(101)/I(100)=1.12. This indicates that I(101) is higher than I(100), i.e., the intensity corresponding to the (101) plane in the XRD pattern is greater than that corresponding to the (100) plane.

Meanwhile, Table 7 compares the chemical compositions of the positive electrode active materials of Comparative Example 3 and Example 3 of the present invention.

Table 8 compares their electrochemical performance (capacity, rate capability, cycle life).

Table 9 presents a more focused comparison on rate capability among their electrochemical performance.

**[table 7]**

| **Cathode** | **Chemical composition (at%)** | | | | |
|---|---|---|---|---|---|
| | **Ni** | **Co** | **Mn** | **Sb** | **Ti:** |
| **NCM940402** | **94.0** | **4.2** | **1.8** | **-** | **-** |
| **Sb,Ti-NCM940402** | **93.1** | **3.8** | **1.8** | **0.8** | **0.5** |

**[table 8]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM940402** | **General co-precipitation** | **238.9** | **96.3%** | **230.1** | **97.1%** | **221.0** | **89.1%** | **100** | **83.1%** |
| **Sb,Ti-NCM940402** | **Sb, Ti wet doping** | **240.7** | **96.7%** | **236.6** | **98.3%** | **226.3** | **94.0%** | **100** | **95.1%** |

**[table 9]**

| **Cathode** | **Precursor systhesis** | **0.2C Capacity (mAh/g)** | **0.5C Capacity (mAh/g)** | **1C Capacity (mAh/g)** | **2C Capacity (mAh/g)** | **5C Capacity (mAh/g)** | **10C Capacity (mAh/g)** |
|---|---|---|---|---|---|---|---|
| **NCM940402** | **General co-precipitation** | **230.0** | **221.9** | **214.2** | **202.6** | **181.4** | **164.2** |
| **Sb,Ti-NCM940402** | **Sb, Ti wet doping** | **235.5** | **226.7** | **221.0** | **210.3** | **186.8** | **179.3** |

Based on Tables 7 to 9, although the co-precipitation reaction in Comparative Example 3 is a typical one, Example 3 exhibits improved initial capacity (at 0.1C) and high-rate charge/discharge capacity (at 0.2C and 0.5C), and especially demonstrates a markedly higher capacity retention (at 0.5C, 100 cycles) compared to Comparative Example 3. This indicates that, through co-precipitation involving Sb and Ti wet doping of the Ni_{0.94}Co_{0.04}Mn_{0.02}](OH)₂ composite metal hydroxide precursor, orientation-type particles are formed that increase the stability of the precursor's crystal structure, thereby greatly improving the cycle life characteristics.

Fig. 29 is an SEM image of the positive electrode material synthesized from the Sb- and Ti-wet-doped Ni_{0.94}Co_{0.04}Mn_{0.02}](OH)₂ composite metal hydroxide precursor according to the third embodiment of the present invention. As shown in the figure, when the precursor exhibits orientation, the synthesized positive electrode material likewise exhibits orientation, thus enhancing its electrochemical performance.

### [Comparative Example 4 and Example 4] [Ni_{0.90}Co_{0.05}Mn_{0.05}](OH)₂

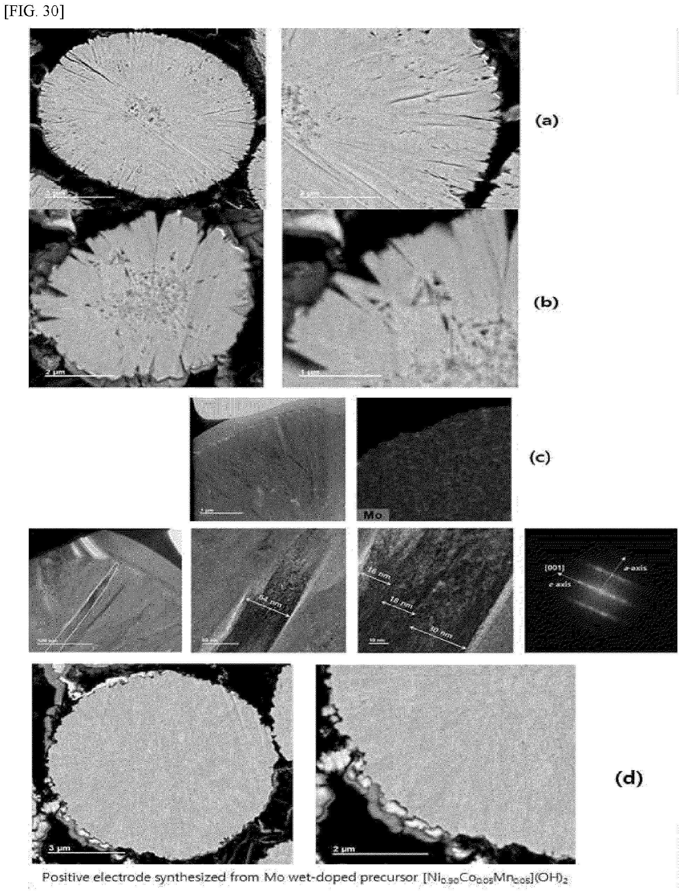

Fig. 30 illustrates: (a) An SEM image of a [Ni_{0.90}Co_{0.05}Mn_{0.05}](OH)₂ composite metal hydroxide precursor wet-doped with molybdenum (Mo) according to the fourth embodiment of the present invention; (b) An SEM image of a fine-particle [Ni_{0.90}Co_{0.05}Mn_{0.05}](OH)₂ composite metal hydroxide precursor wet-doped with Mo; (c) A TEM image of the [Ni_{0.90}Co_{0.05}Mn_{0.05}](OH)₂ composite metal hydroxide precursor wet-doped with Mo according to the fourth embodiment; (d) An SEM image of a positive electrode active material synthesized from the Mo-wet-doped [Ni_{0.90}Co_{0.05}Mn_{0.05}](OH)₂ composite metal hydroxide precursor.

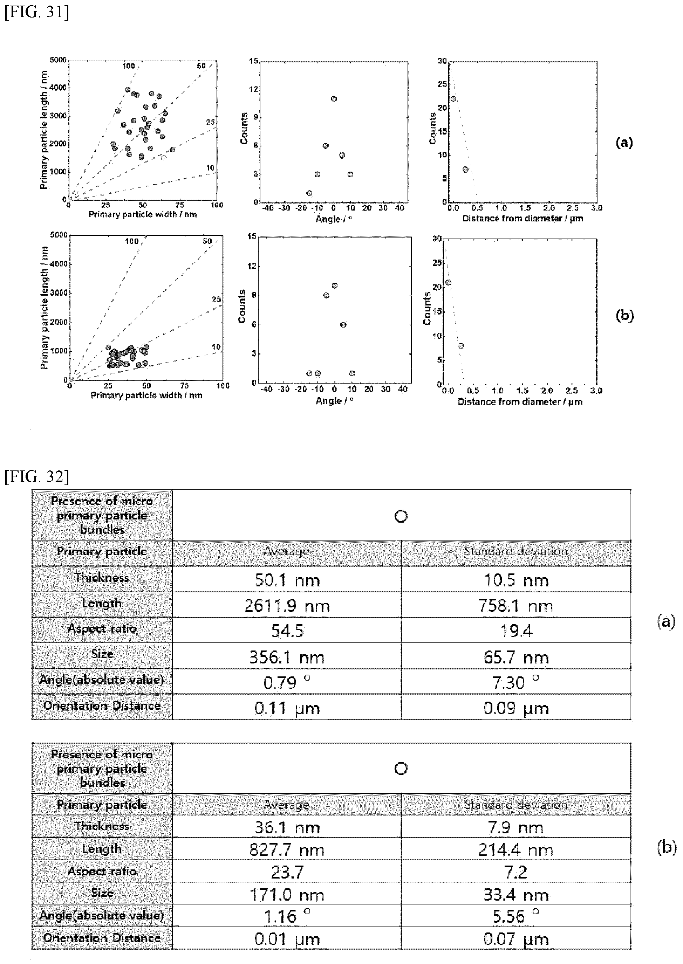

Fig. 31 shows: (a) Microstructure measurement results of the [Ni_{0.90}Co_{0.05}Mn_{0.05}](OH)₂ composite metal hydroxide precursor wet-doped with Mo according to the fourth embodiment of the present invention; and (b) Microstructure measurement results of the fine-particle [Ni_{0.90}Co_{0.05}Mn_{0.05}](OH)₂composite metal hydroxide precursor wet-doped with Mo.

Fig. 32 shows: (a) Data derived from the microstructure measurement results of the Mo-wet-doped [[Ni_{0.90}Co_{0.05}Mn_{0.05}](OH)₂ composite metal hydroxide precursor according to the fourth embodiment of the present invention, including whether the micro primary particles form bundles, and the thickness, length, aspect ratio, size, angle, orientation distance, etc. of the primary particles; (b) The corresponding data for the fine-particle [Ni_{0.90}Co_{0.05}Mn_{0.05}](OH)₂composite metal hydroxide precursor wet-doped with Mo.

Referring to Fig. 30, the fourth embodiment of the present invention also shows the size and other characteristics of primary particles composed of bundles of micro primary particles. In particular, Fig. 30(b) displays the fine-particle [Ni_{0.90}Co_{0.05}Mn_{0.05}](OH)₂ composite metal hydroxide precursor wet-doped with Mo, in which bundles of micro primary particles are observed. In other words, even in an environment where it is typically difficult for orientation-type primary particles to develop (for instance, in fine precursor particles having D50 of about 1.5-3.5 µm, orientation-type primary particles can still be confirmed during the co-precipitation process of the present invention.

Fig. 30(c) shows a TEM image of the Mo-wet-doped [Ni_{0.90}Co_{0.05}Mn_{0.05}](OH)₂ composite metal hydroxide precursor according to the fourth embodiment, clearly revealing the size and orientation of the primary particles, which are formed as bundles of micro primary particles. Meanwhile, Fig. 30(d) indicates that, in the case of a positive electrode active material synthesized from the Mo-wet-doped [Ni_{0.90}Co_{0.05}Mn_{0.05}](OH)₂ composite metal hydroxide precursor, the positive electrode material itself is also oriented when synthesized from an oriented precursor, resulting in improved electrochemical performance.

Further, referring to Figs. 31 and 32 for the microstructure measurement results of both the composite metal hydroxide precursor and the fine-particle precursor wet-doped with Mo according to the fourth embodiment, it is evident that one can identify the thickness, length, aspect ratio, size, angle, and orientation distance of the primary particles. Namely, one can determine the particle size (length/width) and aspect ratio, quantitatively analyze the orientation (degree of alignment), and confirm the spatial distribution of how particles are situated with respect to their central axis.

In the fourth embodiment, the composite metal hydroxide precursor exhibits an aspect ratio of about 54.5, demonstrating that the primary particles are distributed in an oriented manner. Even in the fine-particle composite metal hydroxide precursor (D50:1.5-3.5 µm), which generally makes it difficult for orientation-type primary particles to develop, an aspect ratio of about 23.7 is observed, along with clear signs of orientation.

Moreover, the average orientation distance of the primary particles is approximately 0.11 µm or 0.01 µm, respectively significantly reduced compared to Comparative Example 1. Accordingly, in Example 4, the micro primary particles clearly exhibit strong orientation and form bundles, in contrast to the comparative examples.

Tables 10 and 11 compare the chemical compositions of the positive electrode active materials in Comparative Example 4 and Example 4 of the present invention, showing the compositions of both the composite metal hydroxide precursor and the fine-particle composite metal hydroxide precursor, respectively.

Tables 12 and 13 compare the electrochemical performance (capacity, rate characteristics, cycle life) of Comparative Example 4 and Example 4 of the present invention for both the composite metal hydroxide precursor and the fine-particle composite metal hydroxide precursor.

Tables 14 and 15 offer a more detailed comparison specifically focusing on rate characteristics among the electrochemical performance results of Comparative Example 4 and Example 4, for both the composite metal hydroxide precursor and the fine-particle composite metal hydroxide precursor.

**[table 10]**

| **Cathode** | **Chemical composition (at%)** | | | |
|---|---|---|---|---|
| | **Ni** | **Co** | **Mn** | **Mo** |
| **NCM900505** | **89.8** | **5.1** | **5.1** | **-** |
| **Mo-NCM900505** | **89.6** | **4.9** | **4.8** | **0.7** |

**[table 11]**

| **Cathode** | **Chemical composition (at%)** | | | |
|---|---|---|---|---|
| | **Ni** | **Co** | **Mn** | **Mo** |
| **NCM900505** | **89.8** | **5.1** | **5.1** | **-** |
| **Mo-NCM900505** | **89.5** | **4.8** | **4.8** | **0.9** |

**[table 12]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM900505** | **General co-precipitation** | **232.9** | **95.5%** | **222.4** | **95.5%** | **215.3** | **92.4%** | **100** | **86.3%** |
| **Mo-NCM900505** | **Mo wet doping** | **233.0** | **94.6%** | **225.9** | **97.0%** | **219.2** | **94.1%** | **100** | **94.1%** |

**[table 13]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/0.1C** | **Cycle** | **0.5C Cycle Retention** |
|---|---|---|---|---|---|---|---|---|---|
| **NCM900505** | **General co-precipitation** | **232.9** | **95.5%** | **222.4** | **95.5%** | **215.3** | **92.4%** | **100** | **86.3%** |
| **Mo-NCM900505** | **Mo wet doping** | **233.4** | **94.8%** | **226.2** | **96.9%** | **219.4** | **94.0%** | **100** | **92.7%** |

**[table 14]**

| **Cathode** | **Precursor systhesis** | **0.2C Capacity (mAh/g)** | **0.5C Capacity (mAh/g)** | **1C Capacity (mAh/g)** | **2C Capacity (mAh/g)** | **5C Capacity (mAh/g)** | **10C Capacity (mAh/g)** |
|---|---|---|---|---|---|---|---|
| **NCM900505** | **General co-precipitation** | **221.9** | **215.4** | **209.8** | **199.7** | **176.4** | **161.2** |
| **Mo-NCM900505** | **Mo wet doping** | **225.8** | **219.1** | **215.3** | **207.3** | **185.4** | **172.3** |

**[table 15]**

| **Cathode** | **Precusor systhesis** | **0.2C Capacity** | **0.5 Capacity (mAh/g)** | **1C Capacity (mAh/g)** | **2C Capacity (mAh/g)** | **5C Capacity (mAh/g)** | **10C Capacity (mAh/g)** |
|---|---|---|---|---|---|---|---|
| **NCM900505** | **General co-precipitation** | **221.9** | **215.4** | **209.8** | **199.7** | **176.4** | **161.2** |
| **Mo-NCM900505** | **Mo wet doping** | **226.1** | **219.5** | **215.2** | **208.1** | **186.1** | **173.1** |

When comparing Comparative Example 4, which employed a typical co-precipitation reaction, to Example 4, it is evident from Tables 10 to 15 that Example 4 achieves more favorable performance in initial capacity (0.1C) and high-rate charge/discharge capacity (0.2C, 0.5C). In particular, Example 4 demonstrates a markedly higher capacity retention (0.5C, 100 cycles) compared to Comparative Example 4. This indicates that, in the composite metal hydroxide precursor of Example 4, the formation of orientation-type particles via the co-precipitation reaction enhances the crystal structural stability of the precursor, resulting in significantly improved cycle life characteristics.

Moreover, this effect is also observed in fine-particle composite metal hydroxide precursors (D50 :1.5-3.5 µm), which typically present challenges for the development of orientation-type primary particles. Despite such challenges, these fine particles similarly exhibit orientation, thereby increasing the structural stability of the precursor and achieving remarkably improved cycle life characteristics.

### [Comparative Example 5 and Example 5] [Ni_{0.90}Co_{0.05}Mn_{0.05}](OH)₂

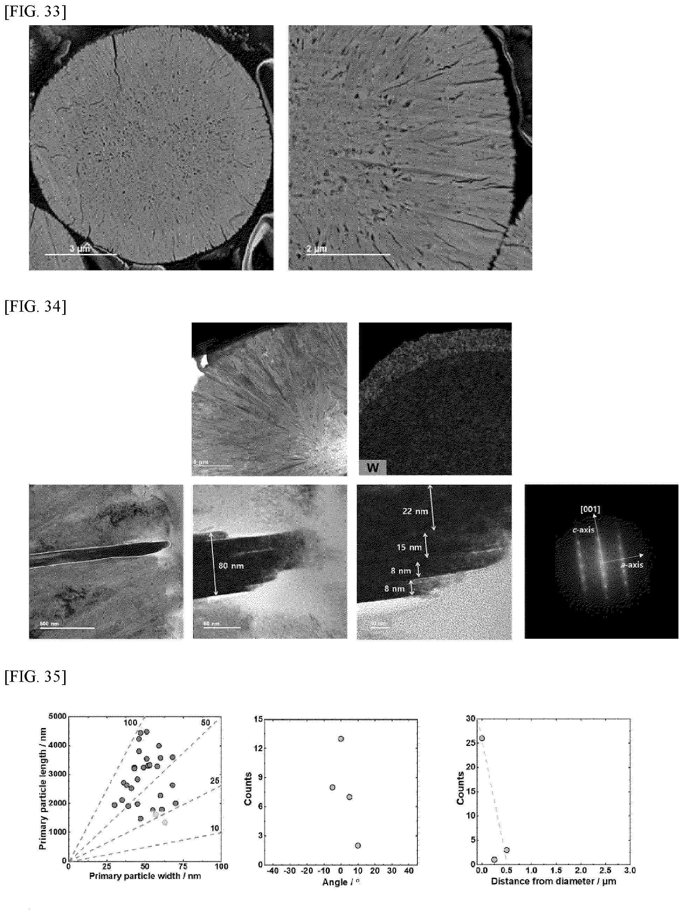

Fig. 33 is an SEM image of the [Ni_{0.90}Co_{0.05}Mn_{0.05}](OH)₂ composite metal hydroxide precursor shell-doped with tungsten (W) according to the fifth embodiment of the present invention.

Fig. 34 is a TEM image of the composite metal hydroxide precursor according to the fifth embodiment of the present invention.

In the fifth embodiment, tungsten (W) is wet-doped into the shell surface of the [Ni_{0.90}Co_{0.05}Mn_{0.05}](OH)₂ composite metal hydroxide precursor, forming primary particles composed of bundles of micro primary particles. It can also be seen that the micro primary particles have a thickness of about 1-50 nm.

Referring to Fig. 34, the electron diffraction pattern obtained by performing FFT on the micro primary particles exhibits c-axis and a-axis directions similar to those of the orientation-type particle's electron diffraction pattern. This indicates that the orientation direction of the micro primary particles is identical or very similar to that of the orientation-type particle formed by bundles of such micro primary particles.

Fig. 35 is a graph illustrating the microstructure measurement results for the fifth embodiment of the present invention, and

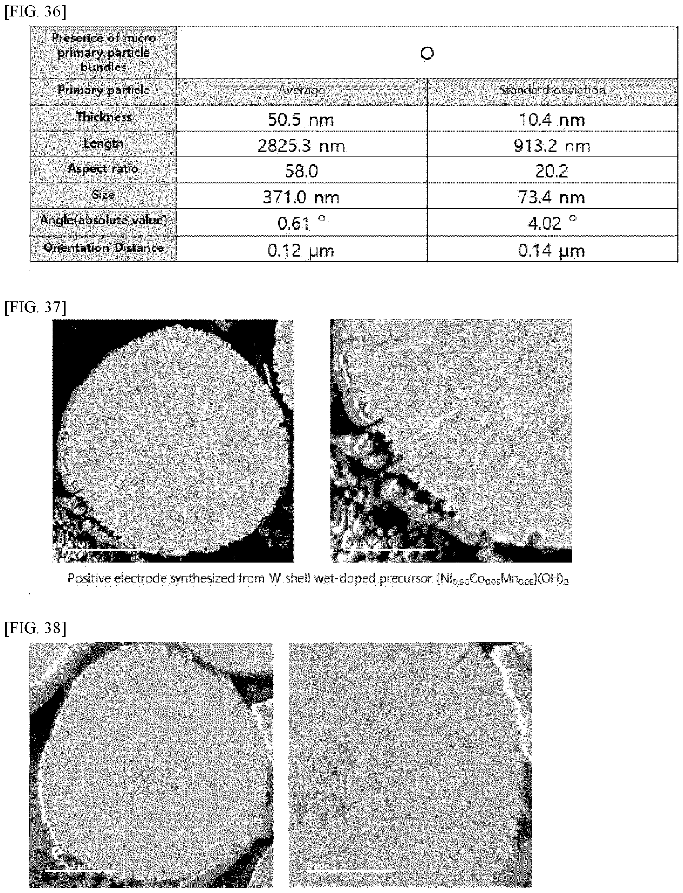

Fig. 36 shows data derived from those microstructure measurements, including whether the micro primary particles form bundles and the thickness, length, aspect ratio, size, angles, and orientation distance of the primary particles.

From these figures, one can determine the thickness, length, aspect ratio, size, angles, orientation distance, and other characteristics of the primary particles in Example 5. Specifically, it is possible to ascertain the particle size (length/width) and aspect ratio, quantitatively analyze the orientation (degree of alignment), and confirm the spatial distribution of how particles are situated relative to their central axis. In Example 5, the aspect ratio is about 58, indicating that the primary particles exhibit an oriented distribution.

Additionally, the average orientation distance of the primary particles is about 0.12 µm, showing a significant reduction compared to Comparative Example 1. Thus, in Example 5, it is clear that the micro primary particles exhibit a strong degree of orientation and form bundles, in sharp contrast to Comparative Example 1.

Meanwhile, Table 16 compares the chemical compositions of the positive electrode active materials of Comparative Example 5 and Example 5.

Table 17 compares their electrochemical performance (capacity, rate capability, cycle life).

Table 18 presents a more detailed comparison of their electrochemical performance with an emphasis on rate capability.

**[table 16]**

| **Cathode** | **Chemical composition (at%)** | | | |
|---|---|---|---|---|
| | **Ni** | **Co** | **Mn** | **W** |
| **NCM900505** | **89.8** | **5.1** | **5.1** | **-** |
| **W shell-NCM900505** | **89.7** | **4.9** | **4.9** | **0.5** |

**[table 17]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM900505** | **General co-precipitation** | **232.9** | **95.5%** | **222.4** | **95.5%** | **215.3** | **92.4%** | **100** | **86.3%** |
| **W shell-NCM900505** | **W wet shell doping** | **233.2** | **96.7%** | **224.9** | **96.4%** | **218.2** | **93.6%** | **100** | **93.8%** |

**[table 18]**

| **Cathode** | **Precusor systhesis** | **0.2C Capacity (mAh/g)** | **0.5C Capacity (mAh/g)** | **1C Capacity (mAh/g)** | **2C Capacity (mAh/g)** | **5C Capacity (mAh/g)** | **10C Capacity (mAh/g)** |
|---|---|---|---|---|---|---|---|
| **NCM900505** | **General co-precipitation** | **221.9** | **215.4** | **209.8** | **199.7** | **176.4** | **161.2** |
| **W shell-NCM900505** | **W wet shell doping** | **222.9** | **218.1** | **214.4** | **204.2** | **180.9** | **169.1** |

In Comparative Example 5, a typical co-precipitation reaction was carried out. By contrast, in Example 5, although there is no substantial difference in initial capacity (0.1C) or high-rate charge/discharge capacity (0.2C, 0.5C) compared to Comparative Example 5, the capacity retention (at 0.5C, 100 cycles) is markedly higher in Example 5. This result demonstrates that, through the co-precipitation reaction in the composite metal hydroxide precursor of Example 5, orientation-type particles are formed, significantly enhancing the crystal structural stability of the precursor and thereby greatly improving its cycle life characteristics.

Meanwhile, Fig. 37 shows an SEM image of the positive electrode material synthesized from the composite metal hydroxide precursor of Example 5. As can be seen in the figure, when synthesized from an oriented precursor, the resulting positive electrode material also exhibits orientation, contributing to the improved electrochemical performance.

### [Comparative Example 5 and Example 6] [Ni_{0.90}Co_{0.05}Mn_{0.05}](OH)₂

Fig. 38 is an SEM image of a [Ni_{0.90}Co_{0.05}Mn_{0.05}](OH)₂ composite metal hydroxide precursor using an aluminum (Al) seed according to the sixth embodiment of the present invention.

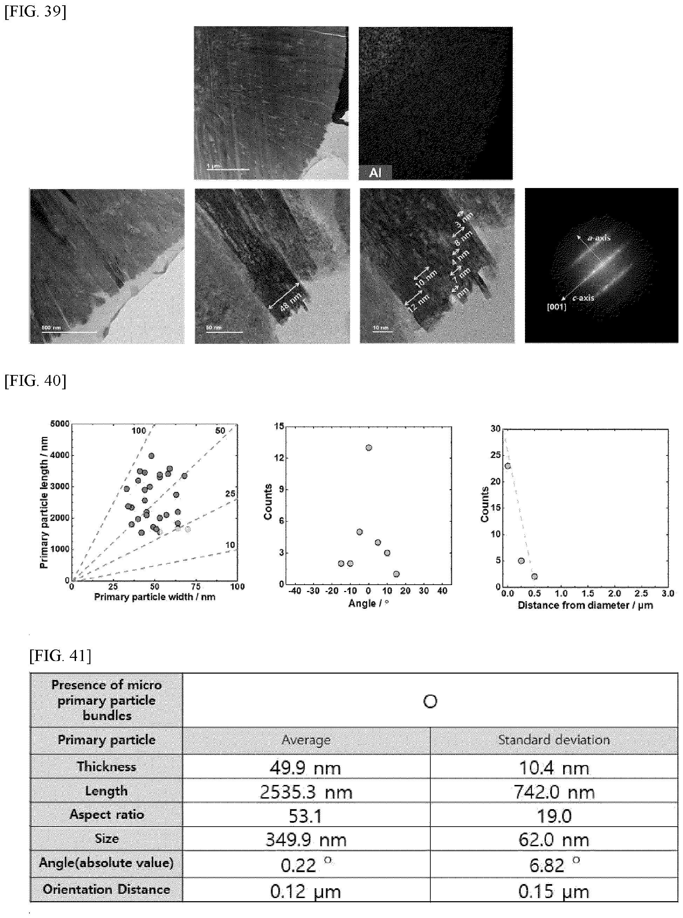

Fig. 39 is a TEM image of the composite metal hydroxide precursor according to the sixth embodiment of the present invention.

In the sixth embodiment, the [Ni_{0.90}Co_{0.05}Mn_{0.05}](OH)₂ composite metal hydroxide precursor is prepared using an aluminum (Al) seed. Referring to Figs. 38 and 39, it can be observed that the composite metal hydroxide precursor is composed of bundles of micro primary particles, each having a thickness of about 1-50 nm.

Moreover, orientation-type particles are observed not only in the primary particles-which are formed from bundles of micro primary particles-but also in the interior of the secondary particles, which comprise multiple primary particles. In other words, each primary particle is formed from bundles of micro primary particles, the major axis of the micro primary particles coincides with that of the primary particle, and the secondary particle-composed of a plurality of such primary particles-exhibits an oriented structure.

Fig. 40 is a graph illustrating the microstructure measurement results for the sixth embodiment of the present invention, and

Fig. 41 shows data derived from these microstructure measurements, including whether the micro primary particles form bundles and the thickness, length, aspect ratio, size, angle, and orientation distance of the primary particles.

Referring to these figures, one can determine the thickness, length, aspect ratio, size, angle, orientation distance, and so forth of the primary particles in Example 6. Specifically, the particle size (length/width) and aspect ratio can be ascertained, the orientation (degree of alignment) of the particles can be quantitatively analyzed, and the spatial distribution of how they are situated relative to their central axis can be confirmed. In Example 6, the aspect ratio is about 53.1, indicating that the primary particles display an oriented distribution.

Additionally, the average orientation distance of the primary particles is around 0.12 µm, which is significantly smaller compared to Comparative Example 1. Hence, in Example 6, the micro primary particles are clearly oriented and form bundles, in stark contrast to Comparative Example 1.

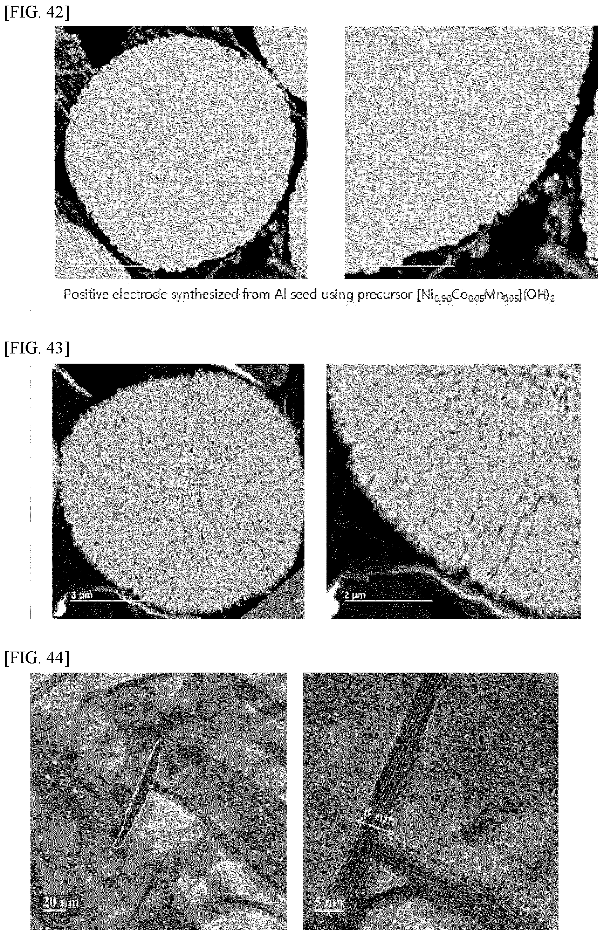

Fig. 42 is an SEM image of the positive electrode material synthesized from the composite metal hydroxide precursor of Example 6.

Meanwhile, Table 19 compares the chemical compositions of the positive electrode active materials according to Comparative Example 5 and Example 6 of the present invention.

Table 20 compares their electrochemical performance (capacity, rate capability, cycle life).

Table 21 provides a more focused comparison of their electrochemical performance, particularly with respect to rate capability.

**[table 19]**

| **Cathode** | **Chemical composition (at%)** | | | |
|---|---|---|---|---|
| | **Ni** | **Co** | **Mn** | **Al** |
| **NCM900505** | **89.8** | **5.1** | **5.1** | **-** |
| **Al seed-NCM900505** | **89.9** | **5.0** | **4.9** | **0.2** |

**[table 20]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM900505** | **General co-precipitation** | **232.9** | **95.5%** | **222.4** | **95.5%** | **215.3** | **92.4%** | **100** | **86.3%** |
| **Al seed-NCM900505** | **Al seed co-precipitation** | **233.7** | **96.1%** | **224.1** | **95.9%** | **217.3** | **93.0%** | **100** | **89.9%** |

**[table 21]**

| Cathode | Precursor synthesis | 0.2C Capacity (mAh/g) | 0.5C Capacity (mAh/g) | 1C Capacity (mAh/g) | 2C Capacity (mAh/g) | 5C Capacity (mAh/g) | 10C Capacity (mAh/g) |
|---|---|---|---|---|---|---|---|
| NCM900505 | General co-precipitation | 221.9 | 215.4 | 209.8 | 199.7 | 176.4 | 161.2 |
| Al seed-NCM900505 | Al seed co-precipitation | 223.9 | 218.4 | 212.3 | 204.3 | 182.4 | 168.7 |

In Comparative Example 5, a typical co-precipitation reaction was performed. By contrast, although there is no substantial difference between Comparative Example 5 and Example 6 in terms of initial capacity (0.1C) or high-rate charge/discharge capacity (0.2C, 0.5C), the capacity retention (at 0.5C, 100 cycles) in Example 6 is markedly higher than in Comparative Example 5. This demonstrates that, in the composite metal hydroxide precursor of Example 6, the formation of orientation-type particles via the co-precipitation reaction greatly enhances the crystal structural stability of the precursor, leading to significantly improved cycle life characteristics.

Meanwhile, Fig. 42 is an SEM image of the positive electrode material synthesized from the composite metal hydroxide precursor of Example 6. As can be seen from the figure, when synthesized from an oriented precursor, the resulting positive electrode material also exhibits orientation, thereby conferring superior electrochemical performance.

### [Comparative Example 6]

Fig. 43 is an SEM image of the [Ni_{0.90}Co_{0.10}](OH)₂ composite metal hydroxide precursor of Comparative Example 6.

Fig. 44 is a TEM image of the precursor in Comparative Example 6.

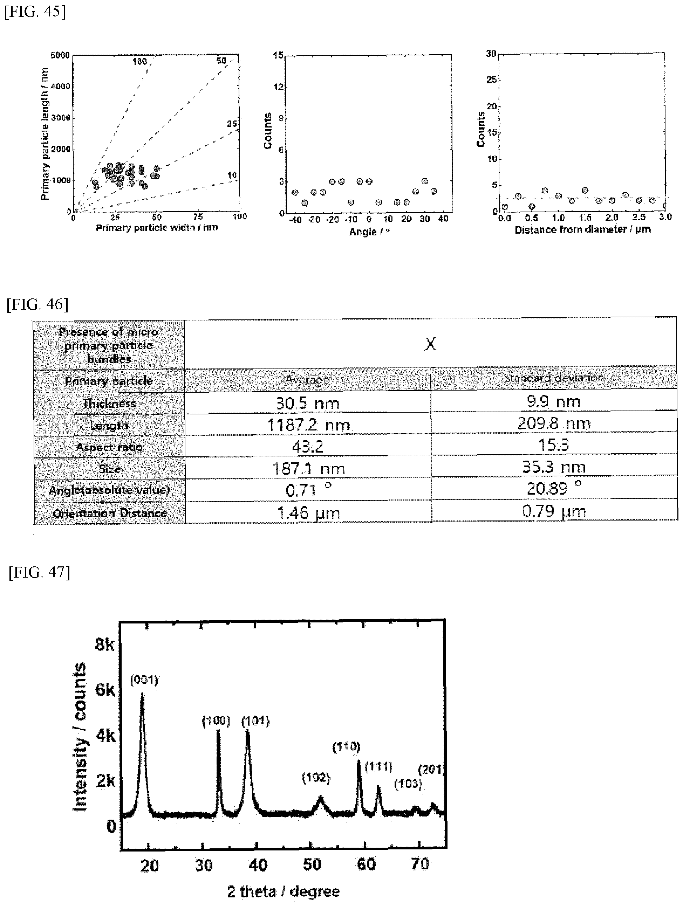

Fig. 45 is a graph illustrating microstructure measurement results for Comparative Example 6, and

Fig. 46 shows data derived from these microstructure measurements, including whether the micro primary particles form bundles and the thickness, length, aspect ratio, size, angle, and orientation distance of the primary particles.

Fig. 47 is a graph illustrating the XRD analysis results for Comparative Example 6.

As shown in Figs. 43 and 44, when a typical co-precipitation reaction is performed for the [Ni_{0.90}Co_{0.10}](OH)₂ composite metal hydroxide precursor of Comparative Example 6, the particle density decreases and the micro primary particles do not form bundles. In other words, the composite metal hydroxide precursor of Comparative Example 6 does not form any orientation-type particles and is not composed of bundles of micro primary particles.

Referring to Figs. 45 and 46, one can identify the thickness, length, aspect ratio, size, angle, orientation distance, and so on, for the primary particles in Comparative Example 6. From the figures, it is possible to determine the particle size (length/width) and aspect ratio, quantitatively analyze particle orientation (degree of orientation), and ascertain the spatial distribution of how the particles are situated relative to their central axis. In Comparative Example 6, the aspect ratio is about 43.2, and the primary particles are distributed fairly evenly, showing no orientation. Moreover, the average orientation distance is relatively large, about 1.46 µm.

This indicates that, when a general co-precipitation reaction is performed on a composite metal hydroxide precursor, the micro primary particles do not form bundles and exhibit no orientation.

Meanwhile, the XRD analysis results in Fig. 47 show I(101)/I(100)=0.98, indicating that I(101) is lower than I(100). In other words, the intensity corresponding to the (101) plane in the XRD pattern is lower than that corresponding to the (100) plane.

Thus, under typical co-precipitation conditions, the particles in Comparative Example 6 exhibit decreased density and do not form bundles of micro primary particles, leading to a precursor that does not contain orientation-type particles.

### [Comparative Example 7 and Example 7] [Ni_{0.90}Co_{0.10}](OH)₂

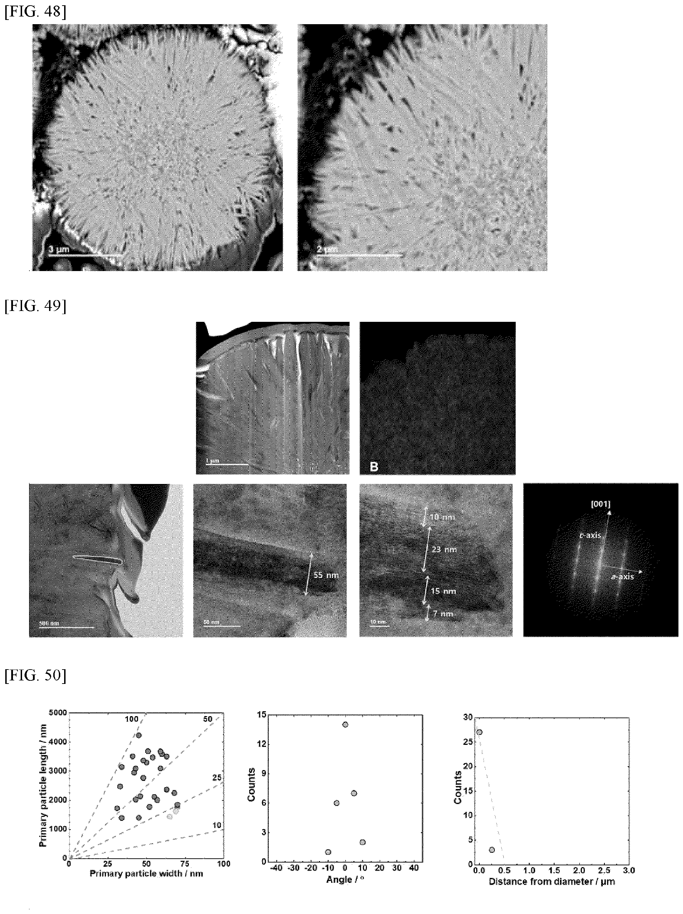

Fig. 48 is an SEM image of a [Ni_{0.90}Co_{0.10}](OH)₂ composite metal hydroxide precursor wet-doped with boron (B) according to the seventh embodiment of the present invention, and

Fig. 49 is a TEM image of the composite metal hydroxide precursor according to the seventh embodiment.

In the seventh embodiment, boron (B) is wet-doped into the [Ni_{0.90}Co_{0.10}](OH)₂ composite metal hydroxide precursor. Referring to Figs. 48 and 49, Example 7 also shows a composite metal hydroxide precursor composed of bundles of micro primary particles, each having a thickness of about 1-50 nm.

Moreover, orientation-type particles are observed not only in the primary particles-each formed from bundles of micro primary particles-but also in the interior of the secondary particles, which are composed of multiple primary particles. Thus, each primary particle consists of bundles of micro primary particles, with the major axis direction of the micro primary particles coinciding with that of the primary particle, and the secondary particles, formed from these primary particles, exhibit a high degree of orientation.

Fig. 50 is a graph illustrating the microstructure measurement results for the seventh embodiment of the present invention, and

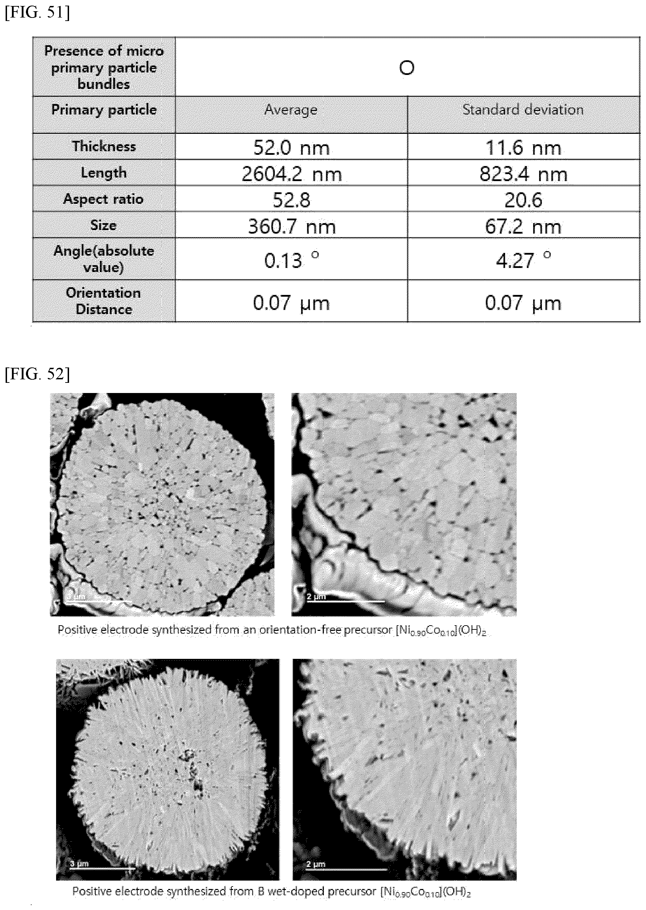

Fig. 51 shows data derived from these microstructure measurements, including whether the micro primary particles form bundles and the thickness, length, aspect ratio, size, angle, and orientation distance of the primary particles.

From these figures, one can determine the thickness, length, aspect ratio, size, angle, orientation distance, and so forth of the primary particles in Example 7. Specifically, one can evaluate the particle size (length/width) and aspect ratio, quantitatively analyze the orientation (degree of alignment) of the particles, and confirm how the particles are spatially distributed relative to their central axis. In Example 7, the aspect ratio is about 52.8, indicating that the primary particles exhibit an oriented distribution.

Additionally, the average orientation distance of the primary particles is about 0.07 µm, which is significantly smaller compared to Comparative Example 1. Hence, in Example 7, the micro primary particles clearly exhibit orientation and form bundles, in marked contrast to Comparative Example 1.

Fig. 52 shows SEM images of positive electrode materials synthesized from the composite metal hydroxide precursors of Comparative Example 7 and Example 7.

Meanwhile, Table 22 compares the chemical compositions of the positive electrode active materials from Comparative Example 7 and Example 7.

Table 23 compares their electrochemical performance (capacity, rate capability, cycle life).

Table 24 provides a more focused comparison of their electrochemical performance, particularly centered on rate capability.

**[table 22]**

| Cathode | Chemical composition (at%) | | |
|---|---|---|---|
| | Ni | Co | 6 |
| NC90 | 90.3 | 9.7 | - |
| B-NC90 | 90.2 | 9.9 | 0.9 |

**[table 23]**

| Cathode | Precusor systhesis | 0.1 C Disch. Capa (mAh/g) | Efficiency | 0.2C Capacity (mAh/g) | 0.2C/ 0.1C | 0.5C Capacity (mAh/g) | 0.5C/ 0.1C | Cycle | 0.5C Cycle Retention |
|---|---|---|---|---|---|---|---|---|---|
| NC90 | General co-precipitation | 229.7 | 96.8% | 225.4 | 98.1% | 217.2 | 94.6% | 100 | 80.3% |
| B-NC90 | 8 wet doping | 230.8 | 95.5% | 226.3 | 98.1% | 218.1 | 94.5% | 100 | 90.9% |

**[table 24]**

| Cathode | Precusor | 0.2C Capacity (mAh/g) | 0.5C Capacity (mAh/g) | 1C Capacity (mAh/g) | 2C Capacity (mAh/g) | 5C Capacity (mAh/g) | 10C Capacity (mAh/g) |
|---|---|---|---|---|---|---|---|
| NC90 | General co-precipitation | 226.2 | 218.1 | 211.8 | 198.3 | 173.7 | 161.4 |
| B-NC90 | B wet doping | 227.1 | 219.2 | 213.8 | 204.3 | 178.8 | 167.3 |

In Comparative Example 7, a typical co-precipitation reaction was performed. Compared to that, although there is no substantial difference between Comparative Example 7 and Example 7 in terms of initial capacity (0.1C) or high-rate charge/discharge capacity (0.2C, 0.5C), the capacity retention (at 0.5C, 100 cycles) in Example 7 is markedly higher than in Comparative Example 7. This indicates that, through the co-precipitation reaction employed in Example 7, orientation-type particles are formed in the composite metal hydroxide precursor, which significantly enhances the crystal structural stability of the precursor and thus improves its cycle life characteristics.

Meanwhile, Fig. 52 shows SEM images of the positive electrode materials synthesized from the composite metal hydroxide precursors of Comparative Example 7 and Example 7. As seen in Fig. 52, the positive electrode material of Comparative Example 7-synthesized from a non-oriented precursor-also does not exhibit orientation, resulting in relatively poor electrochemical performance (capacity, rate capability, and cycle life). By contrast, when the positive electrode material is synthesized from the oriented precursor of Example 7, it likewise exhibits orientation, thereby demonstrating superior electrochemical performance.

### [Comparative Example 8 and Example 8] [Ni_{0.90}Co_{0.10}](OH)₂

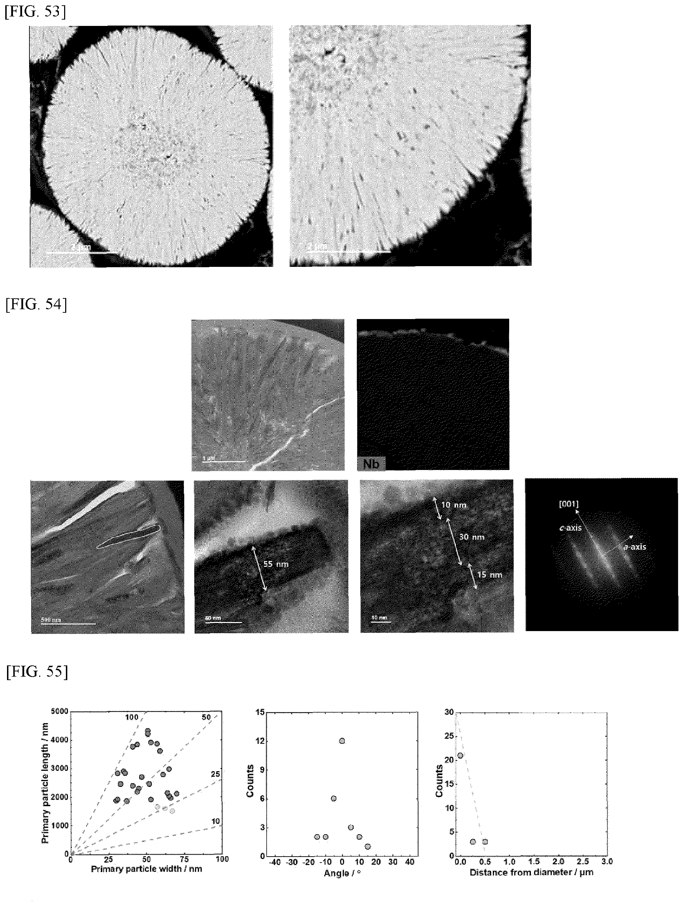

Fig. 53 is an SEM image of a [Ni_{0.90}Co_{0.10}](OH)₂ composite metal hydroxide precursor wet-doped with niobium (Nb) according to the eighth embodiment of the present invention, and

Fig. 54 is a TEM image of the composite metal hydroxide precursor according to the eighth embodiment.

In the eighth embodiment, the [Ni_{0.90}Co_{0.10}](OH)₂ composite metal hydroxide precursor is wet-doped with niobium (Nb). As seen in Figs. 53 and 54, Example 8 also exhibits a composite metal hydroxide precursor composed of bundles of micro primary particles, each having a thickness of about 1-50 nm.

Additionally, orientation-type particles are observed not only in the primary particles-each consisting of bundles of micro primary particles-but also within the secondary particles that comprise multiple primary particles. In other words, each primary particle is formed from bundles of micro primary particles, the major axis of the micro primary particles aligns with that of the primary particle, and the secondary particles, which are made up of these primary particles, exhibit a high degree of orientation.

Fig. 55 is a graph illustrating the microstructure measurement results for the eighth embodiment of the present invention, and

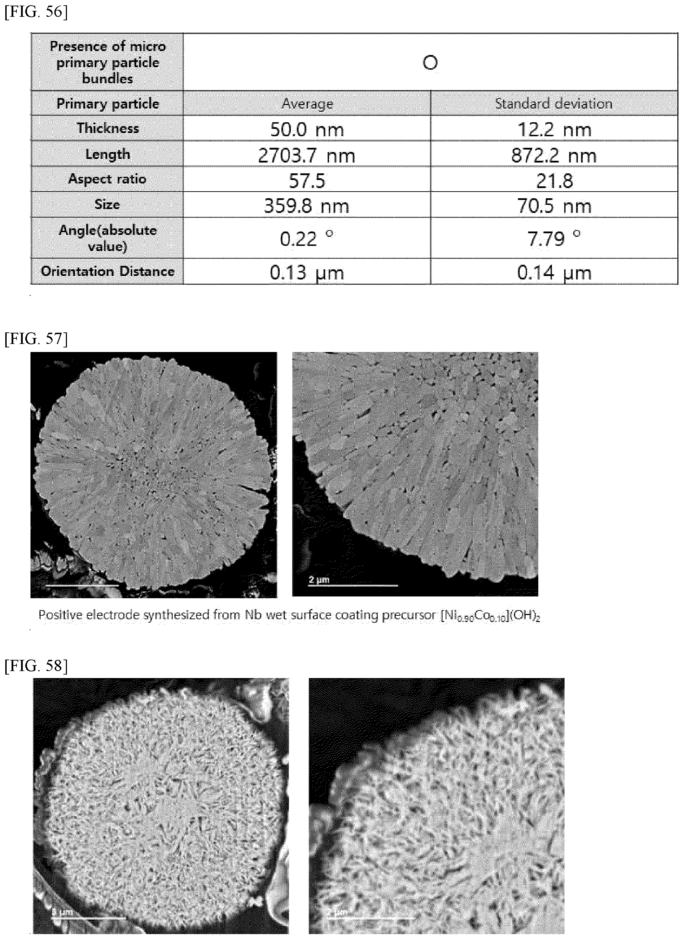

Fig. 56 shows data derived from these microstructure measurements, including whether the micro primary particles form bundles and the thickness, length, aspect ratio, size, angle, and orientation distance of the primary particles.

Referring to these figures, one can determine the thickness, length, aspect ratio, size, angle, orientation distance, and other characteristics of the primary particles in Example 8. Specifically, the particle size (length/width) and aspect ratio can be identified, the orientation (degree of alignment) of the particles can be quantitatively analyzed, and the spatial distribution of how the particles are positioned relative to their central axis can be confirmed. In Example 8, the aspect ratio is about 57.5, indicating that the primary particles exhibit an oriented distribution.

Moreover, the average orientation distance of the primary particles is about 0.13 µm, which is significantly smaller compared to Comparative Example 1. Hence, in Example 8, the micro primary particles clearly exhibit orientation and form bundles, in distinct contrast to Comparative Example 1.

Fig. 57 is an SEM image of a positive electrode material synthesized from the composite metal hydroxide precursor of Example 8.

Meanwhile, Table 25 compares the chemical compositions of the positive electrode active materials of Comparative Example 8 and Example 8 of the present invention.

Table 26 compares their electrochemical performance (capacity, rate capability, and cycle life).

Table 27 presents a more focused comparison of their electrochemical performance, particularly centered on rate capability.

**[table 25]**

| Cathode | Chemical composition (at%) | | | |
|---|---|---|---|---|
| | Ni | Co | Al | Nb |
| NCA90 | 89.7 | 8.8 | 1.5 | - |
| Nb coated-NCA90 | 89.5 | 8.8 | 1.3 | 0.4 |

**[table 26]**

| Cathode | Precusor systhesis | 0.1 C Disch. Capa (mAh/q) | Efficiency | 0.2C Capacity (mAh/g) | 0.2C/ 0.1C | 0.5C Capacity (mAh/g) | 0.5C/ 0.1C | Cycle | 0.5C Cycle Retention |
|---|---|---|---|---|---|---|---|---|---|
| NCA90 | General co-precipitation | 228.6 | 96.4% | 224.2 | 98.1% | 215.7 | 94.4% | 100 | 83.7% |
| Nb coated-NCA90 | Nb wet surface coating | 229.4 | 96.2% | 225.7 | 98.4% | 217.2 | 94.7% | 100 | 92.1% |

**[table 27]**

| Cathode | Precursor systhesis | 0.2 Capacity (mAh/g) | 0.5C Capacity (mAh/g) (0.5C/0.2C) | 1C Capacity (mAh/g) (1C/0.2C) | 2C Capacity (mAh/g) (2C/0.2C) | 5C Capacity (mAh/g) (5C/0.2C)10C | Capacity (mAh/g) (5C/0.2C) |
|---|---|---|---|---|---|---|---|
| NCA90 | General co-precipitation | 225.1 | 217.6 | 210.9 | 197.4 | 172.1 | 159.5 |
| Nb coated-NCA90 | Nb wet surface coating | 227.0 | 219.4 | 212.9 | 205.1 | 179.2 | 169.4 |

In Comparative Example 8, a typical co-precipitation reaction was performed. By contrast, in Example 8, although there is no marked difference in initial capacity (0.1C) or high-rate charge/discharge capacity (0.2C, 0.5C) compared to Comparative Example 8, the capacity retention after cycling (0.5C, 100 cycles) is noticeably higher in Example 8. This indicates that, through the co-precipitation process in Example 8, orientation-type particles are formed in the composite metal hydroxide precursor, significantly improving the crystal structural stability of the precursor and thus markedly enhancing its cycle life characteristics.

Meanwhile, as shown in Fig. 57, when the positive electrode material is synthesized from the oriented precursor of Example 8, the resulting cathode material also exhibits orientation, which in turn enhances its electrochemical performance.

### [Comparative Example 9] [Ni_{0.90}Mn_{0.10}](OH)₂

Fig. 58 is an SEM image of the [Ni_{0.90}Mn_{0.10}](OH)₂ composite metal hydroxide precursor of Comparative Example 9.

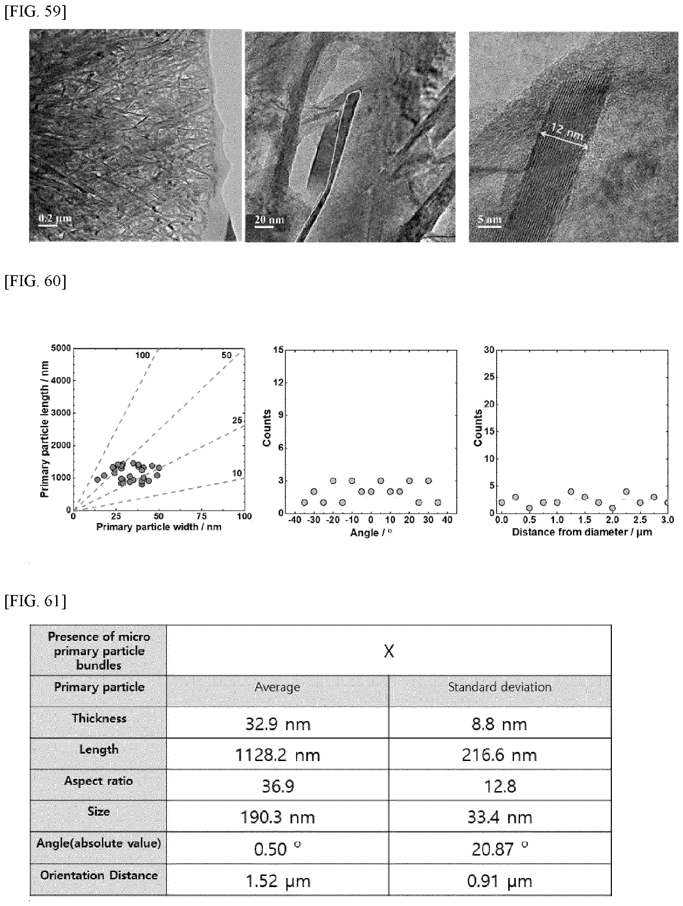

Fig. 59 is a TEM image of the precursor in Comparative Example 9.

Fig. 60 is a graph illustrating microstructure measurement results for Comparative Example 9, and

Fig. 61 shows data derived from these microstructure measurements, including whether the micro primary particles form bundles, and the thickness, length, aspect ratio, size, angle, and orientation distance of the primary particles.

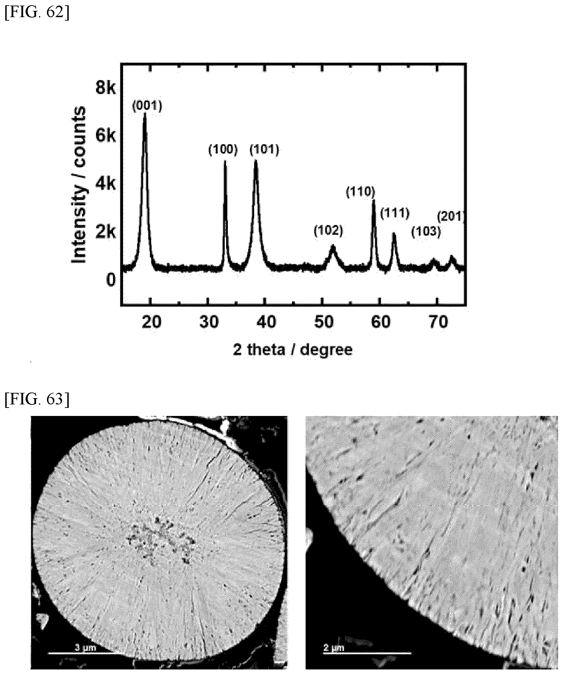

Fig. 62 is a graph illustrating the XRD analysis results for Comparative Example 9.

As shown in Figs. 58 and 59, when a typical co-precipitation (co-precipitation synthesis) reaction is performed on the [Ni_{0.90}Mn_{0.10}](OH)₂ composite metal hydroxide precursor of Comparative Example 9, the particle density decreases, and the micro primary particles do not form bundles. In other words, the composite metal hydroxide precursor of Comparative Example 9 does not form orientation-type particles and is not composed of bundles of micro primary particles.

Referring to Figs. 60 and 61, one can determine the thickness, length, aspect ratio, size, angle, orientation distance, etc., of the primary particles in Comparative Example 9. From these figures, it is possible to ascertain the particle size (length/width) and aspect ratio, quantitatively analyze the orientation (degree of alignment) of the particles, and confirm the spatial distribution of how the particles are situated relative to their central axis. In Comparative Example 9, the aspect ratio is about 36.9, and the primary particles show no orientation, being uniformly distributed. In addition, the average orientation distance of the primary particles is about 1.52 µm, which is relatively large.

Moreover, when the solid-liquid synthesis (high slurry concentration) is not sufficiently high-e.g., about 0.15 kg of precursor per liter of solution-micro primary particles fail to bundle together and form orientation-type particles effectively. Therefore, raising the slurry concentration or adjusting the microstructure via doping with foreign elements or a seed co-precipitation method is necessary to achieve orientation.

Hence, under a typical co-precipitation reaction, the micro primary particles do not form bundles and exhibit no orientation in the composite metal hydroxide precursor.

Meanwhile, from the XRD analysis results shown in Fig. 62, I(101)/I(100)=0.99, meaning that 1(101) is lower than I(100). That is, in the XRD pattern, the intensity corresponding to the (101) plane is lower than that corresponding to the (100) plane.

Thus, in Comparative Example 9, a typical co-precipitation reaction leads to low-density particles and no bundle formation by micro primary particles. As a result, the composite metal hydroxide precursor in Comparative Example 9 forms no orientation-type particles and does not comprise bundles of micro primary particles.

### [Comparative Example 10 and Example 9] [Ni_{0.90}Mn_{0.10}](OH)₂

Fig. 63 is an SEM image of [Ni_{0.90}Mn_{0.10}](OH)₂ composite metal hydroxide precursor obtained by performing a highly concentrated co-precipitation reaction according to the ninth embodiment of the present invention.

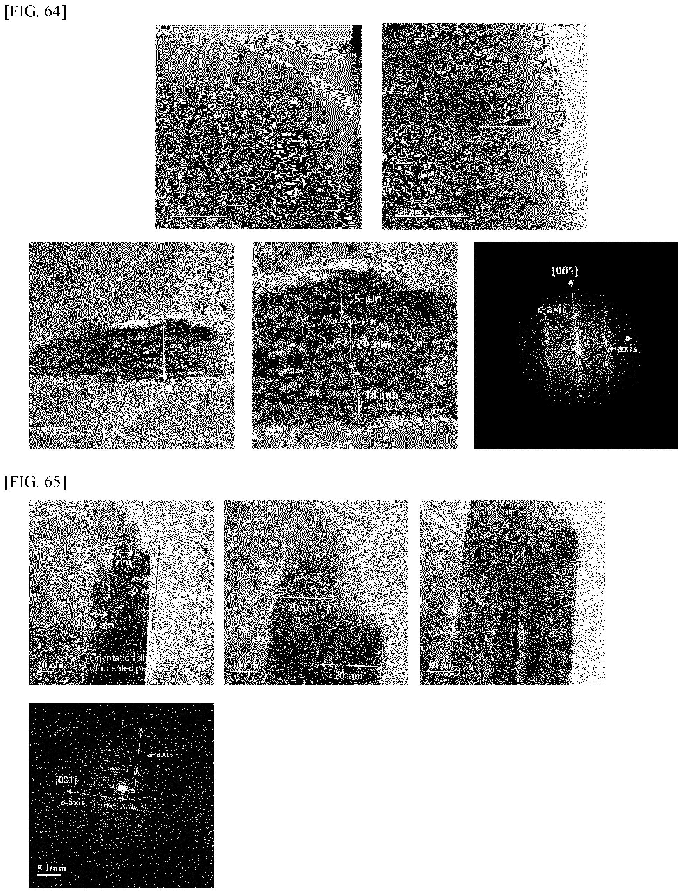

Fig. 64 is a TEM image of the composite metal hydroxide precursor according to the ninth embodiment.

Fig. 65 is another TEM image of the composite metal hydroxide precursor according to the ninth embodiment of the present invention.

In the ninth embodiment of the present invention, a Highly concentrated co-precipitation reaction is performed on the [Ni_{0.90}Mn_{0.10}](OH)₂ composite metal hydroxide precursor. Referring to Figs. 63 and 64, Example 9 likewise shows a composite metal hydroxide precursor composed of bundles of micro primary particles. Moreover, these micro primary particles have a thickness of about 1-50 nm.

Furthermore, orientation-type particles are observed not only in the primary particles-each formed by bundles of micro primary particles-but also within the secondary particles, which comprise multiple primary particles. In other words, each primary particle is made up of bundles of micro primary particles, the major axis direction of the micro primary particles aligns with that of the primary particle, and the secondary particles composed of these primary particles exhibit orientation.

Referring to Fig. 65, because bundles of micro primary particles form orientation-type particles, it can be challenging to delineate the boundaries between individual micro primary particles clearly. However, in certain micro primary particles located inside or on the surface of the orientation-type particle, one can confirm boundary interfaces between the micro primary particles, indicating the presence of primary particles composed of bundles of micro primary particles. Meanwhile, one can see from the figures that, in composite metal hydroxides with a relatively high Mn content, the micro primary particles tend to be thicker compared to those in composite metal hydroxides with a relatively high Ni content.

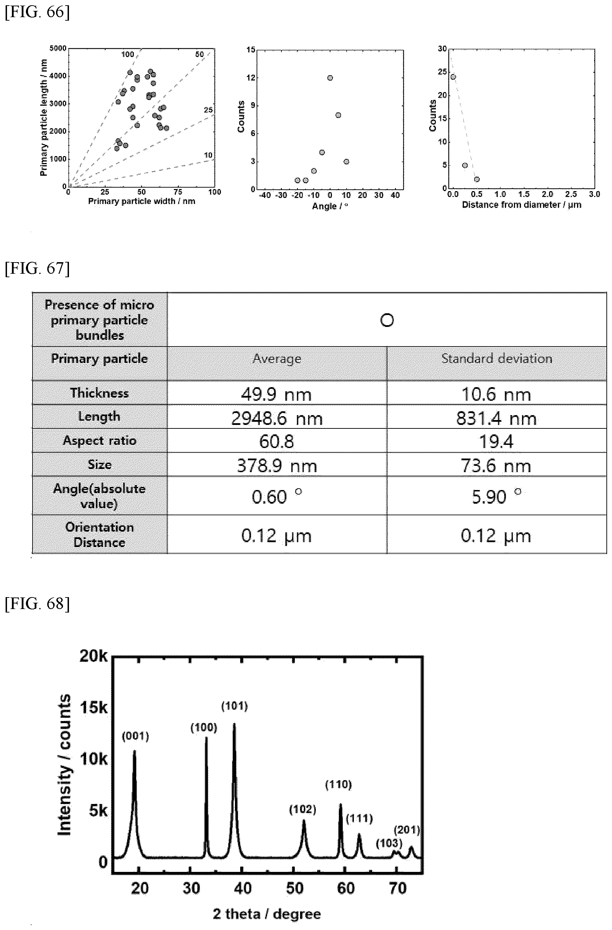

Fig. 66 is a graph showing the microstructure measurement results for the ninth embodiment of the present invention, and

Fig. 67 provides data based on these microstructure measurements-specifically, whether the micro primary particles form bundles, and their thickness, length, aspect ratio, size, angle, orientation distance, and so forth.

Fig. 68 is a graph illustrating XRD analysis results for the ninth embodiment of the present invention.

From these figures, one can confirm the thickness, length, aspect ratio, size, angle, orientation distance, etc. of the primary particles in Example 9. In other words, by examining the particle size (length/width) and aspect ratio, quantitatively analyzing the orientation (degree of alignment), and identifying how the particles are spatially arranged relative to their central axis, one can see that Example 9 has an aspect ratio of about 60.8, with the primary particles distributed in an oriented manner.

In addition, the average orientation distance of the primary particles is about 0.12 µm, which is significantly smaller compared to the comparative example, indicating that the micro primary particles in Example 9 show a high degree of orientation and form bundles. According to the XRD analysis results in Fig. 68, I(101)/I(100)=1.108, meaning I(101) is higher than I(100)-i.e., the intensity corresponding to the (101) plane in the XRD pattern is higher than that corresponding to the (100) plane.

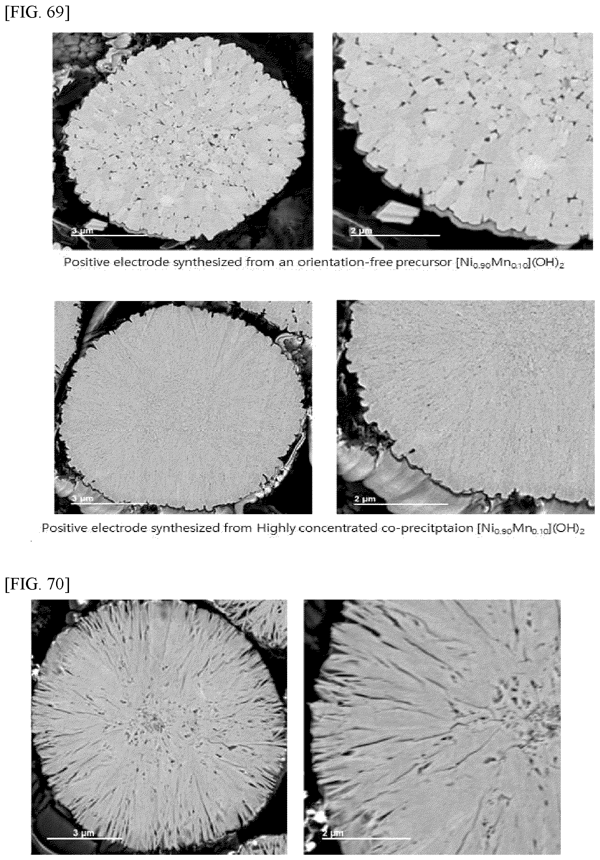

Fig. 69 shows SEM images of positive electrode materials synthesized from the composite metal hydroxide precursors of Comparative Example 10 and Example 9.

Meanwhile, Table 28 compares the chemical compositions of the positive electrode active materials obtained according to Comparative Example 10 and Example 9 of the present invention.

Table 29 compares their electrochemical performance (capacity, rate capability, and cycle life).

Table 30 presents a more detailed comparison of their electrochemical performance, focusing particularly on rate capability.

**[table 28]**

| Cathode | Chemical composition (at%) | |
|---|---|---|
| | Ni | Mn |
| Non-oriented NM90 | 89.9 | 10.1 |
| Highly concentrated co-precipitation NM90 | 90.1 | 9.9 |

**[table 29]**

| Cathode | Precusor systhesis | 0.1 C Disch. Capa (mAh/g) | Efficiency | 0.2C Capacity (mAh/g) | 0.2C/ 0.1C | 0.5C Capacity (mAh/g) | 0.5C/ 0.1C | Cycle | 0.5C Cycle Retention |
|---|---|---|---|---|---|---|---|---|---|
| Non-oriented NM90 | General co-precipitation | 230.4 | 94.9% | 223.1 | 96.7% | 214.1 | 94.2% | 100 | 88.4% |
| Highly concentrated co-precipitation NM90 | Highly concentrated co-precipitation | 231.4 | 96.9% | 223.1 | 96.5% | 218.5 | 94.5% | 100 | 92.1% |

**[table 30]**

| Cathode | Precusor systhesis | 0.2C Capacity (mAh/g) | 0.5C | 1C Capacity (mAh/g) Capacity (mAh/g) | 2C Capacity (mAh/g) | 5C Capacity (mAh/g) | 10C Capacity (mAh/g) |
|---|---|---|---|---|---|---|---|
| Non-oriented NM90 | General co-precipitation | 224.1 | 213.3 | 208.1 | 195.4 | 170.7 | 158.8 |
| Highly concentrated co-precipitation NM90 | Highly concentrated co-precipitation | 224.8 | 217.6 | 212.4 | 201.6 | 177.5 | 167.3 |

n Comparative Example 10, a typical co-precipitation reaction was carried out. By contrast, Example 9 shows a noticeable difference in the initial capacity (0.1C) and high-rate charge/discharge capacity (0.2C, 0.5C) compared to Comparative Example 10, and especially demonstrates a markedly higher capacity retention (at 0.5C, 100 cycles). This indicates that the formation of orientation-type particles in the composite metal hydroxide precursor of Example 9, achieved through a Highly concentrated co-precipitation reaction, significantly enhances the crystal structural stability of the precursor, thereby greatly improving its cycle life characteristics.

Meanwhile, Fig. 69 shows SEM images of positive electrode materials synthesized from the precursors of Comparative Example 10 and Example 9. As seen in Fig. 69, the positive electrode material of Comparative Example 10-produced from a non-oriented precursor-also lacks orientation, resulting in relatively poor electrochemical performance (capacity, rate capability, and cycle life). In contrast, the positive electrode material synthesized from the oriented precursor of Example 9 exhibits orientation as well, thereby delivering superior electrochemical performance.

### [Comparative Example 11 and Example 10]

Fig. 70 is an SEM image of the concentration-gradient [Ni_{0.90}Mn_{0.10}](OH)₂ composite metal hydroxide precursor according to the tenth embodiment of the present invention.

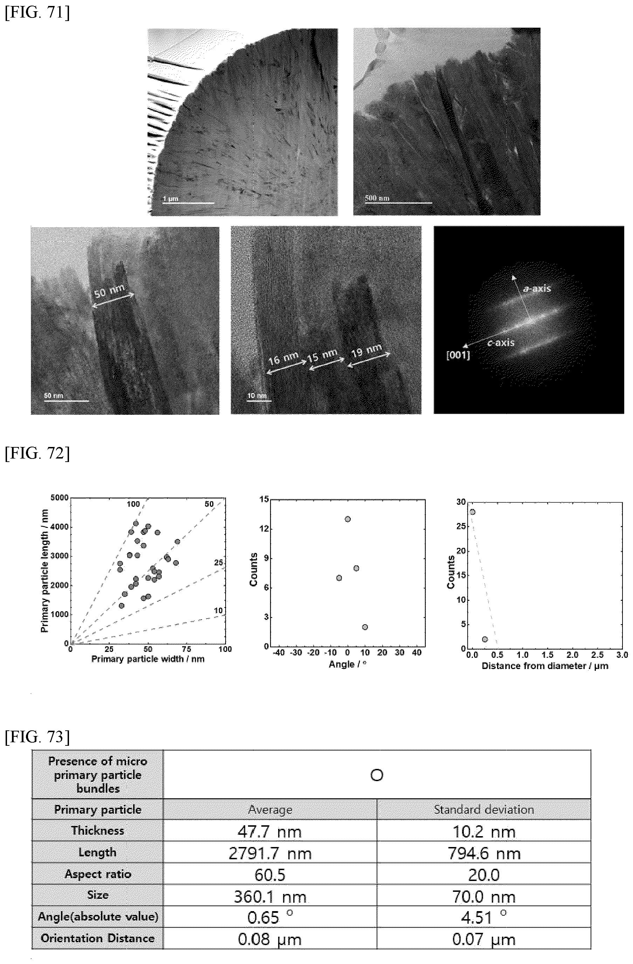

Fig. 71 is a TEM image of the composite metal hydroxide precursor in Example 10.

In the tenth embodiment, the concentration-gradient [Ni_{0.90}Mn_{0.10}](OH)₂ composite metal hydroxide precursor is employed. As seen in the figures, Example 10 likewise exhibits a composite metal hydroxide precursor composed of bundles of micro primary particles, with each micro primary particle having a thickness of about 1-50 nm.

Moreover, orientation-type particles are observed not only in the primary particles-each formed by bundles of micro primary particles-but also within the secondary particles that comprise multiple primary particles. In other words, each primary particle consists of bundles of micro primary particles, the major axis direction of the micro primary particles aligns with that of the primary particle, and the secondary particles, which are composed of these primary particles, exhibit an oriented structure.

Fig. 72 is a graph illustrating the microstructure measurement results for Example 10, and

Fig. 73 shows data derived from these microstructure measurements-specifically, whether the micro primary particles form bundles and the thickness, length, aspect ratio, size, angle, and orientation distance of the primary particles.

From these figures, one can determine the thickness, length, aspect ratio, size, angle, orientation distance, and so forth of the primary particles in Example 10. More specifically, the particle size (length/width) and aspect ratio can be assessed, the orientation (degree of alignment) of the particles can be quantitatively analyzed, and the spatial distribution of how the particles are situated with respect to their central axis can be verified. In Example 10, the aspect ratio is about 60.5, demonstrating that the primary particles have an oriented distribution.

Additionally, the average orientation distance of the primary particles is about 0.08 µm, which is significantly reduced compared to the comparative example. Hence, in Example 10, the micro primary particles clearly exhibit orientation and form bundles, in stark contrast to the comparative example.

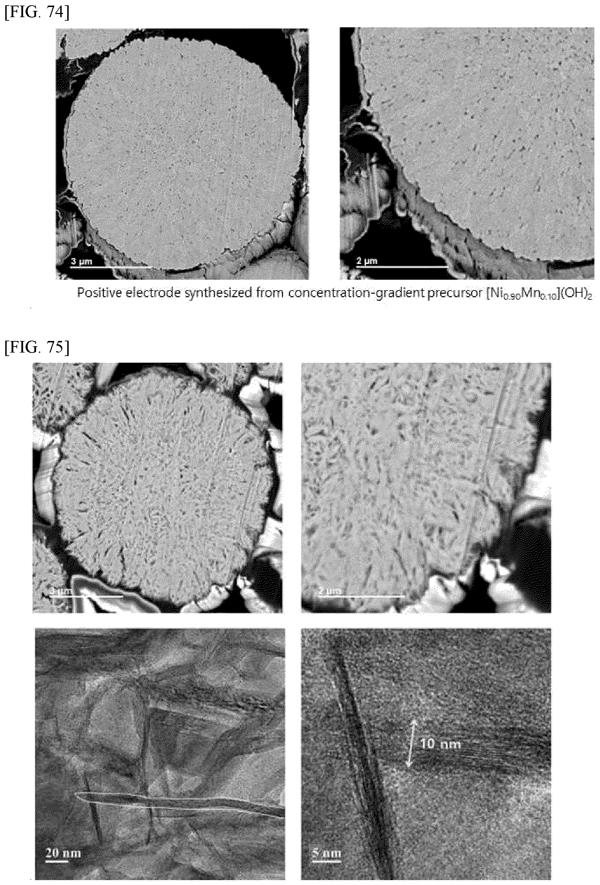

Fig. 74 is an SEM image of the positive electrode material synthesized from the composite metal hydroxide precursor of Example 10.

Meanwhile, Table 31 compares the chemical compositions of the positive electrode active materials obtained from Comparative Example 11 and Example 10 of the present invention.

Table 32 compares their electrochemical performance (capacity, rate capability, cycle life).

Table 33 provides a more focused comparison of their electrochemical performance, particularly highlighting rate capability.

**[table 31]**

| **Cathode** | **Chemical composition (at%)** | |
|---|---|---|
| | **Ni** | **Mn** |
| **NM90** | **89.9** | **10.1** |
| **Gradient NM90** | **89.8** | **10.2** |

**[table 32]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NM90** | **General co-precipitation** | **232.6** | **98.1%** | **227.0** | **97.6%** | **208.2** | **89.5%** | **100** | **80.7%** |
| **Gradient NM90** | **Concentration gradient co-precipitation** | **233.9** | **98.5%** | **228.2** | **97.6%** | **211.3** | **90.3%** | **100** | **92.0%** |

**[table 33]**

| **Cathode** | **Precursor systhesis** | **0.2C Capacity (mAh/g)** | **0.5C Capacity (mAh/g)** | **1C Capacity (mAh/g)** | **2C Capacity(mAh/g)** | **5C Capacity (mAh/g)** | **10C Capacity (mAh/g)** |
|---|---|---|---|---|---|---|---|
| **NM90** | **General co-precipitation** | **224.1** | **213.3** | **208.1** | **195.4** | **170.7** | **158.8** |
| **Gradient NM90** | **Concentration gradient co-precipitation** | **226.7** | **215.7** | **211.8** | **200.2** | **178.4** | **164.4** |

In Comparative Example 11, a typical co-precipitation reaction was carried out. By contrast, in Example 10, there is a noticeable difference in initial capacity (0.1C) and high-rate charge/discharge capacity (0.2C, 0.5C) compared to Comparative Example 11. In particular, the capacity retention (at 0.5C, 100 cycles) in Example 10 is markedly higher than that in Comparative Example 11. This indicates that, through the co-precipitation reaction in the composite metal hydroxide precursor of Example 10, orientation-type particles are formed, significantly enhancing the crystal structural stability of the precursor and thus greatly improving its cycle life characteristics.

Meanwhile, Fig. 74 shows that when the positive electrode material is synthesized from the oriented precursor of Example 10, the resulting cathode material likewise exhibits orientation, thereby demonstrating superior electrochemical performance.

### [Comparative Example 12] [Ni_{0.70}Co_{0.10}Mn_{0.20}](OH)₂

Fig. 75 shows SEM and TEM images of the [Ni_{0.70}Co_{0.10}Mn_{0.20}](OH)₂ composite metal hydroxide precursor of Comparative Example 12.

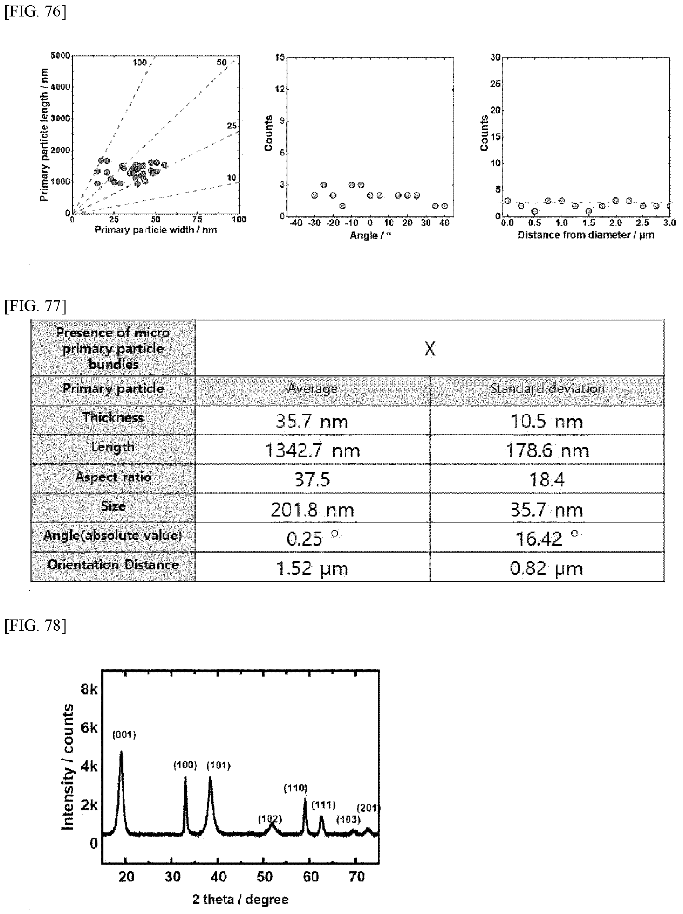

Fig. 76 is a graph illustrating the microstructure measurement results for Comparative Example 12, and

Fig. 77 provides data derived from those microstructure measurements, including whether the micro primary particles form bundles and the thickness, length, aspect ratio, size, angle, and orientation distance of the primary particles.

Fig. 78 is a graph illustrating the XRD analysis results for Comparative Example 12.

As shown in Figs. 75 and 76, when a typical co-precipitation reaction is performed on the [Ni_{0.70}Co_{0.10}Mn_{0.20}](OH)₂ composite metal hydroxide precursor of Comparative Example 12, the particle density decreases, and the micro primary particles do not form bundles. In other words, the composite metal hydroxide precursor of Comparative Example 12 does not form any orientation-type particles and is not composed of bundles of micro primary particles.

Referring to Figs. 76 and 77, one can determine the thickness, length, aspect ratio, size, angle, orientation distance, etc. for the primary particles in Comparative Example 12. From these figures, it is possible to measure the particle size (length/width) and aspect ratio, quantitatively analyze the orientation (degree of alignment) of the particles, and confirm the spatial distribution of how the particles are positioned relative to their central axis. In Comparative Example 12, the aspect ratio is about 37.5, and the primary particles exhibit no orientation, being uniformly distributed. Moreover, the average orientation distance is about 1.52 µm, which is relatively large.

Thus, when a typical co-precipitation reaction is conducted on this composite metal hydroxide precursor, the micro primary particles do not form bundles and do not show any orientation.

Meanwhile, the XRD analysis results in Fig. 78 indicate I(101)/I(100)=0.98. This signifies that 1(101) is lower than I(100)-i.e., the intensity corresponding to the (101) plane is lower than that for the (100) plane in the XRD pattern.

Hence, under standard co-precipitation conditions, [Ni_{0.70}Co_{0.10}Mn_{0.20}](OH)₂ composite metal hydroxide precursor of Comparative Example 12 exhibits low particle density, lacks bundles of micro primary particles, and does not form orientation-type particles.

### [Comparative Example 13 and Example 11]

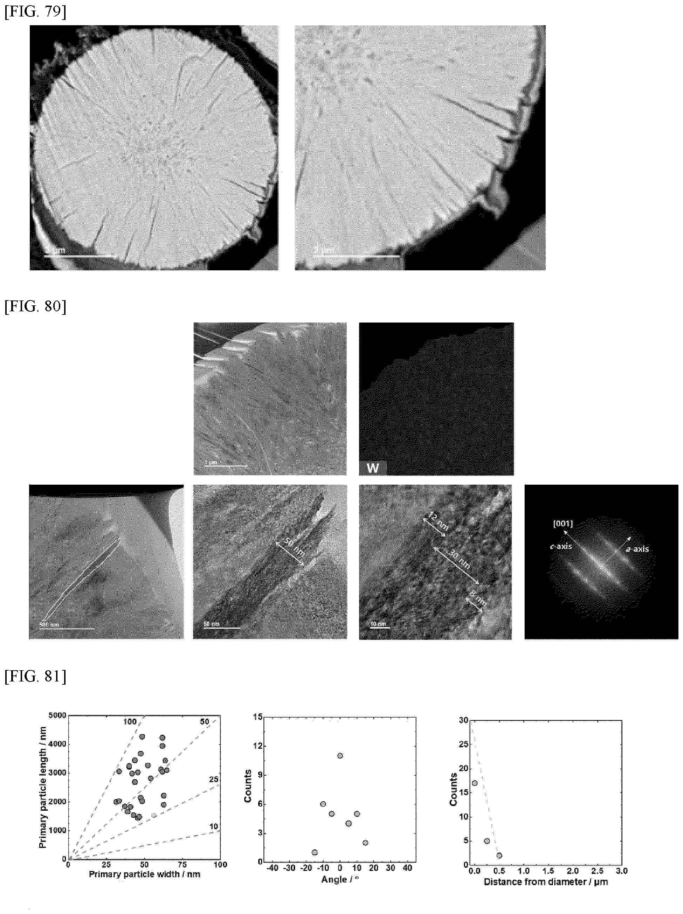

Fig. 79 is an SEM image of the [Ni_{0.70}Co_{0.10}Mn_{0.20}](OH)₂ composite metal hydroxide precursor wet-doped with tungsten (W) according to the eleventh embodiment of the present invention.

Fig. 80 is a TEM image of the composite metal hydroxide precursor according to the eleventh embodiment.

In the eleventh embodiment, the [Ni_{0.70}Co_{0.10}Mn_{0.20}](OH)₂ composite metal hydroxide precursor is wet-doped with tungsten (W). As shown in these figures, Example 11 also exhibits a composite metal hydroxide precursor composed of bundles of micro primary particles, each having a thickness of about 1-50 nm.

Moreover, orientation-type particles are observed not only in the primary particles-each of which is formed by bundles of micro primary particles-but also within the secondary particles, which consist of multiple primary particles. In other words, each primary particle is formed from bundles of micro primary particles, the major axis direction of the micro primary particles coincides with that of the primary particle, and the secondary particles (composed of these primary particles) exhibit orientation.

Fig. 81 is a graph illustrating the microstructure measurement results for the eleventh embodiment of the present invention, and

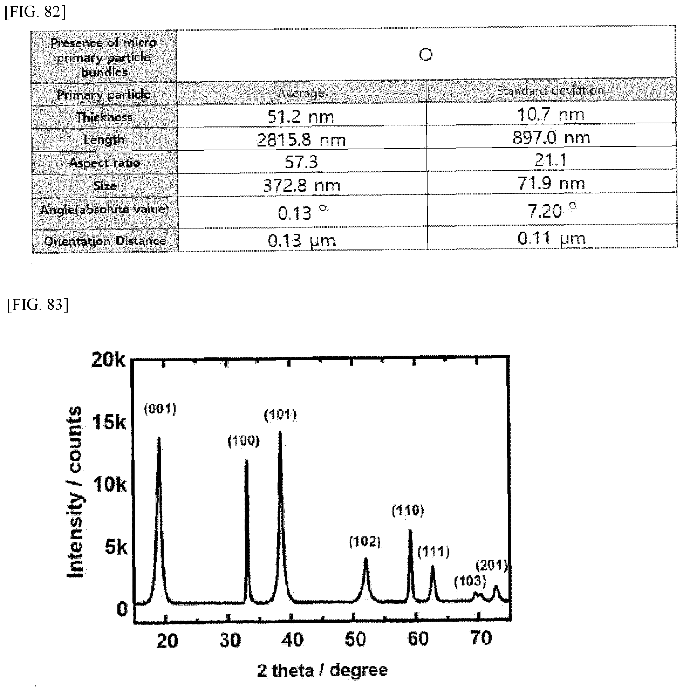

Fig. 82 presents data derived from these microstructure measurements, specifically whether the micro primary particles form bundles, and the thickness, length, aspect ratio, size, angle, and orientation distance of the primary particles.

Referring to these figures, one can determine the thickness, length, aspect ratio, size, angle, orientation distance, etc., of the primary particles in Example 11. In particular, the particle size (length/width) and aspect ratio can be quantified, the orientation (degree of alignment) of the particles can be analyzed, and the spatial distribution of how the particles are situated relative to their central axis can be confirmed. In Example 11, the aspect ratio is about 57.3, indicating that the primary particles exhibit an oriented distribution.

Furthermore, the average orientation distance of the primary particles is around 0.13 µm, a significant reduction compared to the comparative example, clearly indicating that the micro primary particles in Example 11 are strongly oriented and form bundles.

Referring to Fig. 83, the XRD analysis results show I(101)/I(100)=1.13. This indicates that I(101) is higher than I(100), meaning that the intensity corresponding to the (101) plane in the XRD pattern is greater than that corresponding to the (100) plane-further evidence of an oriented crystal structure.

Meanwhile, Table 34 compares the chemical compositions of the positive electrode active materials according to Comparative Example 13 and Example 11 of the present invention.

Table 35 compares their electrochemical performance (capacity, rate capability, and cycle life).

Table 36 provides a more focused comparison of their electrochemical performance, particularly centered on rate capability.

**[table 34]**

| **Cathode** | **Chemical composition (at%)** | | | |
|---|---|---|---|---|
| | **Ni** | **Co** | **Mn** | **W** |
| **NCM712** | **70.8** | **9.8** | **19.4** | - |
| **W-NCM712** | **70.6** | **9.6** | **19.4** | **0.4** |

**[table 35]**

| **Cathode** | **Precusor synthesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **NCM712** | **General co-precipitation** | **220.7** | **95.7%** | **212.7** | **96.4%** | **201.3** | **91.2%** | **100** | **85.7%** |
| **W-NCM712** | **W wet doping** | **221.9** | **96.1%** | **214.5** | **96.7%** | **203.7** | **91.8%** | **100** | **91.3%** |

**[table 36]**

| **Cathode** | **Precusor systhesis** | **0.2C Capacity (mAh/g)** | **0.5C Capacity (mAh/g)** | **1C Capacity (mAh/g)** | **2C Capacity (mAh/g)** | **5C Capacity (mAh/g)** | **10C Capacity (mAh/g)** |
|---|---|---|---|---|---|---|---|
| **NCM712** | **General co-precipitation** | **211.8** | **202.4** | **194.3** | **184.3** | **161.4** | **154.0** |
| **W-NCM712** | **W wet doping** | **213.6** | **205.7** | **196.5** | **188.9** | **167.2** | **159.3** |

In Comparative Example 13, a typical co-precipitation reaction was conducted. By contrast, Example 11 shows a notable difference in initial capacity (0.1C) and high-rate charge/discharge capacity (0.2C, 0.5C), and especially a markedly higher capacity retention (at 0.5C, 100 cycles) compared to Comparative Example 13. This indicates that, in the composite metal hydroxide precursor of Example 11, the formation of orientation-type particles via the co-precipitation reaction significantly enhances the crystal structural stability, resulting in a greatly improved cycle life.

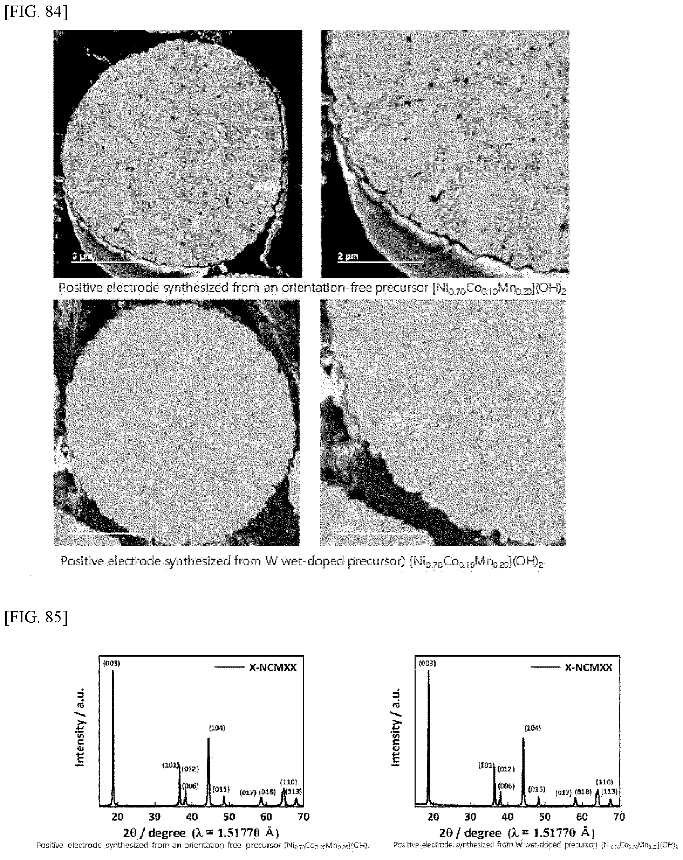

Meanwhile, Fig. 84 shows SEM images of the positive electrode materials synthesized from the composite metal hydroxide precursors of Comparative Example 13 and Example 11. The positive electrode material of Comparative Example 13-synthesized from a non-oriented precursor-also lacks orientation, leading to relatively poor electrochemical performance (capacity, rate capability, and cycle life). In contrast, the positive electrode material produced from the oriented precursor of Example 11 likewise exhibits orientation, thereby achieving superior electrochemical performance.

Fig. 85 illustrates the XRD analysis results for the positive electrode materials synthesized from the composite metal hydroxide precursors of Comparative Example 13 and Example 11. While there is no significant difference apparent between the two XRD patterns, both samples clearly exhibit a well-developed R-3m layered structure.

### [Comparative Example 14]

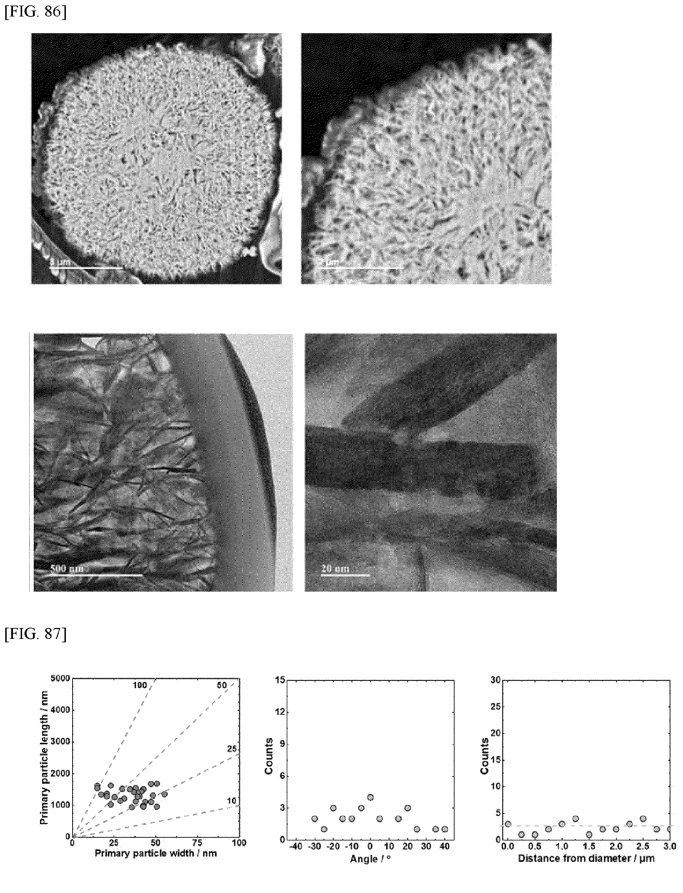

Fig. 86 shows SEM and TEM images of the [Ni_{0.46}Co_{0.08}Mn_{0.46}](OH)₂ composite metal hydroxide precursor of Comparative Example 14.

Fig. 87 is a graph illustrating the microstructure measurement results for Comparative Example 14, and

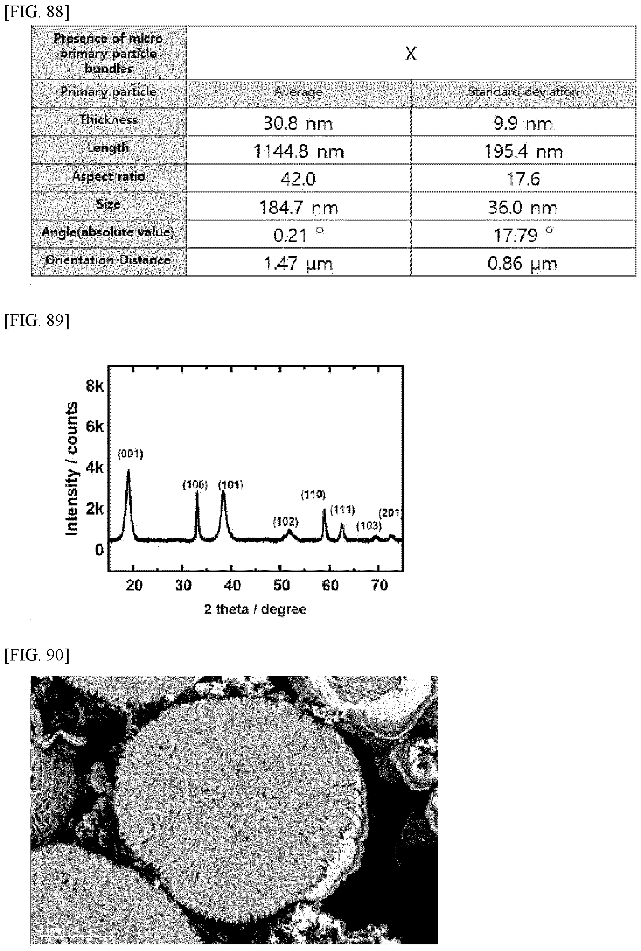

Fig. 88 presents data derived from these microstructure measurements, including whether the micro primary particles form bundles, and the thickness, length, aspect ratio, size, angle, and orientation distance of the primary particles.

Fig. 89 is a graph illustrating the XRD analysis results for Comparative Example 14.

As shown in Fig. 86, when a typical co-precipitation reaction is performed on the [Ni_{0.46}Co_{0.08}Mn_{0.46}](OH)₂ composite metal hydroxide precursor of Comparative Example 14, the particle density decreases, and the micro primary particles do not form bundles. In other words, the precursor in Comparative Example 14 does not form orientation-type particles and is not composed of bundles of micro primary particles.

Referring to Figs. 87 and 88, one can determine the thickness, length, aspect ratio, size, angle, and orientation distance, among other properties, of the primary particles in Comparative Example 14. Specifically, by examining the figures, it is possible to ascertain the particle size (length/width) and aspect ratio, quantitatively analyze the orientation (degree of alignment) of the particles, and confirm the spatial distribution of how the particles are situated relative to their central axis. In Comparative Example 14, the aspect ratio is about 42, and the primary particles are uniformly distributed without any particular orientation. Moreover, the average orientation distance of the primary particles is about 1.47 µm, indicating a relatively large value.

Hence, under standard co-precipitation conditions, the micro primary particles do not form bundles and do not exhibit orientation in this composite metal hydroxide precursor.

Meanwhile, from the XRD analysis results shown in Fig. 89, I(101)/I(100)=0.99. This indicates that 1(101) is lower than I(100), meaning that the intensity corresponding to the (101) plane in the XRD pattern is lower than that corresponding to the (100) plane.

Thus, in Comparative Example 14, the precursor exhibits low particle density, no bundling of micro primary particles, and no formation of orientation-type particles under typical co-precipitation reaction conditions.

### [Comparative Example 14 and Example 12]

Fig. 90 is an SEM image of the Ni_{0.46}Co_{0.08}Mn_{0.46}](OH)₂ composite metal hydroxide precursor obtained by performing a Highly concentrated (high slurry) co-precipitation reaction according to the twelfth embodiment of the present invention.

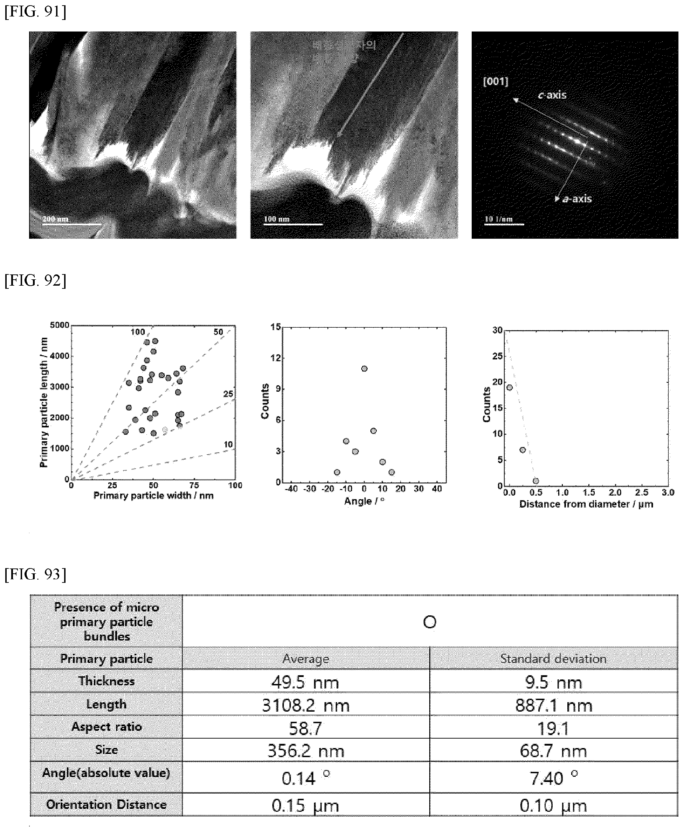

Fig. 91 is a TEM image of the composite metal hydroxide precursor according to Example 12 of the present invention.

In Example 12, a Highly concentrated co-precipitation reaction is performed on the Ni_{0.46}Co_{0.08}Mn_{0.46}](OH)₂ composite metal hydroxide precursor. As shown in the figures, Example 12 similarly exhibits a composite metal hydroxide precursor composed of bundles of micro primary particles, each having a thickness of approximately 1-50 nm.

Moreover, orientation-type particles are observed not only in the primary particles-each one formed from bundles of micro primary particles-but also within the secondary particles, which comprise multiple primary particles. In other words, each primary particle is formed from bundles of micro primary particles, the major axis of the micro primary particles aligns with that of the primary particle, and the secondary particles, composed of these primary particles, exhibit orientation.

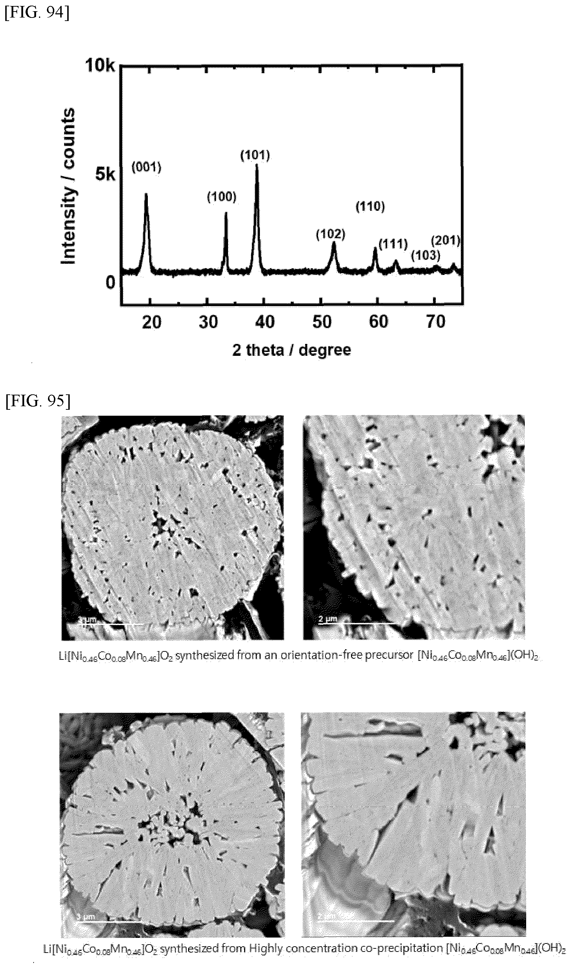

Fig. 92 is a graph illustrating the microstructure measurement results for Example 12, and Fig. 93 provides data derived from those microstructure measurements, including whether the micro primary particles form bundles, and the thickness, length, aspect ratio, size, angle, and orientation distance of the primary particles. Fig. 94 is a graph illustrating the XRD analysis results according to the twelfth embodiment of the present invention.

Referring to the figures, it can be determined that in Example 12, the primary particles have specific thicknesses, lengths, aspect ratios, sizes, angles, orientation distances, and so forth. In other words, one can ascertain the particle size (length/width) and aspect ratio, quantitatively analyze the orientation (degree of alignment) of the particles, and confirm the spatial distribution of how the particles are situated with respect to their central axis. In Example 12, the aspect ratio is about 58.7, indicating that the distribution of primary particles is oriented.

Moreover, the average orientation distance of the primary particles is approximately 0.15 µm, which is significantly reduced compared to the comparative example. Thus, in Example 12, the micro primary particles show a clear orientation and form bundles, in stark contrast to the comparative example.

According to the XRD analysis results illustrated in the figures, I(101)/I(100)=1.87. This indicates that 1(101) is higher than I(100)-that is, the intensity corresponding to the (101) plane in the XRD pattern is higher than that corresponding to the (100) plane.

Meanwhile, Table 37 compares the chemical compositions of the positive electrode active materials of Comparative Example 14 and Example 12 of the present invention.

Table 38 compares their electrochemical performance (capacity, rate capability, cycle life), and Table 39 provides a more detailed comparison of their electrochemical performance, particularly focusing on rate capability.

**[table 37]**

| **Cathode** | **Chemical composition (at%)** | | |
|---|---|---|---|
| | **Ni** | **Co** | **Mn** |
| **General co-precipitation NCM460846** | **46.2** | **8.1** | **45.7** |
| **Highly concentration co-precipitation NCM460846** | **46.1** | **7.9** | **46.0** |

**[table 38]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **General NCM460846** | **General co-precipitation** | **215.6** | **92.7%** | **205.2** | **95.2%** | **190.7** | **88.5%** | **100** | **92.1%** |
| **Highly concentration co-precipitation NCM460846** | **Highly concentration co-precipitation** | **216.2** | **93.1%** | **206.1** | **95.3%** | **192.3** | **89.0%** | **100** | **96.3%** |

**[table 39]**

| **Cathode** | **Precusor systhesis** | **0.2C Capacity (mAh/g)** | **0.5C Capacity (mAh/g)** | **1C Capacity (mAh/g)** | **2C Capacity (mAh/g)** | **5C Capacity (mAh/g)** | **10C Capacity (mAh/g)** |
|---|---|---|---|---|---|---|---|
| **General NCM460846** | **General co-precipitation** | **204.9** | **191.2** | **182.1** | **174.2** | **152.1** | **139.2** |
| **Highly concentration co-precipitation NCM460846** | **Highly concentration co-precipitation** | **206.8** | **193.1** | **182.9** | **177.5** | **156.9** | **144.5** |

In Comparative Example 14, a typical co-precipitation reaction was conducted. By contrast, in Example 12, there is a noticeable difference in initial capacity (0.1C) and high-rate charge/discharge capacity (0.2C, 0.5C) compared to Comparative Example 14, and, in particular, Example 12 exhibits a markedly higher capacity retention at 0.5C (100 cycles). This demonstrates that the formation of orientation-type particles in the composite metal hydroxide precursor of Example 12 via a Highly concentrated co-precipitation reaction significantly enhances the crystal structural stability of the precursor, thereby greatly improving its cycle life characteristics.

Meanwhile, Fig. 95 provides SEM images of positive electrode materials synthesized from the composite metal hydroxide precursors of Comparative Example 14 and Example 12. As shown in Fig. 94, the positive electrode material of Comparative Example 14-synthesized from a non-oriented precursor-also lacks orientation, resulting in relatively poor electrochemical performance (capacity, rate capability, and cycle life). In contrast, when the positive electrode material is synthesized from the oriented precursor of Example 12, it likewise exhibits orientation, thus achieving superior electrochemical performance.

### [Comparative Example 15 and Example 13]

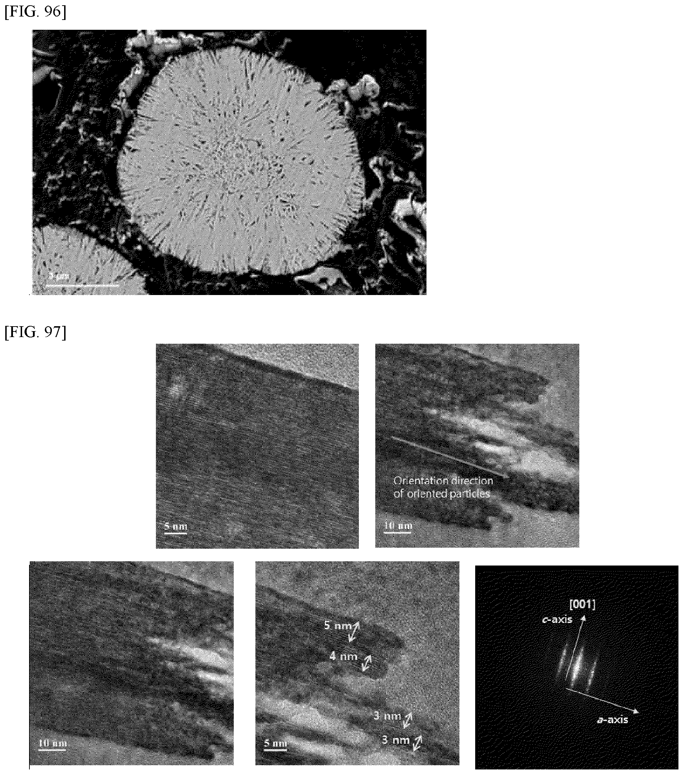

Fig. 96 is an SEM image of the [Ni_{0.51}Mn_{0.49}](OH)₂ composite metal hydroxide precursor obtained by performing a Highly concentrated co-precipitation reaction according to the thirteenth embodiment of the present invention.

Fig. 97 is a TEM image of the composite metal hydroxide precursor according to Example 13 of the present invention.

In Example 13, a Highly concentrated co-precipitation reaction is performed on the [Ni_{0.51}Mn_{0.49}](OH)₂ composite metal hydroxide precursor. As shown in the figures, Example 13 also exhibits a composite metal hydroxide precursor composed of bundles of micro primary particles, each having a thickness of about 1-50 nm.

Furthermore, orientation-type particles are observed not only in the primary particles-each of which is formed by bundles of micro primary particles-but also within the secondary particles, which comprise multiple primary particles. In other words, each primary particle is made up of bundles of micro primary particles, the major axis of the micro primary particles aligns with that of the primary particle, and the secondary particles, composed of these primary particles, demonstrate orientation.

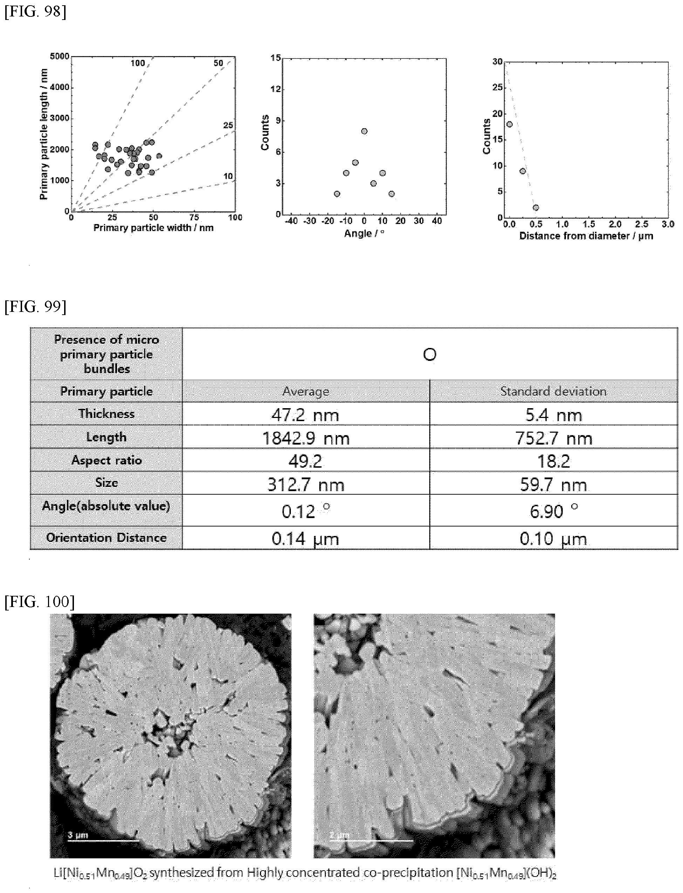

Fig. 98 is a graph illustrating the microstructure measurement results for the thirteenth embodiment of the present invention, and

Fig. 99 provides data derived from these microstructure measurements, including whether the micro primary particles form bundles, and the thickness, length, aspect ratio, size, angle, and orientation distance of the primary particles.

From these figures, one can confirm the thickness, length, aspect ratio, size, angle, orientation distance, etc., of the primary particles in Example 13. Specifically, the particle size (length/width) and aspect ratio can be assessed, the orientation (degree of alignment) of the particles can be analyzed quantitatively, and the spatial distribution of how the particles are arranged with respect to their central axis can be determined. In Example 13, the aspect ratio is about 49.2, indicating that the distribution of primary particles is oriented.

Moreover, the average orientation distance of the primary particles is about 0.14 µm, which is significantly reduced compared to the comparative example. Thus, in Example 13, the micro primary particles clearly exhibit orientation and form bundles, in contrast to the comparative example.

Fig. 100 shows SEM images of the positive electrode materials synthesized from the composite metal hydroxide precursors of Comparative Example 15 and Example 13.

Meanwhile, Table 40 compares the chemical compositions of the positive electrode active materials of Comparative Example 15 and Example 13 of the present invention.

Table 41 compares their electrochemical performance (capacity, rate capability, and cycle life).

Table 42 provides a more detailed comparison of their electrochemical performance, particularly with a focus on rate capability.

**[table 40]**

| **Cathode** | **Chemical composition (at%)** | |
|---|---|---|
| | **Ni** | **Mn** |
| **General co-precipitation NM5149** | **51.8** | **48.2** |
| **Highly concentration co-precipitation NM5149** | **51.1** | **48.9** |

**[table 41]**

| **Cathode** | **Precusor systhesis** | **0.1 C Disch. Capa (mAh/g)** | **Efficiency** | **0.2C Capacity (mAh/g)** | **0.2C/ 0.1C** | **0.5C Capacity (mAh/g)** | **0.5C/ 0.1C** | **Cycle** | **0.5C Cycle Retention** |
|---|---|---|---|---|---|---|---|---|---|
| **General co-precipitation NM5149** | **General co-precipitation** | **217.2** | **93.1%** | **206.1** | **94.9%** | **192.4** | **88.6%** | **100** | **91.5%** |
| **Highly concentration co-precipitation NM5149** | **Highly concentration co-precipitation** | **217.9** | **93.1%** | **207.5** | **95.2%** | **194.2** | **89.1%** | **100** | **96.5%** |

**[table 42]**

| **Cathode** | **Precusor systhesis** | **0.2C Capacity (mAh/g)** | **0.5C Capacity (mAh/g)** | **1C Capacity (mAh/g)** | **2C Capacity (mAh/g)** | **5C Capacity (mAh/g)** | **10C Capacity (mAh/g)** |
|---|---|---|---|---|---|---|---|
| **General co-precipitation NM5149** | **General co-precipitation** | **205.9** | **190.2** | **183.5** | **176.7** | **155.6** | **142.6** |
| **Highly concentration co-precipitation NM5149** | **Highly concentration co-precipitation** | **207.4** | **193.8** | **183.8** | **179.4** | **159.1** | **147.6** |

In Comparative Example 15, a typical co-precipitation reaction was carried out. By contrast, in Example 13, there is a noticeable difference in initial capacity (0.1C) and high-rate charge/discharge capacity (0.2C, 0.5C) compared to Comparative Example 15, and particularly, Example 13 exhibits a markedly higher capacity retention at 0.5C (100 cycles). This result indicates that, in the composite metal hydroxide precursor of Example 13, the formation of orientation-type particles through the co-precipitation process substantially enhances the crystal structural stability of the precursor, thereby significantly improving its cycle life characteristics.

Meanwhile, Fig. 100 shows that, when the positive electrode material is synthesized from the oriented precursor of Example 13, the resulting cathode material likewise exhibits orientation, which in turn improves its electrochemical performance.

The following is a description of the manufacturing process according to the present invention.

### [Co-Precipitation Reaction Process According to an Embodiment of the Present Invention]

The co-precipitation reaction process of the present invention refers to a reaction in which two or more metal ions (e.g., transition metal ions) are simultaneously precipitated in a single reaction solution to form a composite compound.

For example, transition metal ions such as nickel (Ni), cobalt (Co), and manganese (Mn) are mixed in a predetermined ratio, and then an alkaline solution (e.g., NaOH) and a complexing agent (e.g., NH₃) are added together to precipitate hydroxides in the form of ((NixCoyMnl-x-y)(OH)₂).

Since each metal ion is precipitated simultaneously, the finally formed precipitate (precursor) can be uniformly synthesized, thereby enabling the production of a precursor having a desired composition ratio and structure.

### (a) Raw Material Solution Preparation Step

Nickel sulfate (NiSO₄·6H₂O), cobalt sulfate (CoSO₄·7H₂O), and manganese sulfate (MnSO₄·H₂O) are prepared, and these are mixed in a molar ratio of Ni:Co:Mn = x:y:(1-x-y) to prepare a metal solution with a concentration of 2.5M. Subsequently, a first dopant is prepared for the co-precipitation process, wherein the first dopant comprises at least one selected from the group consisting of Sb, Mo, W, Nb, Te, Ta, Zr, Ti, Sn, Y, In, Sr, Ba, Mg, Ca, B, V, Cr, Al, and Fe. The average concentration of the first dopant is in the range of 0.01 mol% to 5 mol% relative to the total metal content, including Ni, Co, and Mn.

The final composition of the mixed metal ions (transition metals) may vary depending on the specific embodiment, and uniform mixing of the metal composition is crucial to impart the desired crystallographic orientation.

### (b) Setting of Reaction Solution Concentration and Injection Amount

An ammonia solution (NH₄OH) and a sodium hydroxide solution (NaOH) required for the co-precipitation reaction are pre-prepared at specific concentrations (e.g., 20M and 6M, respectively). The concentrations and flow rates of the metal ion solution, the NaOH solution (used as an alkaline pH control agent), and the NH₄OH solution (used as a complexing agent) are pre-determined.

For improved crystallographic orientation, it is essential that the mixing ratio of the metal ions remains homogeneous, as this facilitates the formation of the desired crystal structure and crystal plane orientation. The concentration and injection ratio of complexing agents such as ammonia play a critical role in controlling the crystallographic growth direction during crystal formation.

### (c) Co-precipitation Reaction Step

The co-precipitation reaction is carried out by injecting an ammonia solution and a sodium hydroxide solution into a co-precipitation reactor and conducting the co-precipitation reaction for a duration of 30 to 60 hours.

During the reaction, nitrogen gas is supplied to the co-precipitation reactor at a flow rate of 100 L/min to 200 L/min, while maintaining the temperature of the reactor between 40°C and 60°C, preferably at 50°C. The reactor is stirred at a speed of 200 to 300 rpm, and the pH within the reactor is maintained in the range of 10 to 12.

In a specific experimental example, a large-capacity co-precipitation reactor (e.g., a 2000L-class reactor with a rotation motor output of at least 30 kW) is filled with 500 L of distilled water. Nitrogen gas is supplied at 150 L/min to create an inert nitrogen atmosphere within the reactor, thereby reducing dissolved oxygen to prevent oxidation or undesirable side reactions. The reaction temperature is maintained at 50°C, and the stirring speed is set to 250 rpm.

The pre-prepared 2.5M metal solution is continuously injected at a controlled flow rate (e.g., 40 L/hr) for 20 hours. Simultaneously, 20M ammonia solution (NH₄OH) is injected at a flow rate of 4.5 L/hr, and 6M sodium hydroxide solution (NaOH) is injected at 25 L/hr for 20 hours. The pH of the reaction solution is maintained within the range of 10 to 12, requiring continuous pH monitoring and feedback control.

The mechanism of orientation formation within the co-precipitation reactor involves hydroxide precipitation reactions facilitated by metal ions (M²⁺), hydroxide ions (OH⁻), and ammonia (NH₃), leading to the formation of composite metal hydroxide ((NixCoyMn1-x-y)(OH)₂). The synthesized composite metal hydroxide undergoes growth, forming primary particles, fine bundled primary particles, and secondary particles.

Sufficient stirring and the appropriate control of temperature, pH, and complexing agent concentration promote orientation growth along specific crystal planes. Proper management of stirring conditions and reactant injection parameters ensures the uniform growth of particles, particularly to achieve the desired structural orientation. When complexation reactions with ammonia complexes proceed smoothly, defects within the crystal structure are minimized, leading to even crystal growth along specific crystal planes.

After the co-precipitation reaction, the concentration of composite metal hydroxide particles in the resulting solution is typically about 0.1 kg of precursor per liter of solution. The composite metal hydroxide is then subjected to post-treatment, including filtration and washing, to obtain the final precursor powder.

In the first embodiment of the present invention, key factors for improving orientation include temperature, pH, stirring speed, and the ammonia solution injection ratio. Specifically, in the first embodiment, the reaction conditions of temperature: 40~60°C (preferred 50°C), pH: 10-12, stirring speed: 250 rpm, and ammonia solution injection ratio serve as crucial parameters for directing crystal growth along a specific orientation.

The co-precipitation reaction is carried out by injecting ammonia and sodium hydroxide solutions into the co-precipitation reactor, maintaining a reaction duration of 30 to 60 hours, supplying nitrogen gas at a flow rate of 100 L/min to 200 L/min, and controlling the reactor temperature within the range of 40°C to 60°C, preferably at 50°C. The stirring speed is maintained at 200 to 300 rpm, and the pH within the reactor is controlled within the range of 10 to 12.

In addition to the contents of nickel, cobalt, and manganese, the degree of complexation with ammonia (extent of complex formation) during co-precipitation plays a critical role in orientation formation. Furthermore, ensuring a sufficiently long reaction time (at least 20 hours) is essential for allowing uniform and gradual crystal growth.

### (d) Post-Treatment (Filtration, Washing, Drying, etc.) Step

After the completion of the co-precipitation reaction, the slurry containing the composite metal hydroxide is filtered to separate the solid from the liquid phase. The obtained solid is washed with distilled water to remove any residual reaction byproducts. During the washing process, care must be taken to prevent sudden pH fluctuations or excessive physical agitation, which could disrupt the crystallographic orientation.

The washed wet filter cake is then dried under appropriate conditions (e.g., at 100-120°C) to obtain the precursor in powder form. The drying conditions, including temperature, duration, and vacuum level, are optimized to minimize structural deformation and particle agglomeration. The final dried composite metal hydroxide precursor is analyzed using SEM, TEM, and XRD to evaluate particle morphology (primary and secondary particles), average particle size, crystal structure, and orientation.

In the embodiment of the present invention, excessively high drying temperatures or rapid dehydration can cause surface shrinkage and cracking of the particles, adversely affecting crystal orientation. TEM analysis can be utilized to assess whether the "long-axis direction" of the fine primary particles is aligned parallel to the long-axis of the secondary particles, which is a key factor in determining orientation.

Additionally, to achieve a more uniform secondary particle formation, spray drying may be employed after the filtration and washing steps. Alternatively, an aging process may be introduced immediately after co-precipitation to allow sufficient growth of fine particles, thereby facilitating more precise crystal plane alignment.

In NCM and NCA systems, increasing the Ni content can lead to challenges in particle surface stability and homogeneity. Thus, to maximize orientation, pH, temperature, and complexing agent concentration must be readjusted accordingly. A densely oriented precursor contributes to the high-power and high-energy characteristics of the cathode material, as the alignment of ion and electron diffusion pathways within the crystal structure improves charge/discharge efficiency and cycle life.

The aforementioned co-precipitation synthesis method is a precursor manufacturing process in which multiple metal ions, such as nickel, cobalt, and manganese, are simultaneously precipitated. In the first embodiment of the present invention, the key to improving orientation is the precise control of co-precipitation reaction conditions (temperature, stirring speed, pH, complexing agent concentration and injection ratio, reaction time, etc.) to ensure uniform crystal growth in a specific direction.

Furthermore, even in the post-treatment process (washing and drying), it is crucial to maintain the structural stability and orientation of the particles. By systematically managing each step, it is possible to manufacture and control a "secondary battery cathode active material precursor with improved orientation" more effectively, ultimately contributing to the enhancement of battery performance, including power output, lifespan, and energy density.

### [Co-precipitation Reaction According to an Embodiment of the Present Invention: Highly concentrated]

In the co-precipitation reaction step, the process of performing the co-precipitation reaction may include removing the solution remaining inside the co-precipitation reactor to the outside of the reactor. The composite metal hydroxide formed by the co-precipitation reaction may be provided in the form of secondary particles in which multiple primary particles are aggregated. The co-precipitation reaction step may be carried out as a highly concentrated co-precipitation reaction.

The highly concentrated co-precipitation reaction may be performed by removing the accumulated solution inside the co-precipitation reactor during the reaction process. When removing the solution from the co-precipitation reactor, only the solvent is removed while maintaining the solid-state precursor particles generated during the co-precipitation reaction inside the reactor. As a result, the weight ratio of the precursor to the solution within the reactor continuously increases, thereby inducing precursor particles to grow at a lower rate.

During the highly concentrated co-precipitation reaction, the growth rate of the precursor particles is lower than that of conventional co-precipitation reactions, allowing the primary particles to form in a columnar structure and grow in a unidirectional alignment. Additionally, even during the aggregation process of the primary particles, the high orientation of the aggregated particles is maintained, improving the alignment and orientation of primary particles within the secondary particles.

The highly concentrated co-precipitation reaction may be carried out for a duration of 30 to 60 hours. Furthermore, after the completion of the highly concentrated co-precipitation reaction, the composite metal hydroxide precursor inside the reactor may be present at a high concentration of at least 0.2 kg of precursor per liter of solution. Specifically, the precursor concentration may range from 0.2 kg precursor/L solution to 0.9 kg precursor/L solution. By maintaining the solution concentration in the aforementioned range after the completion of the highly concentrated co-precipitation reaction, the morphology of the primary particles forming the composite metal hydroxide can be controlled to grow into a unidirectional columnar shape, and the primary particles can have a high degree of orientation toward the center of the secondary particles.

In conventional co-precipitation reactions, the concentration of the solution inside the co-precipitation reactor is increased by circulating the transition metal solution and ammonia-containing solution externally. Consequently, concentration differences arise between the internal and external solutions, which interfere with the uniform growth of primary precursor particles and ultimately degrade the orientation of the resulting primary particles. Moreover, during the process of circulating the solution outside the co-precipitation reactor, inconsistencies in the transition metal-ammonia complex ion formation reaction occur, leading to discontinuous and non-uniform co-precipitation reactions, which hinder the growth of oriented particles.

In contrast, the co-precipitation reaction according to an embodiment of the present invention is performed as highly concentrated co-precipitation reaction, in which the solution inside the co-precipitation reactor is not circulated externally. Instead, only the solvent is continuously and selectively removed in real-time from the internal solution. As a result, the overall concentration of the precursor-forming composite metal hydroxide solution remains uniform within the co-precipitation reactor, allowing the transition metal-ammonia chelation reaction and hydroxide substitution reaction to proceed continuously.

Therefore, highly concentrated co-precipitation reaction promotes the bundling of fine primary particles and the continuous growth of oriented particles, thereby enhancing the orientation of the primary particles forming the composite metal hydroxide.

### [Co-Precipitation Reaction According to an Embodiment of the Present Invention: Hetero-Element Doping Co-Precipitation Synthesis]

According to another embodiment of the present invention, the co-precipitation reaction step may further include wet co-doping, wet shell doping, and hetero-element coating co-precipitation synthesis.

In wet doping, a hetero-element other than Ni, Co, and Mn is introduced into the co-precipitation reactor. The hetero-element compound may include at least one or more selected from metal hydroxides, metal oxides, and metal sulfides. For example, ammonium molybdate ((NH₄)₆Mo₇O₂₄) or sodium molybdate (Na₂MoO₄) may be used for Mo wet doping. However, the types of compounds used are not limited thereto. The first dopant or hetero-element may include at least one selected from Sb, Mo, W, Zr, Ti, Sn, Y, Mg, B, Al, and Fe.

The average concentration of the first dopant is preferably between 0.01 mol% and 5 mol% relative to the total metal content including Ni, Co, and Mn. If the average concentration of the first dopant is below 0.01 mol%, the grain growth control effect may be insufficient, making it difficult to regulate grain size, and hindering the formation of plate-like or directionally grown particles with high orientation. Additionally, a lack of dopant may lead to an increase in particle agglomeration, resulting in low orientation and the formation of bulk-shaped particles.

On the other hand, if the first dopant exceeds 5 mol%, significant deformation of the original crystal structure may occur, inhibiting the formation of oriented particles. Furthermore, if the size of the doping element differs significantly from that of Ni, Co, and Mn, uneven doping may increase defects, distorting particle growth. Excessive doping may also excessively suppress particle growth, leading to the formation of excessively small primary particles, thereby preventing proper orientation.

Wet doping can be performed using a synthesis process similar to general co-precipitation synthesis. However, it differs in that the hetero-element compound is added to the co-precipitation reactor and dissolved in the transition metal solution or caustic soda solution. A solution containing the hetero-element compound is continuously introduced into the co-precipitation reactor while adjusting the feeding rate, pH, or ammonia concentration depending on the type of hetero-element.

Through wet doping, the hetero-element can undergo a chelating reaction with Ni, Co, and Mn. As a result, the precursor, which is a composite metal hydroxide, forms fine primary particles while extending their length, and the primary particles exhibit high orientation toward the center of the secondary particles. Furthermore, when the hetero-element is incorporated into the composite metal hydroxide through wet doping, the oriented particles formed in the precursor can be retained in the positive electrode active material subsequently produced.

### (Wet Co-Doping)

Wet co-doping is a method in which, during precursor synthesis, at least two hetero-elements (e.g., Al, Mg, W) are simultaneously introduced along with the main metal ions (e.g., Ni, Co, Mn) to perform co-precipitation synthesis. That is, by dissolving and introducing the desired hetero-elements into the solution throughout the entire nucleation and growth process of the precursor, the elements are evenly impregnated throughout the particle from the core to the surface.

Because wet co-doping ensures uniform distribution of hetero-elements from the core to the surface, it enhances structural stability, suppresses internal cracking, and provides overall structural reinforcement.

### (Wet Shell-Doping)

Wet shell-doping is a method in which hetero-elements are precipitated only during the final stage (or latter part) of precursor synthesis, preventing doping in the particle's interior while incorporating the hetero-elements only in a region within 2 µm from the surface (shell). As a result, a dual structure is formed in which the metal composition of the core and shell differ.

Since surface degradation mainly occurs during charge and discharge cycles, wet shell-doping selectively introduces dopant elements (e.g., Al, Mg, Ti) into the surface region, effectively improving structural stability and suppressing degradation.

### (Hetero-Element Coating Co-Precipitation Synthesis)

Hetero-element coating co-precipitation synthesis is a method in which, immediately after precursor formation or after the precursor is fully synthesized, a hetero-element layer (or a composite hydroxide/oxide coating layer) is precipitated only on the surface. Structurally, this appears similar to wet shell-doping, but because the hetero-element is coated on the precursor surface after synthesis is complete, it forms a separate coating layer rather than being incorporated into the precursor lattice via substitution (doping).

This process is performed by maintaining the synthesized precursor particles in a slurry state in a separate or the same reactor, introducing a hetero-element solution (e.g., Al(NO₃)₃, MgSO₄, ZrO(NO₃)₂), and appropriately adjusting the base (e.g., NaOH), pH, temperature, and stirring conditions to induce the formation of a thin film coating on the precursor surface as a hydroxide (OH), oxide (O), or composite compound.

Because hetero-element coating co-precipitation forms a doping/coating layer only on the surface while maintaining the internal composition of the precursor, it suppresses side reactions at the surface, improves electrolyte stability, and enhances lifespan characteristics by protecting the surface even under high temperature and high voltage conditions.

### [Co-precipitation Reaction According to an Embodiment of the Present Invention: Use of Seed Precursor]

According to another embodiment of the present invention, the method for manufacturing a cathode active material for a secondary battery may further include the use of a seed precursor in the co-precipitation reaction step. The co-precipitation reaction step may be performed sequentially in two stages: a primary co-precipitation reaction and a secondary co-precipitation reaction. In the primary co-precipitation reaction, the seed precursor is first synthesized, and the secondary co-precipitation reaction is subsequently carried out using the seed precursor to produce a composite metal hydroxide.

The seed precursor is synthesized with an average particle diameter of 1.5 to 3.5 µm, following the same synthesis method as that of the composite metal hydroxide but with a shorter reaction time of approximately 5 to 10 hours.

In the secondary co-precipitation reaction, the seed precursor is introduced into a co-precipitation reactor containing distilled water, followed by an initial stirring step for a predetermined period. After stirring, a transition metal solution, an ammonia solution, and a sodium hydroxide solution are continuously added into the co-precipitation reactor to proceed with the reaction.

During the secondary co-precipitation reaction, primary particles are aligned and formed on the surface of the seed precursor. The seed precursor plays a critical role in inducing the alignment and improved orientation of the primary particles, leading to the formation of a highly oriented composite metal hydroxide.

### [Co-precipitation Reaction According to an Embodiment of the Present Invention: Use of Hetero-element Compound Seed]

This process involves a co-precipitation reaction for synthesizing a composite metal hydroxide precursor by utilizing ultrafine hetero-element compound seed particles. Specifically, hetero-element compound seeds with a particle size of 1 µm or less are introduced at the early stage of the reaction, allowing the formation and growth of new composite metal hydroxide crystals on their surface.

For example, hetero-element compounds such as Sb₂O₃, WO₃, and Nb₂O₅ (including metal oxides and metal sulfides) are subjected to ultrasonic treatment to refine their D50 particle size to 1 µm or less. The ultrasonic treatment ensures that the seed particles remain small and uniformly distributed, thereby increasing their surface area, which facilitates nucleation and uniform crystal growth during the subsequent co-precipitation reaction.

After ultrasonic treatment, the fine seed particles are introduced into a reactor containing distilled water and stirred thoroughly. Adequate stirring time is ensured to achieve uniform dispersion of the seed particles, allowing them to function effectively as nucleation sites during the co-precipitation process.

Following a predetermined stirring period, a transition metal solution (containing metal ions such as Ni, Co, and Mn), an ammonia solution, and a sodium hydroxide (NaOH) solution are continuously added to the reactor. This process induces the precipitation of composite metal hydroxide precursor particles on the surface of the hetero-element compound seed particles. By precisely controlling reaction conditions such as pH, temperature, and flow rate, the composite metal hydroxide precursor is deposited uniformly on the seed surface.

Through this process, new composite metal hydroxide crystals grow on the surface of the seed particles, leading to the gradual formation of fine primary particles. These primary particles aggregate densely while maintaining an internally aligned crystal orientation, forming oriented primary particles.

A precursor with enhanced orientation contributes to improved electrochemical performance (e.g., higher energy density, longer cycle life, and improved safety) when subjected to calcination and lithium incorporation in the subsequent cathode active material synthesis process.

Various hetero-element compound seeds that can be used in the co-precipitation reaction process include, but are not limited to, the following: Sb(CH₃CO₂)₃, Sb₂O₃, Sb₂O₃, MoOs, (NH₄)₁₀Mo₇O₂₄, WO₃, H₂WO₄, (NH₄)₁₀H₂W₁₂O₄₂, Nb₂O₅, C₄H₄NNbO₉, TeO₂, Ta₂O₂, ZrO₂, Zr(SO₄)₂, TiO₂, Ti(SO₄)₂, SnO₂, sSnO₅, TiO₂, SnO₂, Y₂O₃, In₂O₃, SrO, BaO, V₂O₅, Cr₂O₃, Al₂O₃, Al(OH)₃, Al₂(SO₄)₃.

### [Co-Precipitation Reaction According to an Embodiment of the Present Invention: Concentration-Gradient Composite Metal Hydroxide Precursor]

Another embodiment of the present invention provides a method for manufacturing a concentration-gradient (CG) composite metal hydroxide precursor.

In this embodiment, a method for producing a concentration-gradient precursor is provided, wherein the composition of the core and surface regions differs. During the co-precipitation synthesis step, the composition of the metal ion solution is gradually varied to form a Ni-rich composition in the core region (e.g., Ni:Co:Mn = 100:0:0), while the surface region contains Co and Mn (e.g., Ni:Co:Mn = 80:10:10).

According to an embodiment of the present invention, various compositions such as NCM, NM, NC, and NCMA may be used to control the transition metal composition within the precursor. The synthesized precursor alleviates internal stress during charge and discharge, thereby improving long-term cycle life compared to conventional materials.

A more detailed explanation of the method for manufacturing a concentration-gradient composite metal hydroxide precursor is provided below. In this embodiment, at least one or more of Ni, Co, Mn, Al, and dopants are distributed in a concentration gradient in at least a portion of the composite metal hydroxide precursor.

### Manufacturing Example 1 (Gradient NM90)

A co-precipitation reactor (capacity: 40L, rotation motor output: at least 750W) was filled with 10 liters of distilled water, and nitrogen (N₂) gas was supplied at a rate of 6 L/min. The temperature of the reactor was maintained at 45°C, and stirring was performed at 350 rpm.

Nickel sulfate solution (NiSO₄·6H₂O, Samchun Chemical) and manganese sulfate solution (MnSO₄·H₂O, Samchun Chemical) were mixed in a molar ratio of Ni:Mn = 100:0 to prepare a 2M second metal solution.

The prepared first metal solution was continuously introduced into the reactor at a rate of 0.561 L/h, along with a 16M ammonia solution (NH₄OH, JUNSEI) at 0.08 L/h and a 4M sodium hydroxide solution (NaOH, Samchun Chemical) at 0.60 L/h, for 14 hours to form the first concentration maintenance region.

Subsequently, the second metal solution was introduced into the first metal solution reservoir at a rate of 0.561 L/h, gradually changing the concentration of the metal solution introduced into the reactor over 10 hours, thereby forming the second concentration-gradient region around the first concentration maintenance region.

Afterward, the introduction of the second metal solution into the first metal solution was stopped, and only the first metal solution with a modified concentration was introduced into the reactor at a rate of 0.561 L/h to form the third concentration maintenance region outside the second concentration-gradient region.

Co-precipitation was performed while maintaining the reactor pH in the range of 10 to 12, producing a concentration-gradient composite metal hydroxide with an average composition of Ni_{0.90}Mn_{0.10}(OH)₂.

The produced concentration-gradient Ni_{0.90}Mn_{0.10}(OH)₂ composite metal hydroxide was filtered, washed multiple times with distilled water, and vacuum dried at 110°C for 12 hours to obtain a powder.

The powder was then mixed with lithium hydroxide (LiOH) according to the molar ratio listed in Table 3 and subjected to a pre-sintering process by heating at a rate of 2°C/min, maintaining it at 450°C for 5 hours.

Finally, the material was sintered at 730°C for 10 hours to produce a concentration-gradient NM-type positive electrode active material powder.

### Manufacturing Example 2 (Gradient NCM90)

A co-precipitation reactor (capacity: 40L, rotation motor output: at least 750W) was filled with 10 liters of distilled water, and nitrogen (N₂) gas was supplied at a rate of 6 L/min. The temperature of the reactor was maintained at 45°C, and stirring was performed at 350 rpm.

Nickel sulfate solution (NiSO₄·6FLO, Samchun Chemical), cobalt sulfate solution (CoSO₄·7H₂O, Samchun Chemical), and manganese sulfate solution (MnSO₄·H₂O, Samchun Chemical) were mixed in a molar ratio of Ni:Co:Mn = 100:0:0 to prepare a 2M first metal solution and in a molar ratio of Ni:Co:Mn = 80:10:10 to prepare a 2M second metal solution.

The prepared first metal solution was continuously introduced into the reactor at a rate of 0.561 L/h, along with a 16M ammonia solution (NH₄OH, JUNSEI) at 0.08 L/h and a 4M sodium hydroxide solution (NaOH, Samchun Chemical) at 0.60 L/h, for 14 hours to form the first concentration maintenance region.

Subsequently, the second metal solution was introduced into the first metal solution reservoir at a rate of 0.561 L/h, gradually changing the concentration of the metal solution introduced into the reactor over 10 hours, thereby forming the second concentration-gradient region around the first concentration maintenance region.

Afterward, the introduction of the second metal solution into the first metal solution was stopped, and only the first metal solution with a modified concentration was introduced into the reactor at a rate of 0.561 L/h to form the third concentration maintenance region outside the second concentration-gradient region.

Co-precipitation was performed while maintaining the reactor pH in the range of 10 to 12, producing a concentration-gradient composite metal hydroxide with an average composition of Ni_{0.90}Co_{0.05}Mn_{0.05}(OH)₂.

The produced concentration-gradient Ni_{0.90}Co_{0.05}Mn_{0.05}(OH)₂ composite metal hydroxide was filtered, washed multiple times with distilled water, and vacuum dried at 110°C for 12 hours to obtain a powder.

The powder was then mixed with lithium hydroxide (LiOH) according to the molar ratio listed in Table 3 and subjected to a pre-sintering process by heating at a rate of 2°C/min, maintaining it at 450°C for 5 hours.

Finally, the material was sintered at 730°C for 10 hours to produce a concentration-gradient NCM-type positive electrode active material powder.

### Manufacturing Example 3 (Gradient NC96)

A co-precipitation reactor (capacity: 40L, rotation motor output: at least 750W) was filled with 10 liters of distilled water, and nitrogen (N₂) gas was supplied at a rate of 6 L/min. The temperature of the reactor was maintained at 45°C, and stirring was performed at 350 rpm.

Nickel sulfate solution (NiSO₄·6H₂O, Samchun Chemical) and cobalt sulfate solution (CoSO₄·7H₂O, Samchun Chemical) were mixed in a molar ratio ofNi:Co = 100:0 to prepare a 2M second metal solution.

The prepared first metal solution was continuously introduced into the reactor at a rate of 0.561 L/h, along with a 16M ammonia solution (NH₄OH, JUNSEI) at 0.08 L/h and a 4M sodium hydroxide solution (NaOH, Samchun Chemical) at 0.60 L/h, for 14 hours to form the first concentration maintenance region.

Subsequently, the second metal solution was introduced into the first metal solution reservoir at a rate of 0.561 L/h, gradually changing the concentration of the metal solution introduced into the reactor over 10 hours, thereby forming the second concentration-gradient region around the first concentration maintenance region.

Afterward, the introduction of the second metal solution into the first metal solution was stopped, and only the first metal solution with a modified concentration was introduced into the reactor at a rate of 0.561 L/h to form the third concentration maintenance region outside the second concentration-gradient region.

Co-precipitation was performed while maintaining the reactor pH in the range of 10 to 12, producing a concentration-gradient composite metal hydroxide with an average composition of Ni_{0.96}Co_{0.04}(OH)₂.

The produced concentration-gradient Ni_{0.96}Co_{0.04}(OH)₂ composite metal hydroxide was filtered, washed multiple times with distilled water, and vacuum dried at 110°C for 12 hours to obtain a powder.

The powder was then mixed with lithium hydroxide (LiOH) according to the molar ratio listed in Table 3 and subjected to a pre-sintering process by heating at a rate of 2°C/min, maintaining it at 450°C for 5 hours.

Finally, the material was sintered at 730°C for 10 hours to produce a concentration-gradient NC-type (gradient NC) positive electrode active material powder.

### [Manufacturing of Positive Electrode Active Material According to an Embodiment of the Present Invention]

The positive electrode active material according to this embodiment is produced by calcining a composite metal hydroxide containing at least one or more selected from nickel (Ni), cobalt (Co), manganese (Mn), and aluminum (Al) with a lithium compound. The positive electrode active material may include at least one selected from NC-type, NCM-type, NCA-type, LNO-type, and NCMA-type materials.

For example, NC-type, NCM-type, NCA-type, and NCMA-type materials are classified based on the types of metal elements in the active material, excluding lithium and dopant-added hetero-elements. Specifically, NC-type refers to a positive electrode active material composed of nickel and cobalt, excluding lithium and dopant-added hetero-elements. NCM-type refers to a positive electrode active material composed of nickel, cobalt, and manganese. NCA-type refers to a positive electrode active material composed of nickel, cobalt, and aluminum. NCMA-type refers to a positive electrode active material composed of nickel, cobalt, manganese, and aluminum. Additionally, the positive electrode active material according to this embodiment may further include an LNO-type material, which refers to a positive electrode active material composed of lithium (Li) and nickel (Ni).

A person skilled in the art to which the present invention pertains will understand that the invention can be embodied in various specific forms without departing from the technical spirit or essential characteristics thereof. Therefore, the embodiments described above should be understood as being illustrative rather than restrictive in all respects.

The scope of the present invention is defined not by the detailed description provided above but by the claims set forth below. Any modifications or variations that fall within the meaning, scope, and equivalent concepts of the claims should be construed as being included within the scope of the present invention.

## Claims

1. A positive electrode active material for a secondary battery, comprising a composite metal hydroxide precursor represented by Chemical Formula (1) below:
wherein the precursor includes a secondary particle composed of a plurality of primary particles;
wherein each primary particle is formed as a bundle of micro primary particles;
wherein, when observed via a transmission electron microscope, the major axis direction of the micro primary particles coincides with the major axis direction of the primary particles; and
wherein each micro primary particle has a thickness of about 1 nm to about 50 nm.
[Chemical Formula 1] (NiₓCo_{y}Mn_{1-x-y})(OH)₂ (0.40≤x≤0.96, 0≤y≤0.15)

2. The positive electrode active material for a secondary battery according to claim 1, wherein the primary particles have an average thickness of 0.4 µm or less.

3. The positive electrode active material for a secondary battery according to claim 1 or 2, wherein, when observed via a transmission electron microscope to measure the average cross-sectional area of the primary particles, and when taking the square root of that average cross-sectional area, the primary particles have an average size of 0.5 µm or less.

4. The positive electrode active material for a secondary battery according to one of claims 1 to 3,
wherein a length-to-thickness ratio (aspect ratio) of the primary particles, obtained by dividing their length by their thickness, is between 5 and 100, inclusive.

5. The positive electrode active material for a secondary battery according to one of claims 1 to 4,
wherein, defining a center point of an extension line as a midpoint between one end of the primary particle and an opposite end of the primary particle,
an average of absolute values of acute angles is 20° or less, the acute angles being those formed between:
(i) the extension line in the major axis direction that passes through the center of the primary particle, and
(ii) an angle reference line connecting the center point of the extension line and the center of the secondary particle.

6. The positive electrode active material for a secondary battery according to one of claims 1 to 5,
wherein the primary particles have an orientation distance of 2 µm or less, the orientation distance being defined as an average distance between:
(i) the extension line in the major axis direction that passes through the center of the primary particle, and
(ii) a center reference line that is parallel to the extension line and passes through the center of the secondary particle.

7. The positive electrode active material for a secondary battery according to one of claims 1 to 6,
wherein the precursor comprising the orientation-type primary particles formed of the micro primary particles exhibits, in XRD analysis, a (101) diffraction peak intensity that is higher than a (100) diffraction peak intensity.

8. The positive electrode active material for a secondary battery according to one of claims 1 to 7,
wherein the primary particles include orientation-type particles having a rod shape with a minor axis and a major axis;
wherein the orientation-type particles include an a-axis and a c-axis (the length in the a-axis direction being greater than the length in the c-axis direction);
wherein the c-axis corresponds to the [001] direction in an SAED pattern obtained by observing the orientation-type particles via a transmission electron microscope; and
wherein the a-axis is perpendicular to the c-axis and is arranged parallel to the major axis of the orientation-type particle.

9. The positive electrode active material for a secondary battery according to one of claims 1 to 8,
wherein the secondary particle has an average diameter of about 2 µm to about 20 µm.

10. A method for producing the positive electrode active material for a secondary battery according to any one of claims 1 to 9, the method comprising:
preparing a nickel compound including nickel (Ni), a cobalt compound including cobalt (Co), and a manganese compound including manganese (Mn), and mixing these compounds so that the molar ratio of nickel, cobalt, and manganese is x : y : (1 - x - y); and
performing a co-precipitation reaction in the presence of a first dopant, wherein the first dopant is at least one selected from the group consisting of Sb, Mo, W, Nb, Te, Ta, Zr, Ti, Sn, Y, In, Sr, Ba, Mg, Ca, B, V, Cr, Al, and Fe, and
wherein an average concentration of the first dopant is from about 0.01 mol% to about 5 mol% based on the total moles of nickel, cobalt, and manganese.

11. The method for producing the positive electrode active material for a secondary battery according to claim 10,
wherein the co-precipitation process comprises:
(a) introducing at least two or more types of a first dopant simultaneously to perform co-precipitation, thereby uniformly impregnating the precursor from the core to the surface (wet co-doping); or
(b) during precursor synthesis, preventing the first dopant from being doped into the interior of the particle while impregnating the first dopant only within a region up to 2 µm from the surface shell (wet shell doping); or
(c) immediately after precursor formation, forming a coating layer of the first dopant only on the surface (hetero-element coating co-precipitation),
wherein the positive electrode active material for the secondary battery is manufactured using any one of the above methods.

12. The method for producing the positive electrode active material for a secondary battery according to claim 10 or 11,
wherein the co-precipitation reaction includes a seed co-precipitation reaction,
wherein the seed co-precipitation reaction comprises using at least one seed precursor selected from a composite metal hydroxide fine particle, a metal oxide, or a metal sulfide,
each having an average diameter of about 0.5 µm to about 3.5 µm, and inducing an additional co-precipitation reaction on a surface of the seed precursor to promote secondary particle growth and formation of orientation-type particles.

13. The method for producing the positive electrode active material for a secondary battery according to one of claims 10 to 12,
wherein the co-precipitation reaction is carried out by using one or more heterogeneous element compound seeds selected from the group consisting of a composite metal hydroxide, a metal oxide, or a metal sulfide, each having an average particle diameter of 1 µm or less, subjecting commercially available heterogeneous element compound seeds to ultrasonic treatment in advance so as to obtain heterogeneous element compound seeds having a D50 size of 1 µm or less, adding the resulting heterogeneous element compound seeds into a reactor containing distilled water and stirring for a predetermined time, and thereafter continuously supplying a transition metal solution, an ammonia solution, and a caustic soda solution for the co-precipitation reaction into the reactor so as to newly form composite metal hydroxide precursor particles on surfaces of the heterogeneous element compound seed particles.

14. A method for producing the positive electrode active material for a secondary battery
according to one of claims 10 to 13, the method comprising:
preparing a nickel compound including nickel (Ni), a cobalt compound including cobalt (Co), and a manganese compound including manganese (Mn), and mixing these compounds so that the molar ratio of nickel, cobalt, and manganese is x : y : (1 - x - y); and
performing a co-precipitation reaction in the presence of a first dopant,
wherein the co-precipitation reaction in the reactor includes a solid-liquid synthesis step in which a solution remaining inside the reactor is removed to the outside of the reactor, and wherein orientation-type particles composed of micro primary particles are formed at a precursor concentration of at least about 0.2 kg of precursor per liter of solution.

15. The method for producing the positive electrode active material for a secondary battery according to one of claims 10 to 14,
wherein at least a portion of the composite metal hydroxide precursor has a concentration gradient.
